# EUROPÄISCHE PATENTSCHRIFT

(11) **EP 1 564 447 B1**
(45) Veröffentlichungstag und Bekanntmachung des Hinweises auf die Patenterteilung: **07.11.2012**
(21) Anmeldenummer: 05001305.1
(22) Anmeldetag: 22.01.2005
(51) Int. Cl.: F16H 63/26, F16H 61/28, F16H 63/18

(54) **Betätigungseinrichtung für ein Getriebe**
Actuating device for a transmission
Dispositif d'actionnement pour une transmission

(30) Priorität: 13.02.2004 DE 102004007102
(43) Veröffentlichungstag der Anmeldung: 17.08.2005
(73) Patentinhaber: Schaeffler Technologies AG & Co. KG, 91074 Herzogenaurach (DE)
(72) Erfinder: Ehrlich, Matthias, 77815 Bühl (DE); Esly, Norbert, 77815 Bühl (DE)

(56) Entgegenhaltungen:
- EP-A- 1 308 651
- DE-A1- 10 206 561
- DE-A1- 10 231 547

## Beschreibung

Die Erfindung betrifft eine Betätigungseinrichtung für ein Getriebe, eine Getriebeeinrichtung sowie einen Kraftfahrzeug-Antriebsstrang mit einer solchen Betätigungseinrichtung.

Aus der DE 102 06 536 A1 (Fig. 2 der DE 102 06 536 A1) der Anmelderin ist eine Kraftfahrzeug-Getriebeeinrichtung mit einem Getriebe und einer Betätigungseinrichtung zum Betätigen dieses Getriebes bekannt. Die Betätigungseinrichtung weist eine Schaltwelle auf, von der radial zwei Schaltfinger und zwei axial zu diesen Schaltfingern jeweils versetzte Doppeldocken abstehen. Die Schaltfinger und die Doppelnocken sind jeweils mit der Schaltwelle fest verbunden sind. Das Getriebe ist als Doppelkupplungsgetriebe gestaltetet und weist zwei Teilgetriebe auf, die jeweils mit mehrere Schaltmechanismen (Endausgangsmechanismen) versehen sind. Die Schaltmechanismen des Getriebes weisen jeweils eine Schaltgabel auf. Die Schaltgabeln weisen jeweils ein Schaltmaul auf, das einen ersten, mit einer ersten Kontur versehenen Bereich und einen zweiten mit einer zweiten Kontur versehenen Bereich aufweist.

Zum Einlegen eines Ganges in Getriebe wird der Schaltfinger durch axiales Verschieben der Schaltwelle in das Schaltmaul des Schaltmechanismus bewegt, der dem Zielgang zugeordnet ist. Durch anschließendes Verschwenken der Schaltwelle greift der Schaltfinger in den ersten Bereich dieses Schaltmauls ein und verschiebt die Schaltgabel so, dass der Zielgang eingelegt wird. Der bei der Schwenkbewegung mitverschwenkte Doppeldocken greift in den zweiten Bereich eines anderen Schaltmauls des gleichen Teilgetriebes ein und bewirkt im Zusammenwirken mit dessen Kontur, dass die anderen Gänge des gleichen Teilgetriebes ausgelegt werden bevor der Zielgang mittels des Schaltfingers eingelegt ist. Bei der aus Fig. 2 der DE 102 06 536 A1 bekannten Gestaltung besteht die nicht unerhebliche Gefahr, dass die Doppelnocken in den Schaltmäulern verklemmen, was bei der dortigen Gestaltung zu einem Versagen der Funktionsweise führen kann.

Die DE 102 31 547 A1 zeigt eine Schaltvorrichtung für ein mehrstufiges Getriebe, wobei das Getriebe zwei Wellen und mehrere Zahnradsätze zur Erzielung unterschiedlicher Gangstufen und mehrere Schaltmechanismen, die jeweils zum Erzeugen bzw. Lösen einer drehfesten Welle-Zahnradverbindung betätigt werden können, aufweist Die gattungsgemäβe Betätigungseinrichtung weist dabei zusätzlich mehrere Schaltmittel auf, die in Schaltmechanismen des Getriebes eingreifen, wobei ein Schaltelement zum Einlegen von Gängen und ein anderes Schaltelement zum Auslegen von Gängen bewegbar ist Dabei wirken eine Hauptbetätigungseinrichtung und eine Nebenbetätigungseinrichtung zum Erzeugen von gesteuerten Relativbewegungen von zwei Schaltelementen zusammen.

Der Erfindung liegt die Aufgabe zugrunde, eine betriebssichere Getriebeeinrichtung mit einer Betätigungseinrichtung zu schaffen sowie eine betriebssichere Betätigungseinrichtung für ein Getriebe, wie Kraftfahrzeuggetriebe, zu schaffen.

Erfindungsgemäß wird eine Betätigungseinrichtung gemäß Anspruch 1 vorgeschlagen sowie eine Getriebeeinrichtung gemäß Anspruch 15 . Ein erfindungsgemäßer Kraftfahrzeug-Antriebsstrang ist Gegenstand des Anspruchs 28. Ein erfindungsgemäßes Verfahren ist Gegenstand des Anspruch 24. Bevorzugte Gestaltungen sind Gegenstand der Unteransprüche.

Die mehrere voneinander verschiedenen Ausgangselemente greifen insbesondere zum betätigenden Eingriff in Schaltmechanismen direkt in diese Schaltmechanismen, insbesondere Schaltgabel oder Schaltschiene der Schaltmechanismen, ein.

In bevorzugter Gestaltung ist das Hauptbetätigungselement ein Ausgangselement der Betätigungseinrichtung, so dass dieses direkt, und vorzugsweise wahlweise, in Schaltmechanismen betätigend eingreifen kann. Es kann aber auch vorgesehen sein, dass das Hauptbetätigungselement kein Ausgangselement ist, wobei dann insbesondere vorgesehen ist, dass es bewegt werden kann, um - insbesondere über die Nebenbetätigungseinrichtung - Bewegungen eines jeweiligen Ausgangselements zu bewirken.

Vorzugsweise ist für jedem Schaltmechanismus des Getriebes ein separates Ausgangselement, insbesondere jeweils Nebenbetätigungselement, vorgesehen, welches vorzugsweise in permanentem Eingriff mit diesem jeweiligen Schaltmechanismus, bzw. Schaltschiene oder Schaltgabel des Schaltmechanismus, steht. In vorteilhafter Gestaltung bildet jedes Nebenbetätigungselement jeweils ein separates Ausgangselement der Betätigungseinrichtung. Die Ausgangselemente bilden bevorzugt die Schnittstellen der Betätigungseinrichtung zum Getriebe.

Das bzw. die Nebenbetätigungselemente können in vorteilhafter Gestaltung zum Auslegen von Gängen des Getriebes bzw. Teilgetriebes bewegt werden.

In vorteilhafter Gestaltung wirken die Hauptbetätigungseinrichtung und die Nebenbetätigungseinrichtung zum Erzeugen von gesteuerten Relativbewegungen der Ausgangselemente so zusammen, dass zumindest ein Ausgangselement, das zum Auslegen eines Ganges bewegt werden kann, zum Auslegen des Ganges in seinem Eingriffsabschnitt für das Eingreifen in einen Schaltmechanismus schneller bewegt wird als ein - insbesondere jeweils anderes - Ausgangselement, das zum Auslegen eines Ganges bewegt wird, in seinem Eingriffsabschnitt für das Eingreifen in einen - insbesondere jeweils anderen - Schaltmechanismus bewegt wird.

Bevorzugt ist ferner, dass die Hauptbetätigungseinrichtung und die Nebenbetätigungseinrichtung zum Erzeugen von gesteuerten Relativbewegungen der Ausgangselemente so zusammenwirken, dass zeitgleich verschiedene Ausgangselemente - insbesondere zum Betätigen verschiedener Schaltmechanismen eines Getriebes oder eines gleichen Teilgetriebes - relativ zueinander bewegt werden können bzw. bewegt werden.

Besonders bevorzugt wirken die Hauptbetätigungseinrichtung und die Nebenbetätigungseinrichtung zum Erzeugen von gesteuerten Relativbewegungen der Ausgangselemente so zusammen, dass die Hauptbetätigungseinrichtung ein Ausgangselement, das gegebenenfalls Bestandteil der Hauptbetätigungseinrichtung und/oder des Hauptbetätigungselements ist, direkt bewegt bzw. bewegen kann, und wenigstens ein anderes Ausgangselement über die Nebenbetätigungseinrichtung bewegen kann bzw. bewegt. In besonders vorteilhafter Gestaltung wirken die relativbewegten Ausgangselemente dabei mit unterschiedlichen Schaltmechanismen des Getriebes zusammen.

Die Hauptbetätigungseinrichtung weist in vorteilhafter Gestaltung ein Schaltelement auf, an welchem ein Hauptbetätigungselement ausgebildet wird, und an welchem wenigstens eine Oberflächenprofilierung für das Zusammenwirken mit wenigstens einer Oberflächenprofilierung der Nebenbetätigungseinrichtung ausgebildet wird. Es kann vorgesehen sein, dass die Hauptbetätigungseinrichtung ein solches Schaltelement ist, das bevorzugt einstückig ist. Es kann auch vorgesehen sein, dass ein solches Schaltelement von einer Schaltwelle getragen wird, und einstückig mit dieser ausgebildet ist. Ferner kann vorgesehen sein, dass ein solches Schaltelement separat von einer solchen Schaltwelle gefertigt ist, und im Wesentlichen fest, insbesondere drehfest und axialfest, mit dieser verbunden ist. Bei einer derartigen Ausführung können die Oberflächenabschnitte des Haupt- und Nebenelements so zusammenwirken, dass eine gesteuerte Relativbewegung unabhängig von der Drehrichtung des Hauptbetätigungselements immer dann erreicht wird, wen sich das Nebenbetätigungselement in einer Endlagenstellung, beispielsweise bei einem der beiden von einer Schaltschiene einlegbaren Gänge eingelegten Gang, befindet.

In bevorzugter Gestaltung ist das Hauptbetätigungselement fingerartig gestaltet bzw. ein Schaltfinger. Ein solcher Schaltfinger weist in bevorzugter Gestaltung eine Evolventenform auf. Es kann vorgesehen sein, dass ein solcher Schaltfinger für den Eingriff in Schaltmäuler von Schaltmechanismen eines Getriebes bestimmt ist, um diese Schaltmäuler bzw. Schaltmechanismen zum Schalten von Gängen zu belasten; die Schaltmäuler können dabei insbesondere an bzw. in Schaltschienen oder Schaltgabeln gegeben sein. Es kann aber auch vorgesehen sein, dass ein solcher Schaltfinger auf die Nebenbetätigungseinrichtung einwirken kann, und hierdurch bewirkt, dass ein Nebenbetätigungselement der Nebenbetätigungseinrichtung hierdurch bewirken kann, dass ein Schaltmechanismus eines Getriebes in eine Gangstellung bewegt wird. Vorteilhafterweise ist vorgesehen, dass der Schaltfinger im Wesentlichen nur das Schalten in Gänge des Getriebes bewirkt, und nicht das Auslegen von Gängen. Es kann aber vorgesehen sein, dass der Schaltfinger beim Einlegen eines einer Schaltgasse zugeordneten Ganges automatisch einen anderen der gleichen Schaltgasse zugeordneten Gang auslegt.

Das Hauptbetätigungselement bzw. der Schaltfinger kann vorteilhafter Weise entsprechend einer Schaltgassen-Wählgassen-Anordnung bzw. eines entsprechenden Schaltbildes des Getriebes und/oder Teilgetriebes bewegt werden. Dabei ist insbesondere vorgesehen, dass der Schaltfinger bzw. das Hauptbetätigungselement zum Wählen bzw. in Wählgassenrichtung bzw. in einer Wählgasse bewegt werden kann, und zwar bevorzugt auch dann, wenn ein Gang des Getriebes und/oder Teilgetriebes und/oder jeweils ein Gang in allen Teilgetrieben eingelegt ist. In Bezug auf Getriebe, die parallelen Antriebsstrangabschnitten eines Antriebsstrangs eines Kraftfahrzeuges angeordnet sind, kann dies insbesondere so sein, dass der Schaltfinger in Bezug auf eins dieser Teilgetriebe in Wählrichtung bewegt werden kann, wenn in diesem Teilgetriebe ein Gang eingelegt ist. In Bezug auf Getriebe, die nicht derartige parallele Antriebsstrangzweige aufweisen, wie beispielsweise automatisiertes Schaltgetriebe oder Handschaltgetriebe, und bei denen nur ein Gang des Getriebes gleichzeitig eingelegt sein darf, ist insbesondere vorgesehen, dass der Schaltfinger bzw. das Hauptbetätigungselement in Wählrichtung bewegt werden kann, wenn ein Gang des Getriebes eingelegt ist. Insbesondere ist auch vorgesehen, dass das Hauptbetätigungselement bzw. der Schaltfinger in Schaltrichtung bewegt werden kann, ohne dass ein eingelegter Gang des Getriebes oder Teilgetriebes, dem eine entsprechende Schaltgasse, in der sich der Schaltfinger befindet zugeordnet ist, dabei ausgelegt wird. Dies kann insbesondere so sein, dass das Hauptbetätigungselement bzw. der Schaltfinger in Schaltrichtung bzw. in einer Schaltgasse so bewegt werden kann, dass ein Gang des Getriebes eingelegt wird, und anschließend - insbesondere in dieser Schaltgasse - in seine Neutral-Stellung bewegt werden kann, ohne dass dabei der zuvor geschaltete Gang des Getriebes ausgelegt wird. Es kann auch vorgesehen sein, dass das Schaltelement bzw. das Hauptbetätigungselement nach diesem Zurückschalten in Neutral-Stellung bzw. seinen Neutral-Bereich in Wählrichtung bewegt werden kann, ohne dass der zuvor eingelegte Gang dabei ausgelegt wird. Die wenigstens eine Oberflächenprofilierung der Hauptbetätigungseinrichtung bzw. des Schaltelements, die für das Zusammenwirken mit Oberflächenprofilierungen der Nebenbetätigungseinrichtung bestimmt ist, ist vorteilhafter Weise symmetrisch gestaltet.

In diesem Zusammenhang sei angemerkt, dass die Hauptbetätigungseinrichtung bzw. das Schaltelement vorteilhafter Weise mehrere Oberflächenprofilierungen für das Zusammenwirken mit der Nebenbetätigungseinrichtung aufweist. Diese sind in besonders vorteilhafter Gestaltung jeweils identisch gestaltet; sie können beispielsweise an verschiedenen Elementen, wie Auslegehebeln, der Nebenbetätigungseinrichtung angeordnet sein. Zur Vereinfachung wird im Folgenden allerdings jeweils von der Oberflächenprofilierung gesprochen. Wie angesprochen, kann die Hauptbetätigungseinrichtung ein Schaltelement aufweisen bzw. ein Schaltelement sein. In diesem Zusammenhang sei angemerkt, dass die Hauptbetätigungseinrichtung aber auch anders gestaltet sein kann. Zur Vereinfachung wird im folgenden allerdings von "Schaltelement" gesprochen.

Mehrere Oberflächenprofilierungen des Schaltelements, die für das Zusammenwirken mit Oberflächenprofilierungen der Auslegeelemente, insbesondere Auslegehebel, vorgesehen sind, sind vorzugsweise jeweils formidentisch sind. Die Oberflächenprofilierungen verschiedener Auslegeelemente bzw. -hebel, die für das Zusammenwirken mit Oberflächenprofilierungen des Schaltelements vorgesehen sind, sind bevorzugt jeweils formidentisch.

Die Oberflächenprofilierung der Hauptbetätigungseinrichtung sowie das Hauptbetätigungselement bzw. der Schaltfinger sind in vorteilhafter Gestaltung so angeordnet, dass sie verschwenkt werden können, und entlang der Schwenkachse bewegt werden können. Dies ist vorzugsweise so, dass das Schaltelement schwenkbar und axial beweglich angeordnet ist, und ein oder mehrere Oberflächenabschnitte, die sich zumindest teilweise an der Außenoberfläche des Schaltelements um die Schwenkachse erstrecken, als Oberflächenprofilierung ausgebildet ist. Der Schaltfinger kann beispielsweise so angeordnet sein, dass er an dem Schaltelement nach außen wegragt. Wenn ein solches Schaltelement geschwenkt wird, wird damit der Schaltfinger bzw. die Oberflächenprofilierung mitgeschwenkt. Entsprechendes gilt für eine Axialverschiebung des Schaltelements. Das Schaltelement kann beispielsweise - von einer schwenk- bzw. drehbar gelagerten Welle getragen werden, die auch axial beweglich ist. Um diese axiale Bewegung der Schaltwelle und diese Schwenkbewegung der Schaltwelle zu bewirken, können beispielsweise Elektromotoren vorgesehen sein.

Die Nebenbetätigungseinrichtung weist in vorteilhafter Gestaltung mehrere relativbeweglich zueinander angeordnete Auslegeelemente, wie jeweils schwenkbar gelagerte Auslegehebel, auf, oder wird von solchen Auslegeelementen gebildet. Es kann auch vorgesehen sein, dass die Nebenbetätigungseinrichtung ferner eine oder mehrere Wellen aufweist, welche solche Auslegeelemente tragen. In bevorzugter Gestaltung wird an jedem Auslegeelement ein Nebenbetätigungselement gebildet. Die Nebenbetätigungselemente können beispielsweise fingerartig gestaltet sein, also insbesondere als Auslegefinger für den jeweiligen Eingriff in einen Schaltmechanismus des Getriebes gestaltet sein. Es kann insbesondere vorgesehen sein, dass diese Auslegefinger dazu bestimmt sind, in ein Maul, wie Schaltmaul bzw. Auslegemaul, eines Endausgangsmechanismus bzw. Schaltmechanismus eines Getriebes einzugreifen. Solche Mäuler können insbesondere an Schaltschienen bzw. Schaltgabeln der Schaltmechanismen bzw. Endbetätigungsmechanismen des Getriebes angeordnet sein. Die Mäuler sind insbesondere Ausschnitte.

Der Auslegefinger ist ein Nebenbetätigungselement. Es sei allerdings angemerkt, dass das Nebenbetätigungselement auch anders, also nicht als Finger, gestaltet sein kann. Beispielsweise kann das Nebenbetätigungselement ein Maul bzw. einen Ausschnitt ausbilden, die mit einem jeweiligen an den Schaltmechanismen bzw. Schaltschienen bzw. Schaltgabeln angeordneten Finger zusammenwirken kann, was quasi die Umkehrung der vorgenannten Gestaltung darstellt.

In bevorzugter Gestaltung sind die Auslegeelemente jeweils im Wesentlichen identisch geformt, und zwar zumindest hinsichtlich ihrer Oberflächenprofilierung und ihres Nebenbetätigungselements bzw. Auslegefingers. Die Auslegeelemente bilden in vorteilhafter Gestaltung jeweils eine Oberflächenprofilierung für das Zusammenwirken mit einer Oberflächenprofilierung der Hauptbetätigungseinrichtung bzw. des Schaltelements aus. Die Auslegeelemente sind besonders bevorzugt einstückig mit ihrer Oberflächenprofilierung und dem Auslegefinger ausgebildet. Die Schwenkbarkeit der Auslegeelemente ist vorteilhafter Weise so gegeben, dass bei einem solchen Schwenken der Auslegefinger und die Profilierung verschwenkt wird. In besonders vorteilhafter Gestaltung sind die Auslegeelemente, insbesondere Auslegehebel, bzw. Auslegefinger, bzw. Oberflächenprofilierungen der Nebenbetätigungseinrichtung bzw. Nebenbetätigungselemente schwenkbar, und hinsichtlich ihrer Schwenkachse im Wesentlichen axial fest angeordnet. Vorteilhaft ist, wenn mehrere Auslegehebel von einer gemeinsamen Welle getragen werden, um deren Längsachse sie schwenkbar angeordnet sind. Besonders vorteilhaft ist dabei, wenn diese Auslegehebel bezüglich dieser Längsachse auch relativ zueinander verschwenkbar angeordnet sind. Dies kann beispielsweise so sein, dass die Welle, die die Auslegehebel trägt, drehfest gelagert sind, und die Auslegehebel dieser Welle jeweils drehbeweglich angeordnet sind.

Besonders vorteilhaft ist, wenn die Schwenkachsen schwenkbar gelagerter Auslegehebel beabstandet - und gegebenenfalls parallel - zu der Schwenkachse eines schwenkbar gelagerten Schaltelements angeordnet ist. Die Schwenkachsen der Auslegehebel können jeweils parallel - und gegebenenfalls konzentrisch zueinander angeordnet sein. Die Auslegefinger der Auslegehebel bilden in bevorzugter Gestaltung Radiuskontaktflächen für den betätigenden Kontakt mit einem Maul bzw. Ausschnitt eines jeweiligen Schaltmechanismus aus. Besonders bevorzugt ist vorgesehen, dass solche Schaltmäuler oder Auslegemäuler als Vertiefung ausgebildet sind, die in ihrer Betätigungsrichtung von geraden bzw. ebenen Flanken begrenzt werden. Die Radiuskontaktflächen treten besonders bevorzugt dabei so mit diesen ebenen Flächen bzw. geraden Abschnitten in Wirkverbindung, dass über die ebenen Flächen und die Radiuskontaktflächen der jeweilige Schaltmechanismus mittels des Auslegehebels in eine Neutral-Stellung bewegt werden kann, wobei der betätigende Kontakt zwischen dem Auslegehebel und dem Maul, wie Auslegemaul bzw. dem Ausschnitt im Wesentlichen nur über die Radiuskontaktflächen und die ebenen Flächen erfolgt. In besonders vorteilhafter Gestaltung sind diese ebenen Flanken jeweils senkrecht zur Bewegungsrichtung der Schaltschiene oder Schaltgabeln gelegen. Bevorzugt ist vorgesehen, dass jeder der Auslegehebel, insbesondere über den jeweiligen Auslegefinger, permanent mit einem Schaltmechanismus des Getriebes, bzw. einer Schaltgabel oder Schaltschiene in Eingriff steht. Es ist also vorzugsweise vorgesehen, dass die Anzahl der Auslegehebel der Anzahl der Schaltmechanismen bzw. Schaltgabeln bzw. Schaltschienen entspricht. In besonders bevorzugter Gestaltung ist genau ein Schaltelement vorgesehen, das mit jedem der Auslegeelemente bzw. Auslegehebel in Wirkverbindung treten kann, und zwar insbesondere, um das Auslegen von Gängen zu bewirken.

Die Oberflächenprofilierung des Schaltelements axial versetzt zum Schaltfinger dieses Schaltelements angeordnet.

Besonders bevorzugt ist vorgesehen, sich des Schaltfingers in beiden Orientierungen der Axialrichtungen des Schaltelements, also insbesondere der Schwenkachse des Schaltelements, jeweils wenigstens eine Oberflächenprofilierung für das Zusammenwirken mit Oberflächenprofilierungen der Auslegeelemente vorgesehen sind. Es kann vorgesehen sein, dass in dem, insbesondere nur in dem, Axialbereich des Schaltelements, in dem der Schaltfinger angeordnet ist, ein Freiraum gebildet wird, in dem keine Oberflächenprofilierungen des Schaltelements für den betätigenden Eingriff in Oberflächenprofilierungen der Auslegeelemente bzw. Auslegehebel vorgesehen sind. Dabei kann beispielsweise vorgesehen sein, dass dieser Freiraum in axialer Richtung des Schaltelements beidseits von Bereichen flankiert wird, an denen jeweils wenigstens eine Oberflächenprofilierung zum Zusammenwirken mit Oberflächenprofilierungen der Auslegeelemente, vorgesehen sind. Vorteilhaft ist der Freiraum so gestaltet, dass ein schwenkbar gelagerter Auslegehebel in diesen Freiraum schwenken kann. Ein solcher Auslegehebel, der in diesen Freiraum schwenkt, ist vorzugsweise ein solcher, der mit seinem Auslegefinger - aktuell - in den jeweils gleichen Schaltmechanismus des Getriebes eingreift wie der Schaltfinger. Es kann vorgesehen sein, dass dann, wenn der Schaltfinger zum Bewirken einer Gangstellung des Getriebes verschwenkt wird, über den betreffenden Schaltmechanismus, dem dieser Gang zugeordnet ist, der betreffende Auslegefinger mitgenommen wird, wobei hierdurch bewirkt wird, dass der diesem Auslegefinger zugeordnete Auslegehebel in den Freiraum des Schaltelements schwenkt. Besonders bevorzugt ist vorgesehen, dass bei einer solchen Bewegung die axial versetzt angeordneten Oberflächenprofilierungen des Schaltelements in Oberflächenprofilierungen anderer Auslegehebel derart zusammenwirken, dass diese anderen Auslegehebel so positioniert sind, dass die zugeordneten Schaltmechanismen bewirken, dass die diesen Schaltmechanismen zugeordneten Gänge des Getriebes ausgelegt sind bzw. werden. Dies kann so sein, dass dies für sämtliche Auslegehebel bzw. Schaltmechanismen bzw. Gänge des Getriebes, die nicht der Schaltgasse zugeordnet sind, in der der Schaltfinger sich befindet, gilt, oder so, dass es nur für die des gleichen Teilgetriebes gilt, die nicht der genannten Schaltgasse zugeordnet sind.

Bevorzugt ist das Zusammenwirken der Oberflächenprofilierungen so, dass bei vorbestimmten Schwenkbewegungen des Schaltelements zum Einlegen eines Gangs im Getriebe, die Oberflächenprofilierung des Schaltelements so mit geschwenkt wird, dass sie in Oberflächenprofilierungen von den Auslegehebeln, die dem gleichen Getriebe bzw. Teilgetriebe und Schaltgassen, die von der des Zielgangs verschieden sind, so eingreift, dass diese schwenkend mitgenommen werden, sofern sie nicht in einer Stellung sind, die einer Auslegestellung entspricht. Durch diese Mitnahme werden die Auslegehebel in ihre Auslegestellung bewegt, so dass alle Auslegehebel in einer Auslegestellung sind bevor der Zielgang eingelegt sind. In der Auslegestellung werden die Auslegehebel vorzugsweise mittels der zusammenwirkenden Oberflächenprofilierungen gehalten. Die Oberflächenprofilierungen wirken bevorzugt nach Art einer Zwangsführung zusammen. Bei der Bewegung des Schaltfingers zum Einlegen eines Gangs nimmt die Oberflächenprofilierung des Schaltelements bevorzugt die in anderen Schaltgassen des gleichen Getriebes bzw. Teilgetriebes wirkenden Auslegehebel über deren Oberflächenprofilierung mit, um diese in eine Auslege- bzw. Sperrstellung zu bewegen, sofern sie nicht bereits in einer solchen positioniert sind.

Bevorzugt weisen die Oberflächenprofilierungen des Schaltelements und die Oberflächenprofilierungen der Auslegehebel jeweils Auslegeflanken auf, wobei Auslegeflanken des Schaltelements mit Auslegeflanken eines oder mehrerer Auslegehebel zusammenwirken können, um zu erreichen, dass die den betreffenden Auslegehebeln zugeordneten Schaltmechanismen des Getriebes so bewegt werden, dass die diesen Schaltmechanismen zugeordneten Gänge ausgelegt sind. Ferner weisen die Oberflächenprofilierungen des Schaltelements in bevorzugter Gestaltung Sperrbereiche auf. Diese können beispielsweise von zylindrischen Flächen bzw. zylindersegmentartigen Flächen gebildet werden. Dabei weisen die Oberflächenprofilierungen der Auslegehebel bevorzugt Sperrflanken auf, wobei die Bereiche des Schaltelements mit Sperrflanken eines oder mehrerer Auslegehebel so zusammenwirken können, dass der betreffende Auslegehebel an einer Bewegung gehindert wird. Dies kann insbesondere so sein, dass der betreffende Auslegehebel an einer Schwenkbewegung gehindert wird. Diese Sperrstellung ist vorzugsweise so, dass der Auslegehebel in seiner Sperrstellung den zugeordneten Schaltmechanismus des Getriebes in einer Stellung hält, in der die diesem Schaltmechanismus zugeordneten Gänge des Getriebes ausgelegt sind.

In besonders vorteilhafter Gestaltung ist vorgesehen, dass das Schaltelement in einer Stellung, in der über das Zusammenwirken der Oberflächenprofilierungen ein Auslegehebel in einer Sperrstellung ist, geschwenkt werden kann, ohne dass die Sperrstellung des betreffenden Auslegehebels aufgehoben wird. Die Auslegehebel und das Schaltelement sind vorzugsweise so gestaltet und angeordnet, dass das Schaltelement in einer vorbestimmten Stellung oder in einem vorbestimmten Stellungsbereich, einer Neutral-Stellung oder einem Neutral-Stellungsbereich, axial bewegt werden kann, ohne durch die Auslegehebel an dieser Bewegung gehindert zu werden, und zwar unabhängig von der aktuellen Stellung der Auslegehebel.

In bevorzugter Gestaltung weist die Betätigungseinrichtung n Auslegeelemente, wie Auslegehebel, auf, die jeweils mit einer Oberflächenprofilierung für das Zusammenwirken mit einer Oberflächenprofilierung des Schaltelements versehen sind, sowie mit einem Auslegefinger oder dergleichen. Bei dieser vorteilhaften Gestaltung ist vorgesehen, dass während einer Bewegung des Schaltelements bzw. des Schaltfingers von einer Neutral-Stellung in eine Gangstellung die wenigstens eine Oberflächenprofilierung des Schaltelements mit den Oberflächenprofilierungen von (n-1) Auslegehebeln zum Auslegen und/oder Sperren von den diesen (n-1)-Auslegehebeln zugeordneten Gängen des Getriebes zusammenwirkt. Dabei ist n eine natürliche Zahl, die größer als 1 ist. n kann beispielsweise 2 oder 3 oder 4 oder 5 sein. Diese Gestaltung ist besonders bevorzugt bei solchen Getrieben bzw. Getriebeeinrichtungen, bei denen nur ein Gang des Getriebes gleichzeitig geschaltet sein darf. Dies kann beispielsweise bei einem Handschaltgetriebe oder einem automatisierten Schaltgetriebe (ASG) gegeben sein.

Das Zusammenwirken der Profilierungen zum Auslegen und/oder Sperren von Gängen erfolgt vorzugsweise während einer Bewegung des Schaltelements bzw. des Schaltfingers in Schaltrichtung bzw. in Schaltgassenrichtung. Dabei ist insbesondere vorgesehen, dass die Auslegebewegung der Einlegebewegung vorauseilt, so dass auf die Schaltmechanismen des Getriebes so eingewirkt wird, dass gesichert alle (anderen) Gänge des Getriebes ausgelegt sind, bevor der Zielgang eingelegt ist. Gemäß einer weiteren, besonders bevorzugten Gestaltung ist vorgesehen, dass die Betätigungseinrichtung n Auslegeelemente bzw. Auslegehebel für das Zusammenwirken mit n Schaltmechanismen eines ersten Teilgetriebes eines Parallelschaltgetriebes (PSG) oder Doppelkupplungsgetriebe (DKG) aufweist, sowie m, davon verschiedene Auslegeelemente bzw. Auslegehebel für das Zusammenwirken mit m Schaltmechanismen eines zweiten Teilgetriebes dieses Parallelschaltgetriebes bzw. Doppelkupplungsgetriebes. Sämtliche dieser Auslegehebel weisen dabei eine Oberflächenprofilierung für das Zusammenwirken mit einer oder mehreren Oberflächenprofilierungen des Schaltelements auf, sowie ein Nebenbetätigungselement bzw. Auslegefinger. Bei dieser Gestaltung ist vorgesehen, dass die wenigstens eine Oberflächenprofilierung des Schaltelements mit den Oberflächenprofilierungen von (n-1) der n Auslegehebel für das erste Teilgetriebe zum Auslegen und/oder Sperren von den diesen (n-1) Auslegehebeln zugeordneten Gängen des ersten Teilgetriebes zusammenwirkt, wenn das Schaltelement bzw. der Schaltfinger von einer Neutral-Stellung in eine Gangstellung zum Einlegen eines Ganges des ersten Teilgetriebes bewegt wird. Entsprechendes gilt gemäß dieser bevorzugten Gestaltung für das Zusammenwirken der Oberflächenprofilierungen des Schaltelements mit Oberflächenprofilierungen der Auslegehebel für das andere Teilgetriebe, wenn ein Schaltelement bzw. der Schaltfinger von einer Neutral-Stellung in eine Gangstellung zum Einlegen eines Ganges dieses zweiten Teilgetriebes bewegt wird; hier wirkt allerdings die wenigstens eine Profilierung des Schaltelements mit den Profilierungen von (m-1) der m Auslegehebel zusammen. Dabei sind n und m jeweils natürliche Zahlen, die größer als 1 sind. Beispielsweise können n und m 2 oder 3 oder 4 oder 5 sein, wobei vorgesehen sein kann, dass n und m identisch sind oder verschieden sind. Diese Ausführungsform ist besonders vorteilhaft bei Getrieben, bei denen mehrere Teilgetriebe existieren, die insbesondere in parallel geschalteten Antriebsstrangzweigen angeordnet sind, und bei denen in jedem der Teilgetriebe nur ein Gang gleichzeitig geschaltet sein darf. Auch bei dieser bevorzugten Gestaltung ist vorzugsweise vorgesehen, dass das Zusammenwirken der Oberflächenprofilierungen während einer Bewegung des Schaltelements bzw. Schaltfinger in Schaltrichtung bzw. Schaltgassenrichtung erfolgt. Diese Ausgestaltung ist besonders sinnvoll für Doppelkupplungsgetriebe oder Parallelschaltgetriebe.

Die Betätigungseinrichtung ist bei diesen vorgenannten Ausführungsformen insbesondere so gestaltet, dass mittels der Betätigungseinrichtung jeder Gang des Getriebes bzw. Teilgetriebes eingelegt werden kann, wobei auf die genannte Weise sichergestellt ist, dass die jeweils anderen Gänge des Getriebes bzw. Teilgetriebes ausgelegt sind, bevor der Zielgang eingelegt ist. Vorzugsweise ist vorgesehen, das bei einem Parallelschaltgetriebe eine Hauptbetätigungseinrichtung mit einem Hauptbetätigungselement zum Betätigen beider Teilgetriebe vorgesehen ist. Es kann beispielsweise vorgesehen sein, dass genau ein Schaltfinger vorgesehen ist, mit dem die Gänge beider Teilgetriebe eingelegt werden können.

In besonders bevorzugter Gestaltung weist die Betätigungseinrichtung mehrere Auslegeelemente bzw. Auslegehebel für ein erstes Teilgetriebe, und mehrere Auslegehebel bzw. Auslegeelemente für ein zweites Teilgetriebe auf, wobei zwischen den Auslegehebeln für das erste Teilgetriebe einerseits, und den Auslegeelementen für das zweite Teilgetriebe andererseits eine Trennwand vorgesehen ist. Diese Trennwand kann mit einem Durchbruch versehen sein, der so gestaltet ist, dass das Schaltelement in vorbestimmten Schwenkstellungen axial durch diesen Durchtreten kann, und in anderen Schwenkstellungen an einen Durchtreten gehindert wird.

Die vorbestimmten Schwenkbewegungen des Schaltfingers, bei denen eine Oberflächenprofilierung des Schaltelements mit der bzw. den Oberflächenprofilierungen eines oder mehrerer Auslegehebel zum Auslegen und/oder Sperren vorbestimmter Gänge des Getriebes in Wirkverbindung tritt, sind bevorzugt solche, durch welche mittels des Schaltfingers ein Gang des Getriebes eingelegt wird. Das Auslegen und/oder Sperren anderer Gänge, und zwar insbesondere solcher, die anderen Schaltgassen zugeordnet sind, wird vorzugsweise so bewirkt, dass vor dem Einlegen des einen Gangs mittels des Schaltfingers sichergestellt ist, dass diese anderen Gänge ausgelegt bzw. gesperrt sind. Dies erfolgt vorzugsweise so, dass sichergestellt ist, das nur genau ein Gang des Getriebes, bzw. im Falle von Getrieben, die in denen Teilgetriebe in parallelen verschiedenen Antriebsstrangzweigen angeordnet sind, wie Doppelkupplungsgetriebe oder Parallelschaltgetriebe, je nur genau ein des jeweiligen Teilgetriebes gleichzeitig eingelegt sein kann. In besonders bevorzugter Gestaltung erfolgt, dieses Auslegen bzw. Sperren von Gängen anderer Schaltgassen erst während der Bewegung des Schaltfingers in der Schalt- bzw. Ganggasse des Zielgangs.

Vorzugsweise sind die Oberflächenprofilierungen des Schaltelements und der Auslegehebel, die zusammenwirken können, frei von Hinterschneidungen.

Erfindungsgemäß wird ferner insbesondere eine Funktionseinheit zum Betätigen zweier Teilgetriebe vorgeschlagen, wobei das Schalten und Auslegen der Gänge von getrennt, jedoch zusammenwirkenden Bauteilen ausgeführt wird. Eine solche Gestaltung kann in bevorzugter Gestaltung so ausgebildet sein, wie es an anderer Stelle erläutert wird.

Erfindungsgemäß wird ferner insbesondere eine Getriebeeinrichtung gemäß Anspruch 15 vorgeschlagen.

Das Hauptbetätigungselement bzw. der Schaltfinger kann vorzugsweise bei im Getriebe eingelegtem Gang in Schaltrichtung bewegt werden, ohne dass dieser eingelegte Gang dabei zwangsläufig ausgelegt wird. Es kann insbesondere vorgesehen sein, dass das Hauptbetätigungselement bzw. der Schaltfinger von einer Gangstellung dieses Hauptbetätigungselements bzw. dieses Schaltfingers in eine Neutral-Stellung des Hauptbetätigungselements bewegt werden kann, ohne dass bei dieser Bewegung ein geschalteter Gang des Getriebes ausgelegt wird. Dabei kann vorgesehen sein, dass der Schaltfinger aus seiner Neutral-Stellung in eine Wählrichtung bewegt werden kann, um in eine Position verfahren zu werden, aus welcher er in eine andere Schaltgasse bewegt werden kann, um das Einlegen eines anderen Gangs im Betrieb auszulösen. Bevorzugt ist vorgesehen, dass während dieser Bewegung in der anderen Schaltgasse, und bevor der neue Zielgang eingelegt ist, durch das Zusammenwirken von Haupt- und. Nebenbetätigungseinrichtung auf den Schaltmechanismus eingewirkt wird, den der zuvor im gleichen Getriebe bzw. Teilgetriebe eingelegte Gang zugeordnet ist, und zwar derart, dass dieser Gang ausgelegt wird, bevor der neue Gang im gleichen Getriebe bzw. Teilgetriebe geschaltet ist. Auf diese Weise kann sichergestellt werden, dass alle Gänge des Getriebes bzw. des gleichen Teilgetriebes die, die Schaltgassen zugeordnet sind, die von der des Zielgangs verschieden sind, ausgelegt sind, bevor der Zielgang eingelegt ist.

Das Hauptbetätigungselement bzw. der Schaltfinger kann bevorzugt zum Schalten in einer Schaltrichtung und zum Wählen in einer Wählrichtung bewegt werden. In bevorzugter Gestaltung ist vorgesehen, dass in jedem der Schaltmechanismen jeweils wenigstens ein Ausschnitt bzw. Maul, wie Schaltmaul oder Auslegemaul, für das Zusammenwirken mit der Betätigungseinrichtung gebildet wird. In diese Mäuler bzw. Ausschnitte können Ausgangselemente der Betätigungseinrichtung eingreifen. Insbesondere kann vorgesehen sein, dass bei einer Bewegung eines betreffenden Ausgangselements durch den Eingriff in diese Mäuler bzw. Ausschnitte ein entsprechender Schaltmechanismus bewegt wird. Bevorzugt weisen die Schaltmechanismen jeweils eine Schaltschiene oder Schaltgabel auf, die Bestandteil des Schaltmechanismus und somit Bestandteil des Getriebes ist, wobei in diesen Schaltschienen bzw. -gabeln jeweils wenigstens ein Maul bzw. Ausschnitt für das Zusammenwirken mit der Betätigungseinrichtung ausgebildet ist. In einer bevorzugten Gestaltung steht jedes der Auslegeelemente bzw. der Auslegefinger der Betätigungseinrichtung in permanentem Eingriff mit einem Ausschnitt bzw. einem Maul, wie Auslegemaul, eines diesem Auslegeelement zugeordneten Schaltmechanismus. Dies kann so sein, dass in jeden Schaltmechanismus permanent jeweils ein Auslegeelement eingreift. Es kann auch vorgesehen sein, dass die Schaltmechanismen, und zwar insbesondere die Schaltgabeln oder Schaltschienen jeweils zwei Mäuler bzw. Ausschnitte aufweisen. Dabei kann vorgesehen sein, dass in ein erstes dieser Mäuler bzw. Ausschnitte jeweils permanent ein Auslegefinger der Betätigungseinrichtung eingreift, und in das zweite Maul bzw. Ausschnitt ein Schaltfinger eingreifen kann. Besonders bevorzugt ist dabei vorgesehen, dass der Schaltfinger so bewegt werden kann, dass er wahlweise mit unterschiedlichen Mäulern bzw. Mäuler in Eingriff gebracht werden kann, um über diese Mäuler bzw. Ausschnitte auf den jeweiligen Schaltmechanismus so einzuwirken, dass ein Gang des Getriebes eingelegt wird. Vorzugsweise entspricht eine Schwenkbewegung des Schaltelements bzw. Schaltfingers einer Bewegung in Schaltrichtung, und eine translatorische Bewegung des Schaltelements bzw. Schaltfingers einer Bewegung des Schaltfingers bzw. Hauptbetätigungselements in Wählrichtung. Diese translatorische Bewegung ist vorzugsweise in Richtung der Schwenkachse der Schwenkbewegung gerichtet.

In besonders bevorzugter Gestaltung kann durch Verschwenken des Schaltfingers das Schalten eines Ganges des Getriebes über einen Schaltmechanismus bewirkt werden, wobei bei dieser Schwenkbewegung wenigstens eine Auslegeflanke des Schaltelements wenigstens eine Auslegeflanke eines oder mehrerer Auslegehebel so belastet, dass dieser bzw. diese Auslegehebel verschwenkt werden, und dabei so auf ein oder mehrere Schaltmechanismen einwirken, dass sichergestellt wird, dass die diesem Schaltmechanismen zugeordneten Gänge ausgelegt sind, und zwar insbesondere bevor mittels des Schaltelements der neue Gang eingelegt ist. Diese Auslegehebel sind insbesondere alle Auslegehebel, die zur Betätigung des Getriebes bzw. des gleichen Teilgetriebes vorgesehen sind, außer einem, der vorzugsweise in der betreffenden Stellung auf Höhe des Schaltfingers angeordnet ist und besonders bevorzugt in den Freiraum des Schaltelements schwenkt.

Besonders bevorzugt ist vorgesehen, dass genau ein eingangsseitiges Bauteil der Betätigungseinrichtung, wie Schaltwelle oder Schaltelement, so belastet werden kann, dass es bewegt wird, wobei durch diese Bewegung bewirkt wird, dass verschiedene Ausgangselemente der Betätigungseinrichtung bewegt werden, und zwar insbesondere relativ zueinander. Es kann insbesondere vorgesehen sein, dass durch eine, insbesondere stetige, Bewegung - insbesondere Schwenkbewegung - der Schaltwelle und/oder des Schaltelements ein Ausgangselement der Betätigungseinrichtung, insbesondere Schaltfinger, bewegt wird, um auf einen Schaltmechanismus des Getriebes so einzuwirken, dass dort ein Gang eingelegt wird, und wobei durch diese Bewegung des Schaltelements und/oder der Schaltwelle ferner bewirkt wird, dass wenigstens ein weiteres Ausgangselement der Betätigungseinrichtung, das insbesondere ein Auslegefinger bzw. Auslegehebel sein kann, auf wenigstens einen anderen Schaltmechanismus der Betätigungseinrichtung so einwirkt, dass sichergestellt wird, dass die diesem bzw. diesen Schaltmechanismen zugeordneten Gänge ausgelegt werden bzw. ausgelegt sind, und zwar insbesondere bevor der eine Schaltmechanismus das Einlegen des Zielgangs bewirkt hat.

Die Getriebeeinrichtung bzw. das Getriebe ist vorzugsweise ein Parallelschaltgetriebe. Bevorzugt kann mittels der erfindungsgemäßen Getriebeeinrichtung bzw. der erfindungsgemäßen Betätigungseinrichtung sichergestellt werden, dass nur ein Gang eines Getriebes bzw. jeweiligen Teilgetriebes eines Parallelschaltgetriebes gleichzeitig eingelegt sein kann. Der eingelegte Gang kann dabei gewechselt werden, und zwar bevorzugt in beliebiger Reihenfolge. Es kann auch vorgesehen sein, das Gänge so gewechselt werden können, dass in einen beliebigen Gang des jeweils anderen Teilgetriebes geschaltet werden kann.

Die Schaltmechanismen können beispielsweise jeweils eine verschieblich angeordnete Kupplungsmuffe aufweisen, die zum Ein- und Auslegen von Gängen verschoben werden kann, und zwar insbesondere um ein Welle-Zahnrad-Verbindung zu erzeugen oder zu lösen. Es kann vorgesehen sein, das die Schaltmechanismen jeweils eine Kupplungsmuffe und eine Schaltschiene aufweisen oder hierdurch gebildet werden. Es kann auch vorgesehen sein, dass die Schaltmechanismen jeweils eine Kupplungsmuffe und eine Schaltgabel aufweisen oder hierdurch gebildet werden. Solche Schaltgabeln können beispielsweise längsverschieblich auf einer Welle gelagert sein. Die Schaltgabeln bzw. Schaltschienen sind bevorzugt jeweils mit einer Kupplungsmuffe direkt gekoppelt. In bevorzugter Gestaltung greifen die Schaltgabeln bzw. Schaltschienen in die Kupplungsmuffen so ein, dass sie die Kupplungsmuffen in deren Längsrichtung zum Ein- und Auslegen von Gängen verschieben können. Die Schaltgabeln bzw. Schaltschienen sind vorzugsweise längsverschieblich, besonders bevorzugt jeweils nur längsverschieblich, wobei vorgesehen sein kann, dass die Richtungen in den verschiedene dieser bewegt werden können parallel sind. Insbesondere die Schaltgabeln können aber auch - insbesondere alternativ schwenkbeweglich sein.

Es kann vorgesehen sein, dass über mehrere und/oder jeden der Schaltmechanismen genau zwei Gänge des Getriebes eingelegt werden können. Es kann aber auch vorgesehen sein, dass ein oder mehrere Schaltmechanismen vorgesehen sind, mittels welchem lediglich ein Gang eingelegt werden kann. Ferner kann vorgesehen sein, für jeden der Schaltmechanismen der bzw. die dem Schaltmechanismus zugeordneten Gänge ausgelegt werden können.

Vorzugsweise ist ein Zahnrad eines jeweiligen Zahnradsatzes drehbeweglich auf ein es tragenden Welle angeordnet, und kann mittels eines Schaltmechanismus zum Einlegen eines dem Zahnradsatz entsprechenden Gangs mit dieser Welle drehfest gekoppelt werden, was beispielsweise durch Verschieben einer Kupplungsmuffe erreicht werden kann. Die verbleibenden Zahnräder eines jeweiligen Zahnradsatzes sind vorzugsweise fest auf einer sie tragenden Welle angeordnet. Das Getriebe weist bevorzugt eine Eingangswelle und eine Ausgangswelle auf, wobei besonders bevorzugt die Eingangswelle ein Zahnrad eines jeden Zahnradsatzes trägt, und die Ausgangswelle ein Zahnrad eines jeden Zahnradsatzes trägt. Sofern das Getriebe mehrere parallel geschalte Antriebstrangzweige aufweist, bzw. Antriebsstrangzweige die wahlweise mit einer Brennkraftmaschine in Drehmomentverbindung gebracht werden können, und in diesen Antriebsstrangzweigen jeweils ein Teilgetriebe angeordnet ist, gilt das Vorgesagte bevorzugt für jeden dieser Antriebsstrangzweige bzw. Teilgetriebe. Dabei kann aber beispielsweise vorgesehen sein, dass die Eingangs- oder die Ausgangswellen beider Teilgetriebe identisch sind. In besonders zu bevorzugender Gestaltung sind die Ausgangswellen zweier solcher Teilgetriebe identisch, wobei die drehbeweglich angeordneten Zahnräder beider Teilgetriebe, die jeweils mit ihrer tragenden Welle drehfest verbunden werden können, von der Ausgangswelle getragen werden. Bevorzugt weisen Zahnradsätze für Vorwärtsgänge jeweils genau zwei ineinander greifende Zahnräder auf.

Erfindungsgemäß wird ferner eine Verwendung des erfindungsgemäßen Betätigungseinrichtung zum Betätigen eines Parallelschaltgetriebes vorgeschlagen. Ferner wird ein Kraftfahrzeug-Antriebsstrang gemäß Anspruch 24 vorgeschlagen.

Der Kraftfahrzeug-Antriebsstrang weist vorzugsweise ferner eine Kupplungseinrichtung, wie Anfahrkupplung, auf. Diese kann beispielsweise elektronisch gesteuert sein. Sofern das Getriebe bzw. die Getriebeeinrichtung ein Handschaltgetriebe oder ein automatisiertes Schaltgetriebe ist, ist vorzugsweise vorgesehen, dass genau eine Anfahrkupplung vorgesehen ist. Bei einem Parallelschaltgetriebe bzw. einem Doppelkupplungsgetriebe sind insbesondere zwei Anfahrkupplungen im Antriebsstrang vorgesehen. Die Anfahrkupplungen sind bevorzugt Reibungskupplungen.

In vorteilhafter Gestaltung wird die Anfahrkupplung bzw. die Anfahrkupplungen von einem elektronischen Steuergerät gesteuert bzw. betätigt. Bevorzugt ist ferner, dass die Getriebeeinrichtungen bzw. Betätigungsvorgänge des Getriebes von einem elektronischen Steuergerät gesteuert werden. Ferner ist bevorzugt, dass ein Motor-Steuergerät für die Brennkraftmaschine vorgesehen ist. Das Motor-Steuergerät und/oder das Kupplungs-Steuergerät und/oder das Getriebe-Steuergerät können in Datenverbindung stehen. Es kann insbesondere vorgesehen sein, dass Signale vom Motor-Steuergerät und/oder vom Getriebe-Steuergerät an das Kupplungs-Steuergerät übermittelt werden, und in Abhängigkeit dieser Signale Betätigungsvorgänge der Kupplung bewirkt werden. In entsprechender Weise kann die Getriebebetätigung in Abhängigkeit von Signalen erfolgen, die vom Motor-Steuergerät und/oder vom Kupplungs-Steuergerät eines Getriebe-Steuergeräts übermittelt werden. Es kann ferner vorgesehen sein, dass das elektronische Getriebe-Steuergerät und das elektronische Kupplungs-Steuergerät als ein Steuergerät ausgebildet sind.

Bevorzugt bilden wenigstens zwei speziellere Kennwerte des Schaltbildes eine Teilmenge des allgemein ermittelten Kennwerts, wobei nach dem Ermitteln des allgemeineren Kennwerts diese spezielleren ermittelt werden. Vorzugsweise wird der im ersten Schritt allgemein ermittelte geometrische Kennwert abgespeichert und die im zweiten Schritt differenzierter ermittelten Kennwerte abgespeichert. Bevorzugt ist ferner, dass ein allgemeiner Kennwert eine Gangstellung eines Schaltmechanismus oder einer Schaltschiene ist, dem bzw. der zwei Gänge zugeordnet sind, und der speziellere Kennwert zusätzlich einen dieser beiden Gänge identifiziert. In bevorzugter Gestaltung ist das Verfahren für ein Getriebe mit zwei Teilgetrieben vorgesehen, wobei ein allgemeiner Kennwert der erweiterte Neutralbereich des Gesamtgetriebes ist, und erster speziellere Kennwert der erweiterte Neutralbereich des einen Teilgetriebes und ein zweiter spezieller Kennwert der erweiterte Neutralbereich des anderen Teilgetriebes.

Es kann vorgesehen sein, dass der vorbestimmte Kennwert des ermittelten Schaltbildes so gespeichert werden, dass sie von einem elektronischen Steuergerät, welches Gangwechselvorgänge des Getriebes elektronisch steuert, bei der Steuerung berücksichtigt werden können. Das elektronische Steuern des Schaltelements zum Ermitteln des Schaltbildes kann bevorzugt auch mittels diesem dem elektronischen Steuergerät erfolgen.

Im folgenden werden beispielhafte Gestaltungen der Erfindung anhand der Fig. erläutert, wodurch die Erfindung nicht beschränkt werden soll. Es zeigt:
- Fig. 1 bis 5: eine erste, beispielhafte Ausführungsform einer erfindungsgemäßen Getriebeeinrichtung in teilweiser schematischer Darstellung mit einer beispielhaften, ebenfalls teilweise und schematisch dargestellten erfindungsgemäßen Betätigungseinrichtung in verschiedenen Stellungen;
- Fig. 6: eine beispielhafte Ausführungsform einer erfindungsgemäßen Betätigungseinrichtung für ein Parallelschaltgetriebe, die in vorteilhafter Gestaltung mit Gestaltungen gemäß den Fig. 1 bis 5 kombiniert sein kann;
- Fig. 7: eine Schnittansicht entlang der Linie VII-VII aus Fig. 6;
- Fig. 8: einen beispielhaften Auslegehebel für eine erfindungsgemäße Betätigungseinrichtung, der bevorzugt bei den Ausführungsbeispielen gemäß den Fig. 1 bis 5 bzw. 6 und 7 bzw. 10 und 11 eingesetzt werden kann;
- Fig. 9: ein Schaltbild, dass sich insbesondere auf die Ausführungsform gemäß den Fig. 6 und 7 bezieht;
- Fig. 10 und11: ein erfindungsgemäßes Ausführungsbeispiel, das beispielsweise mit dem Ausführungsbeispiel gemäß Fig. 1 bis 5 und/oder gemäß Fig. 6 und 7 und/oder gemäß Fig. 8 kombiniert werden kann, in verschiedenen Stellungen und zur Erläuterung, wie ein Schaltbild ermittelt werden kann;
- Fig. 12 bis 14: weitere erfindungsgemäße Ausführungsbeispiele, die insbesondere auch mit Merkmalen der Gestaltungen gemäß den Fig. 1 bis 11 kombiniert werden können.

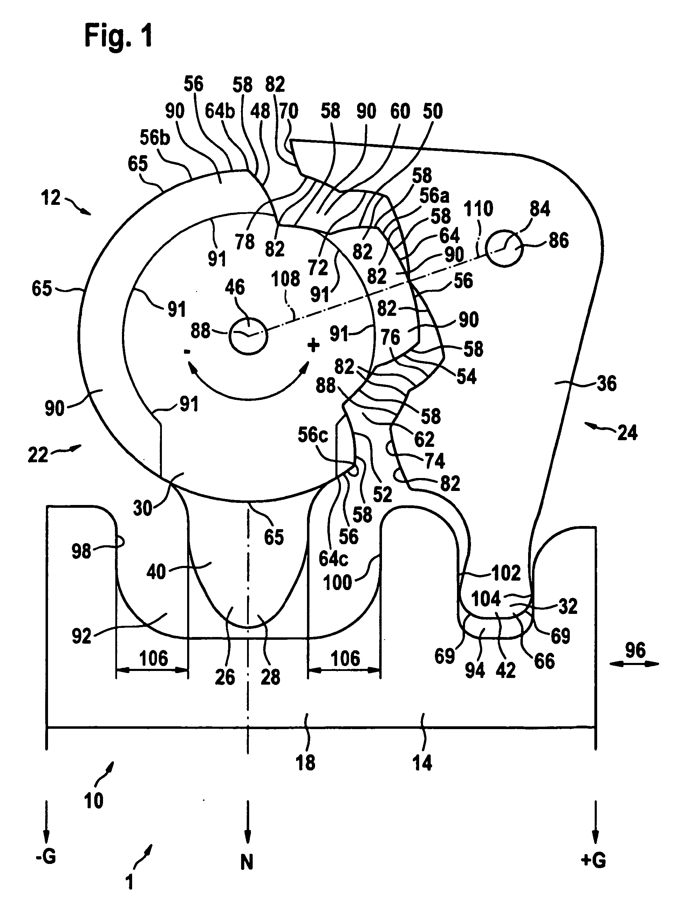

Die Fig. 1 bis 5 zeigen eine erste, beispielhafte Ausführungsform einer erfindungsgemäßen Getriebeeinrichtung in teilweiser schematischer Darstellung. Diese Getriebeeinrichtung 1 weist ein Getriebe 10 auf sowie eine Betätigungseinrichtung 12 zum Betätigen des Getriebes 10, um dort Gänge ein- bzw. auszulegen.

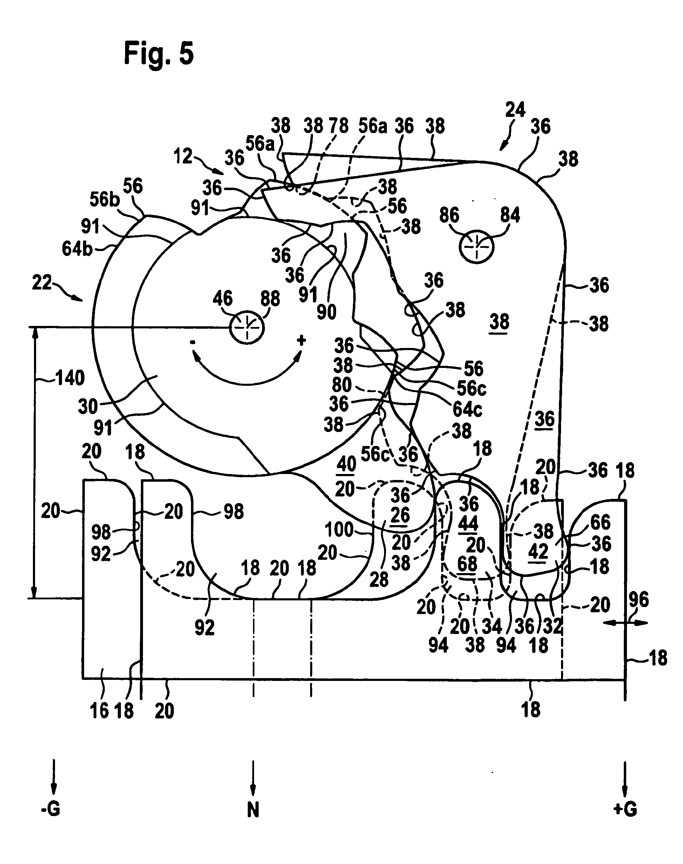

Das Getriebe 10, insbesondere Kraftfahrzeuggetriebe, weist wenigstens zwei - nicht dargestellte - Wellen auf, sowie mehrere - ebenfalls nicht dargestellte - Zahnradsätze. Mittels dieser Zahnradsätze können unterschiedliche Gangstufen bzw. Übersetzungen des Getriebes erzielt bzw. eingelegt werden. Weiter weist das Getriebe mehrere Schaltmechanismen 14, 16 auf, von denen in den Fig. 1 bis 4 einer 14, und in der Fig. 5 zwei teilweise und schematisch in beispielhafter Gestaltung gezeigt sind. Mittels der Schaltmechanismen 14, 16 können drehfeste Welle-Zahnrad-Verbindungen wahlweise erzeugt oder gelöst werden. Hierzu kann der betreffende Schaltmechanismus 14, 16 entsprechend mittels der Betätigungseinrichtung 12 betätigt werden.

Jeder der Schaltmechanismen 14, 16 weist eine Schaltschiene 18, 20 auf. Diese Schaltschiene 18, 20 ist jeweils der Betätigungseinrichtung 12 zugewandt, und diese Betätigungseinrichtung 12 kann in die jeweiligen Schaltschienen 18, 20 betätigend eingreifen. Anstelle der Schaltschienen 18, 20 können auch - insbesondere längsverschiebliche - Schaltgabeln oder dergleichen vorgesehen sein. Sofern solche Schaltgabeln nicht längsverschieblich sondern schwenkbar sind, kann deren Schwenkachse bei der Gestaltung gemäß Fig. 1 bis 5 senkrecht zur Bildebene positioniert sein,

Die Schaltschienen 18, 20 sind jeweils axial bzw. in ihrer Längsrichtung verlagerbar. Diese Bewegungsrichtung der Schaltschienen 18, 20 ist schematisch durch den Doppelpfeil 96 angedeutet. Durch Bewegung der Schaltschienen 18, 20 in dieser Richtung können Gänge des Getriebes 10 ein- bzw. ausgelegt werden. Die Schaltschienen 18, 20 können beispielsweise mit - zum jeweiligen Schaltmechanismus gehörende - Kupplungsmuffen, insbesondere fest, verbunden sein, über welche drehfeste Verbindungen zwischen einem Zahnrad und einer Welle gelöst und erzeugt werden können. Die Bewegungsrichtung 96 der Schaltschienen ist im Wesentlichen senkrecht zur Schwenkachse 88 des Schaltelements. Ferner ist die Bewegungsrichtung 96 der Schaltschienen 18, 20 im Wesentlichen senkrecht zu der bzw. den Schwenkachsen der Auslegehebel 36, 38 bzw. der Auslegefinger 66, 68.

Die Schaltschienen 18, 20 können in (axiale) Stellungen bzw. Stellungsbereiche bewegt werden, in denen bewirkt wird, dass über diese Schaltschiene bzw. den Schaltmechanismus 14 ,16, zu dem sie gehört, ein Gang des Getriebes eingelegt ist (Gangstellungen), sowie in eine axiale Stellung bzw. einen axialen Stellungsbereich in der bewirkt wird, dass über diese jeweils betreffende Schaltschiene 18, 20 bzw. den Schaltmechanismus 14 ,16, zu dem sie gehört, kein Gang im Getriebe eingelegt ist (Neutralstellung). Mit jeder Schaltschienenposition korrespondiert, insbesondere eindeutig, eine Position des Schaltmechanismus 14, 16, zu der diese gehört, bzw. eine Schaltstellung des Getriebes 10. Die Gesamtheit der Schaltmechanismen 14, 16 kann auch als innere Getriebeschaltung bezeichnet werden.

Es kann vorgesehen sein, dass sich über jede der Schaltschienen 18, 20 zwei Gänge schalten lassen bzw. diesen Schaltschienen 18, 20 und den zugehörigen Schaltmechanismen 14, 16 jeweils zwei Gänge zugeordnet sind. Es kann auch vorgesehen sein, dass einer solchen Schaltschiene 18, 20 und dem dazugehörigen Schaltmechanismus 14, 16 genau ein Gang zugeordnet sind. Auch Mischformen sind möglich, und zwar insbesondere bei ungerader Gängeanzahl des Getriebes oder eines Teilgetriebes.

Die Stellung die im Getriebe 10 gegeben ist bzw. die Stellung eines jeweiligen Schaltmechanismus 14, 16 bzw. einer jeweiligen Schaltschiene wird auch als "Schaltposition" bezeichnet.

In den Fig. werden derartige Positionen mittels der Symbole "+G","-G" und "N" symbolisiert. Zwei über einen jeweiligen Schaltmechanismus 14, 16 bzw. eine jeweilige Schaltschiene 18, 20 schaltbare Gänge werden dabei durch "+G" bzw. "-G" symbolisiert. Wenn die Schaltschiene 18, 20 so positioniert ist, dass ihr linkes Ende auf Höhe des Symbols "-G" positioniert ist, soll dadurch ausgedrückt werden, dass der Gang "-G" mittels dieser Schaltschiene 18, 20 (bzw. Schaltmechanismus 14, 16) im Getriebe eingelegt ist; in entsprechender Weise ist im Getriebe der Gang "+G" eingelegt, wenn das rechte Ende der Schaltschiene 18, 20 auf Höhe des Symbols "+G" positioniert ist. Wenn die Schaltschiene 18, 20 so positioniert ist, dass das Symbol "N" ("Neutral") im Wesentlichen in der Mitte der Schaltschiene 18, 20 ist, ist über diese bzw. den entsprechenden Schaltmechanismus kein Gang im Getriebe 10 eingelegt (neutral). Die konkreten jeweils den Symbolen "+G" und "-G" zugeordneten Gänge, wie erster Gang, zweiter Gang, etc, hängen von der Schaltschiene 18, 20 bzw. davon ab, mit welchen Zahnradsätzen die betreffende Schaltschiene zusammenwirkt. Die Anzahl der Schaltschienen richtetet sich insbesondere nach der Anzahl der Gänge des Getriebes.

Die Schaltschienen 18, 20 sind im Wesentlichen parallel zueinander und nebeneinander angeordnet. Die Schaltschienen 18, 20 weisen in den Ausführungsbeispielen gemäß den Fig. 1 bis 11 jeweils einen ersten Ausschnitt 92 (Schaltmaul) für den Eingriff des Schaltfingers 28 auf, sowie einen zweiten Ausschnitt 94 (Auslegemaul) für den jeweiligen Eingriff eines Auslegefingers 66, 68. Der erste Ausschnitt 92 ist im Vergleich zum zweiten Ausschnitt 94 verhältnismäßig breit, und zwar insbesondere in Richtung der Bewegungsrichtung 96 der jeweiligen Schaltschiene 18, 20 gesehen, so dass der zweite Ausschnitt verhältnismäßig schmal ist. Diese Ausschnitte 92, 94 sind Vertiefungen in den Schaltschienen 18, 20, die sich senkrecht zur Bewegungsrichtung 96 bzw. in Richtung der Drehachse 88 durchgehend durch die jeweilige Schaltschiene 18, 20 erstrecken.

Der erste Ausschnitt 92 weist gerade bzw. eben gestaltete und rechtwinklig zur Bewegungsrichtung 96 der Schaltschienen 18, 20 gelegene Flanken 98, 100 auf. Diese Flanken 98, 100 begrenzen den ersten Ausschnitt 92 in Richtung der Bewegungsrichtung 96 der Schaltschiene 18, 20, bzw. bilden einen Abschnitt dieser Begrenzungen.

Der zweite Ausschnitt 94 weist gerade bzw. eben gestaltete Flanken 102, 104 auf, die rechtwinklig zur Bewegungsrichtung 96 der Schaltschienen gelegen sind. Diese Flanken 102, 104 begrenzen den zweiten Ausschnitt 94 in Richtung der Bewegungsrichtung 96 der Schaltschiene 18, 20 bzw. bilden Abschnitte dieser Begrenzungen.

Die Breite des ersten Ausschnittes 92 ist - in Bewegungsrichtung 96 der Schaltschiene 18, 20 gesehen - so auf die Breite des Schaltfingers 28 in dieser Richtung sowie die Schaltwege, die zum Einlegen eines Ganges erforderlich sind, abgestimmt - , dass der Schaltfinger zum Einlegen eines Ganges in eine Gangstellung bewegt werden kann, und auslösen kann, dass ein Gang des Getriebes eingelegt wird, und anschließend wieder in seine Neutral- bzw. Mittelstellung zurückbewegt werden kann, ohne den zuvor eingelegten Gang dadurch wieder auszulegen. Wenn beispielsweise in Fig. 1 der Schaltfinger nach rechts verschwenkt wird, um dort den Gang "+G" zu schalten, belastet der Schaltfinger 28 nach einem gewissen Leerhub die Schaltschiene 18 über die Flanke 100, um das Schalten in den Gang "+G" auszulösen. Die Breite des ersten Ausschnitts 92 soll dabei so sein, dass der Schaltfinger anschließend wieder in die in Fig. 1 gezeigte Neutralstellung zurückbewegt werden kann, ohne durch ein Anschlagen an der gegenüberliegenden Flanke 98 die Schaltschiene aus der Gangstellung zu bewegen, und somit das Auslegen des Ganges zu bewirken; entsprechendes gilt für die Bewegung in den Gang "+G" und zurück. Die Breite des ersten Ausschnitts 92 bestimmt sich aus der Breite des Schaltfingers 28 und dem Schaltweg 106 bzw. den Schaltwegen 106 für die "+G"-Schaltung und "-G"-Schaltung bzw. "+G"-Schaltrichtung und "-G"-Schaltrichtung. Die Schaltbewegungen des Schaltfingers 28 aus seiner Mittelstellung in seine "+G" Stellung sind symmetrisch zu der in "-G"-Stellung. Gemäß Fig. 1 ist vorgesehen, dass der Teil des Schaltwegs, der ein Leerhub des Schaltfingers ist, im Wesentlichen dem Teil des Schaltwegs entspricht, bei dem der Schaltfinger 28 die Schaltschiene 18, 20 bewegt; der Schaltweg entspricht also streng genommen der Summe der beiden Wege 106 in Fig. 1. Der Leerhub kann auch größer sein, als der Teil des Schaltwegs, bei dem der Schaltfinger 28 die Schaltschiene 18, 20 beim Schalten in den Gang bewegt.

Die Betätigungseinrichtung 12 lässt sich für unterschiedliche Getriebearten verwenden, bzw. kann die Getriebeeinrichtung 1 unterschiedlicher Bauart sein. So kann die Getriebeeinrichtung 1 beispielsweise ein Handschaltgetriebe sein oder ein elektronisch gesteuertes Getriebe. Es kann vorgesehen sein, dass die Getriebeeinrichtung 1 so gestaltet ist, dass sich in dem Getriebe 10 Gänge mit Zugkraftunterbrechung schalten lassen, oder so, dass sich Gänge im Wesentlichen ohne Zugkraftunterbrechung schalten lassen. Beispielsweise kann die Getriebeeinrichtung 1 ein Automatisiertes Schaltgetriebe (ASG) oder ein ein Doppelkupplungsgetriebe (DKG) bzw. ein Parallelschaltgetriebe (PSG) sein. Der Einsatz in solchen Parallelschaltgetrieben ist eine besonders bevorzugte Verwendung der Betätigungseinrichtung 12, ebenso wie die Gestaltung der Getriebeeinrichtung 1 bzw. des Getriebes 10 als Parallelschaltgetriebe eine besonders vorteilhafte Ausgestaltung ist. Bei solchen Parallelschaltgetrieben bzw. Doppelkupplungsgetrieben, bei denen Antriebsstränge bzw. Antriebsstrangzweige und unabhängig voneinander mit der Brennkraftmaschine eines Kraftfahrzeugs in Drehmomentverbindung gebracht werden können, und in diesen parallelen Zweigen jeweils mehrere Übersetzungsstufen angeordnet sind, kann beispielsweise vorgesehen sein, dass mittels eines Hauptbetätigungselements 20 bzw. eines Schaltfingers 28, und/oder eines Schaltelements 30 sämtliche Gänge der beiden Zweige geschaltet werden können. Die den Zweigen zugeordneten Gänge können auch als Ganggruppen bezeichnet werden bzw. Ganggruppen bilden. Bei einem solchen Parallelschaltgetriebe bzw. Doppelkupplungsgetriebe ist es in der Regel zulässig bzw. möglich bzw. erwünscht, dass in jedem parallel geschalteten Zweige des Antriebsstrangs zeitgleich eine Gangstellung gegeben ist bzw. in jeder der Ganggruppen ein Gang. Dies kann sogar Voraussetzung dafür sein, dass im Wesentlichen Zugkraftunterbrechungsfreigänge geschaltet werden können. Dies kann beispielsweise so erfolgen, dass an einem Zweig des Antriebsstrangs angeordneter Gang eingelegt ist, und die zugehörige Anfahrkupplung, insbesondere Reibungskupplung, die die Verbindung zur Brennkraftmaschine herstellt, geschlossen ist. Um im Wesentlichen zugkraftunterbrechungsfrei in einen anderen Gang zu schalten, kann in dem anderen Teilgetriebe bzw. dem anderen parallel geschalteten Antriebsstrangzweig der Zielgang eingelegt werden, wobei die dieser Ganggruppe bzw. diesem Antriebsstrangzweig zugeordnete Anfahrkupplung, wie Reibungskupplung, die eine Drehmomentverbindung zur Brennkraftmaschine erzeugen kann, zunächst offen ist. Durch abgestimmtes Öffnen und Schließen bzw. Schließen der beiden Anfahrkupplungen, von denen jeden einem der beiden Antriebsstrangzweige bzw. Teilgetriebe zugeordnet sind, kann erreicht werden, dass von dem in dem einen der Teilgetriebe geschalteten Ausgangsgang in einen Zielgang, der im anderen Teilgetriebe geschaltet werden soll, umgeschaltet werden kann, ohne dass eine Zugkraftunterbrechung oder eine nennenswerte Zugkraftunterbrechung gegeben ist.

Die Betätigungseinrichtung 12 weist eine Hauptbetätigungseinrichtung 22 auf, sowie eine Nebenbetätigungseinrichtung 24.

Die Hauptbetätigungseinrichtung 22 weist ein Schaltelement 30 auf bzw. wird von diesem Schaltelement 30 gebildet. Das Schaltelement 30 weist ein Hauptbetätigungselement 26 zum Schalten einer Schaltschiene bzw. der Schaltschienen auf, das fingerförmig gestaltet ist, und auch als Schaltfinger 28 bezeichnet wird. Der Schaltfinger 28 ist in besonders vorteilhafter Gestaltung als Evolventenform ausgeführt. Am Schaltelement 30 sind ferner Oberflächenprofilierungen 58 vorgesehen. Das Schaltelement 30 ist einstückig gestaltet, und zwar insbesondere mit den Oberflächenprofilierungen 58 und dem Schaltfinger 28.

Das Schaltelement 30 ist einerseits zum Wählen axialbeweglich und andererseits zum Schalten drehbeweglich. Bei diesen Bewegungen wird der Schaltfinger 28 sowie die Oberflächenprofilierungen 58 des Schaltelements 30 entsprechend mitbewegt.

Das Schaltelement 30 weist ferner Auslegeflanken 48, 50, 52, 54 zur Betätigung des bzw. der Auslegehebel 36, 38 auf. Ferner weist das Schaltelement 30 ein Sperrteil 56 auf, das - wie in der Fig. gezeigt - einen bzw. mehrere im Wesentlichen zylindrische bzw. zylinderabschnittförmige (Oberflächen)Abschnitte 56a, 56b, 56c aufweist, und auch als Sperrzylinder bezeichnet wird. Die Auslegeflanken 48, 50, 52, 54 können, wie in Fig. 1 gezeigt, Bestandteile der Oberfläche des Schaltelements 30 sein. In einer vorteilhaften Gestaltung sind die Auslegeflanken 48, 52 bzw. die Auslegeflanken 50, 54 jeweils konvex ausgebildet. Auch das Sperrteil bzw. der Sperrzylinder 56 kann - wie in Fig. 1 gezeigt - von einem bzw. mehreren Oberflächenabschnitten des Schaltelements 30 gebildet werden.

Die Auslegeflanken 48, 50, 52, 54 bzw. der Sperrzylinder 56 sind Bestandteil einer Oberflächenprofilierung 58 der Hauptbetätigungseinrichtung 22 bzw. des Schaltelements 30. Diese Oberflächenprofilierung 58 weist Oberflächenvertiefungen 60, 62 und Oberflächenerhöhungen 64 auf. Im Beispiel gemäß Fig. 1 ist dies so, dass zwischen zwei Oberflächenvertiefungen 60, 62 eine Oberflächenerhöhung 64 gebildet wird. Die Auslegeflanken 48, 50 bzw. die Auslegeflanken 52, 54 sind Bestandteil der die Oberflächenvertiefungen 60, 62 bildenden Kontur. Das Sperrteil bzw. der Sperrzylinder 56 ist Bestandteil einer 64 bzw. mehrerer Oberflächenerhöhungen 64, 64b, 64c bildenden Kontur. Im Beispiel gemäß Fig. 1 schließt sich an die Oberflächenerhöhung 64 auf der einen Seite die Oberflächenvertiefung 60, und auf der anderen Seite die Oberflächenvertiefung 62 an. An die Oberflächenvertiefung 60 schließt sich - auf der anderen Seite - die Oberflächenerhöhung 64b an und an die Oberflächenvertiefung 62 schließt sich - auf der anderen Seite - die Oberflächenerhöhung 64c an. Die Oberflächenprofilierung 58 erstreckt sich entlang eines um die Drehachse des Schaltelements 30 sich in Umfangsrichtung erstreckenden Oberflächenabschnitts.

Die Auslegeflanke 48 liegt - in Umfangsrichtung bezüglich der Drehachse des Schaltelements 30 gesehen - gegenüber der Auslegeflanke 50. In entsprechender Weise liegt die Auslegeflanke 52 gegenüber der Auslegeflanke 54. Zwischen den Auslegeflanken 50 und 54 erstreckt sich das Sperrteil bzw. der Sperrzylinder 56 bzw. ein Abschnitt 56a dieses Sperrteils bzw. Sperrzylinders 56.

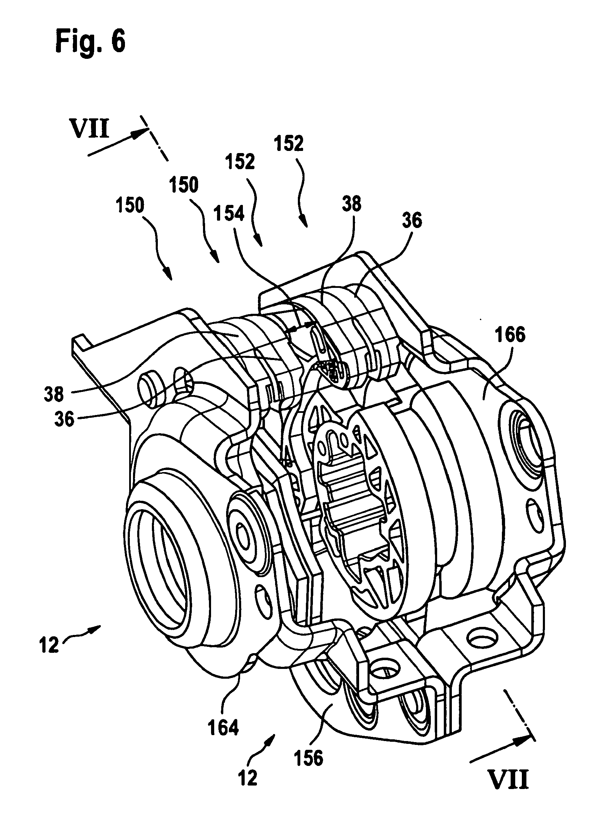

Das Schaltelement 30 kann mehrere derartiger Oberflächenprofilierungen aufweisen, wie beispielsweise auch die Fig. 6 zeigt. Solche Oberflächenprofilierungen können - in Richtung der Achse 88 des Schaltelements 30 - axial beabstandet sein. Zwischen den Auslegeflanken 48 und 52 kann die Außenoberfläche des Schaltelements 30 beispielsweise zylindrisch bzw. zylindersegmentartig gestaltet sein, wie durch die Bezugszeichen 65 in Fig. 1 schematisch angedeutet ist; dabei gehen die Oberflächenerhöhungen 64b, 64c ineinander über bzw. sind identisch. Es kann vorgesehen sein, das der Radius der zylindrischen Abschnitte 56a, 56b, 56c identisch ist; es kann auch im Bereich 65 der gleiche Radius gegeben sein.

In der in Achsrichtung des Schaltelements 30 gesehenen Ebene, in der der Schaltfinger 28 angeordnet ist, bildet das Schaltelement 30 einen oder mehrere Freiräume 90. In der Ebene dieses Schaltfingers 28 ist in Umfangsrichtung um die Schwenkachse 88 gesehen die radial äußere Begrenzung 91 des Schaltelements 30 zumindest abschnittsweise näher an der Schwenkachse 88 gelegen, als in Ebenen, in denen die Oberflächenprofilierungen 58 bzw. die Auslegeflanken 48, 50, 52, 54 des Schaltelements angeordnet sind. Dies kann beispielsweise - wie in Fig. 1 gezeigt - so sein, dass das Schaltelement 28 außerhalb des Segments, in dem der Schaltfinger 28 - hier im Wesentlichen radial - absteht - in der Ebene dieses Schaltfingers das Schaltelement 30 im Wesentlichen durch eine zylindrische Fläche begrenzt wird (vgl. Linie 91), die zumindest abschnittsweise näher an der Schwenkachse 88 gelegen ist, als Bereiche der Oberflächenprofilierung 58. Beispielsweise kann vorgesehen sein, dass in der Ebene des Schaltfingers 28 eine sich zumindest abschnittsweise entlang der um die Schwenkachse 88 gerichteten Umfangsrichtung erstreckende, einen Freiraum 90 bildenden Nut gegeben ist, wie es beispielsweise in den Fig. 6, 10 und 11 gezeigt ist.

Dieser Freiraum 90 kann dazu dienen, wie auch im folgenden noch erläutert werden wird, dass ein Auslegehebel, der dem Schaltmechanismus zugeordnet ist, mit dem der Schaltfinger aktuell zusammenwirkt, so geschaltet werden kann, dass dieser Auslegehebel nicht versucht, den betreffenden Schaltmechanismus in eine Neutralstellung zu bewegen. Dies kann insbesondere so sein, dass dieser Auslegehebel weiter in Richtung des Schaltelements 30 schwenken kann, als andere Auslegehebel des gleichen Getriebes bzw. Teilgetriebes.

Das Schaltelement 30 mit dem Schaltfinger 28 wird von einer dreh- bzw. schwenkbar und axial beweglich gelagerten Schaltwelle 46 getragen. Das Schaltelement 30 bzw. der Schaltfinger 28 kann mit dieser Schaltwelle 46 axialfest und drehfest verbunden sein, so dass ein Verschwenken dieser Schaltwelle 46 ein Verschwenken des Schaltelements 30 bzw. des Schaltfingers 28 bewirkt und eine Axialverschiebung der Schaltwelle 46 eine Axialverschiebung des Schaltelements 30 bzw. des Schaltfingers 28. Die Schaltwelle 46 und das Schaltelement 30 können separat gefertigt sein, oder einstückig. Zum Erzeugen der Dreh- bzw. Schwenkbewegung des Schaltelements bzw. der Schaltwelle, einerseits, und zum Erzeugen der Axialverschiebung, andererseits, kann jeweils ein Elektromotor vorgesehen sein, der beispielsweise die Schaltwelle 46 entsprechend belasten bzw. antreiben kann.

Solche Elektromotoren können beispielsweise mit einem elektronischen Steuergerät in Signalverbindung stehen und von diesem angesteuert werden. Das elektrische Steuergerät kann bei der Ansteuerung dieser Elektromotoren diverse Signale verarbeiten und/oder berücksichtigen, wie beispielsweise Signale, die Kennwerte der Brennkraftmaschine eines Kraftfahrzeugs anzeigen, und/oder Geschwindigkeitssignale des Kraftfahrzeugs, und/oder Stellungen eines Wählhebels des Kraftfahrzeugs und dergleichen.

Die Nebenbetätigungseinrichtung 24 weist mehrere beweglich und relativbeweglich zueinander angeordnete Auslegeelemente auf, die hier als Hebel (Auslegehebel 36, 38) gestaltet sind, bzw. wird von diesen gebildet. An jedem dieser Auslegehebel 36, 38 ist jeweils ein als Finger gestaltetes Nebenbetätigungselement 32, 34, der jeweilige Auslegefinger 66, 68, vorgesehen, so dass diese Auslegefinger 66, 68 beweglich und relativbeweglich zu einander angeordnet sind. Ferner weist jeder der Auslegehebel 36, 38 eine Oberflächenprofilierung 82 auf. Jeder dieser Auslegehebel 36, 38 ist einstückig gestaltet, und zwar insbesondere mit dem jeweiligen Auslegefinger 66, 68 und der jeweiligen Oberflächenprofilierung 82.

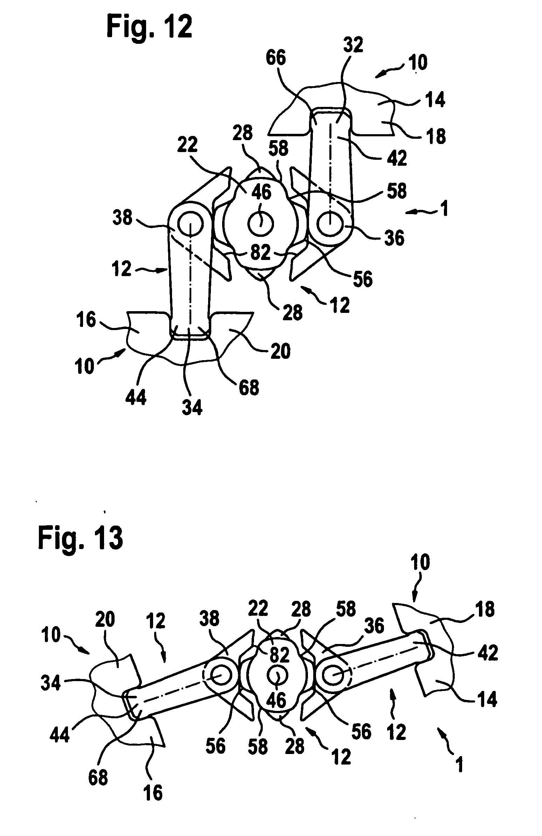

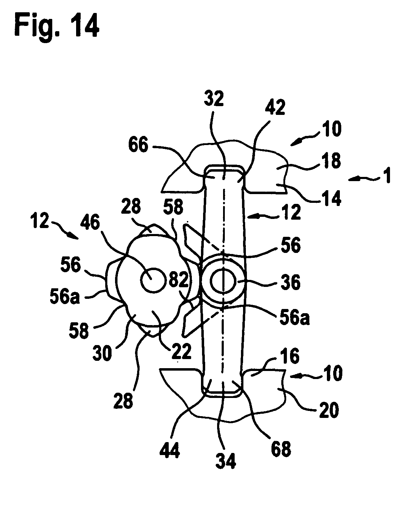

Die Auslegehebel 36, 38 sind jeweils um eine Schwenkachse 84 dreh- bzw. schwenkbar gelagert. Es kann vorgesehen sein, dass sämtlichen Auslegehebeln 36, 38 die gleiche Schwenkachse 84 zugeordnet ist, wie es im Wesentlichen bei der Gestaltung gemäß den Fig. 1 bis 11 gegeben ist. Dabei kann ferner vorgesehen sein, dass sämtliche Auslegehebel 36, 38 zur Erreichung dieser Schwenkbarkeit auf einer gemeinsamen Welle 86 zur Aufnahme der Auslegehebel 36, 38 gelagert sind. Dabei ist allerdings vorgesehen, dass die verschiedenen Auslegehebel 36, 38 relativ zueinander schwenkbar angeordnet sind. Es kann beispielsweise vorgesehen sein, dass die Welle 86 fest, also nicht schwenkbar, gelagert ist, und die Auslegehebel 36, 38 jeweils auf dieser Welle so aufgenommen werden, dass sie verschwenkbar sind. Es kann ferner vorgesehen sein, dass geeignete Lagermittel, wie Kugellager oder Gleitlager oder dergleichen, zwischen dem jeweiligen Auslegehebel und der Welle 86 angeordnet sind. Es kann aber auch vorgesehen sein, dass verschiedene Auslegehebel 36, 38 auf verschiedenen Wellen gelagert sind, die gegebenenfalls sogar relativ verschwenkbar zueinander angeordnet sind. Ferner kann vorgesehen sein, dass - sofern verschiedene Teilgetriebe gegeben sind - für das jeweilige Teilgetriebe eine separate Welle 86 vorgesehen ist, die sämtliche Auslegehebel 36, 38 des betreffenden Teilgetriebes aufnimmt. Die Auslegehebel 36, 38 verschiedener Teilgetriebe können aber auch von einer gemeinsamen Welle getragen werden. Es kann auch vorgesehen sein, dies ist beispielhaft in den Fig. 12 bis 14 gezeigt, dass verschiedene Auslegehebel 36, 38 um verschiedene Schwenkachsen schwenkbar gelagert sind.

Die Schwenkachsen 86 der Auslegehebel 36, 38 sind in vorteilhafter Gestaltung parallel zueinander ausgerichtet. Besonders vorteilhaft ist vorgesehen, dass die Schwenkachsen 86 der Auslegehebel beabstandet - und insbesondere parallel - sind zu der Schwenkachse 88, um welche das Schaltelement 30 bzw. der Schaltfinger 28 schwenkbar ist.

Für jede Schaltschienen 18, 20 bzw. für jeden Schaltmechanismus 14, 16 ist jeweils ein Auslegehebel 36, 38 vorgesehen. Diese Auslegehebel sind benachbart angeordnet, und liegen dabei insbesondere in parallelen, beabstandeten Ebenen.

Wie Fig. 1 zeigt, werden die Oberflächenprofilierungen 82 der Auslegehebel 36, 38 - im folgenden wird zur Vereinfachung von dem Auslegehebel gesprochen - von Oberflächenerhöhungen bzw. -vertiefungen gebildet.

Die Auslegehebel sind jeweils identisch gestaltet. Die Oberflächenprofilierung 82 des Auslegehebels ist auf der dem Schaltelement 30 zugewandten Seite des Auslegehebels 36, 38 angeordnet, und die Oberflächenprofilierung 58 des Schaltelements ist insbesondere auf dem bzw. den Auslegehebeln zugewandten Seite des Schaltelements angeordnet. Dies bezieht sich insbesondere auf solche Profilierungsabschnitte des Schaltelements bzw. der Auslegehebel, die, wie noch erläutert werden wird, zusammenwirken können.

Der Auslegehebel 36, 38 weist Auslegeflanken 70, 72, 74, 76 auf. Ferner weist der Auslegehebel 36, 38 eine oder mehrere Sperrflanken 78, 80 auf. Die Auslegeflanken 70, 72, 74, 76 bzw. die Sperrflanken 78, 80 sind Bestandteil einer Oberflächenprofilierung 82 des Auslegehebels 36, 38.

Die Auslegefinger können in vorteilhafter Gestaltung, wie es in Fig. 1 gezeigt ist, mit Radiuskontaktflächen 69 ausgebildet sein, oder konvex gewölbte Oberflächenabschnitte aufweisen. Jeder Auslegefinger 66, 68 kann in dem jeweiligen zweiten Ausschnitt einer Schaltschiene 16, 18 im Wesentlichen so angeordnet sein, dass sie in Orientierungen der Bewegungsrichtung 96 der Schaltschiene 18, 20 im Wesentlichen an dieser anliegen oder ein geringer Zwischenraum bzw. geringes Spiels existiert. Dabei ist in jedem der zweiten Ausschnitte 94 einer Schaltschiene 16, 18 jeweils ein Auslegefinger positioniert, und zwar insbesondere so, dass er mit seinen Radiuskontaktflächen 69 die geraden bzw. ebenen Flanken 102, 104 des jeweiligen zweiten Ausschnitts 94 belasten kann.

Die Betätigungseinrichtung 12 weist mehrere voneinander verschiedene Ausgangselemente 40, 42, 44 auf, die zum betätigenden Eingriff in die Schaltmechanismen des Getriebes bewegt werden können. Dies ist insbesondere so, dass die Ausgangselemente 40, 42, 44 in die Schaltschienen 18, 20 eingreifen. In der Gestaltung gemäß den Fig. 1 bis 5 greift ein jeweiliges Nebenbetätigungselement 32, 34 jeweils in eine Schaltschiene.

In dem Ausführungsbeispiel gemäß den Fig. 1 bis 5 werden Ausgangselemente von Nebenbetätigungselementen und vom Hauptbetätigungselement bzw. von den Auslegefingern 32, 34 und dem Schaltfinger 28 gebildet. So kann beispielsweise vorgesehen sein, dass eines 40 der Ausgangselemente 40, 42, 44 von dem Schaltfinger 28 gebildet wird, und die verbleibenden Ausgangselemente 42, 44 von den Auslegefingern 32, 34 (vgl. Fig. 1 bis 5). Dabei kann insbesondere vorgesehen sein, dass die Auslegefinger 32 bzw. 34 der Auslegehebel 36 bzw. 38 permanent im Eingriff mit den Schaltschienen 18, 20 bzw. einer jeweiligen Schaltschiene 18 bzw. 20 sind. Beispiele, bei denen der bzw. die Schaltfinger kein Ausgangselement bildet und jeder Auslegefinger ein Ausgangselement bildet bzw. jedes Ausgangselement ein Auslegefinger ist, sind in Fig. 12 bis 14 gezeigt.

In einer Gestaltung, bei der die Getriebeeinrichtung 1 als Doppelkupplungsgetriebe bzw. Parallelschaltgetriebe gestaltet ist, kann vorgesehen sein, dass separate Nebenbetätigungseinrichtungen für die Teilgetriebe vorgesehen sind. Beispielsweise kann vorgesehen sein, dass jedes der Teilgetriebe eine Nebenbetätigungseinrichtung mit Auslegeelementen bzw. Auslegehebeln 2 aufweist. Auch hier kann vorgesehen sein, dass jeder dieser Auslegehebel 36, 38 mit einem Schaltmechanismus 14, 16 zusammenwirkt bzw. zusammenwirken kann, dem er zugeordnet ist. Insbesondere kann hierbei vorgesehen sein, dass jedes der Auslegeelemente ein Nebenbetätigungselement, insbesondere Auslegefinger 32 aufweist, der jeweils mit einem ihm zugeordneten Schaltmechanismus 14, 16 des Getriebes 10 zusammenwirkt. Beispielsweise kann ein solcher Auslegefinger 32, 34 jeweils permanent mit einer Schaltschiene 18, 20 in Eingriff stehen.

Es kann vorgesehen sein, dass die Auslegeelemente bzw. Auslegehebel 36, 38, die dem gleichen Teilgetriebe zugeordnet sind, mit geringem Abstand bzw. geringem Spiel nebeneinander angeordnet sind, und die Auslegehebel des anderen Teilgetriebes entsprechend nebeneinander liegen, wobei die einander zugewandten Auslegehebel der verschiedenen Teilgetriebe einen größeren Abstand aufweisen.

Es kann auch vorgesehen sein, dass bei Getrieben, wie beispielsweise automatisiertes Schaltgetriebe (ASG) oder Handschaltgetriebe alle Auslegeelemente bzw. Auslegehebel 36, 38 mit geringem Abstand angeordnet sind.

Das Hauptbetätigungselement 26 bzw. der Schaltfinger 28 kann zum Schalten und zum Wählen bewegt werden. In den Ausführungsbeispielen ist dies so, dass der Schaltfinger zum Wählen im Wesentlichen in axialer Richtung (translatorisch) bzw. in Richtung der Schaltwelle 46 bewegt werden kann, und zum Schalten um eine sich in dieser axialen Richtung erstreckende Längsachse verschwenkt werden kann. Dies kann insbesondere mittels der Schaltwelle 46 erreicht werden, bzw. dadurch, dass die Schaltwelle das Schaltelement 30 bzw. den Schaltfinger 28 entsprechend belasten.

Das Hauptbetätigungselement bzw. der Schaltfinger 28 kann also im Wesentlichen entsprechend einer Schalt-Wählgassen-Anordnung bewegt werden bzw. entsprechend eines Teils einer solchen. Eine solche Anordnung kann beispielsweise nach Art eines H-Schaltbildes gestaltet sein. Dies bedeutet allerdings nicht, dass der Schaltfinger dabei zwangsläufig entsprechende lineare Bewegungen ausführen muss. So zeigt die Gestaltung gemäß den Fig. 1 bis 5 - wie erwähnt - ein Beispiel dafür, dass die Bewegung in Schaltgassenrichtung durch ein Verschwenken des Schaltfingers 28 erreicht werden kann, und die Bewegung in Wählgassenrichtung durch ein axiales Verschieben. Die Anordnung der Gänge bei einer solchen Schaltgassen-Wählgassen-Anordnung kann auf verschiedene Art und Weise gestaltet sein. Es kann beispielsweise nach der Erfindung auch vorgesehen sein, dass der jeweils nächst höhere Gang einer Schaltgasse eines anderen Teilgetriebes zugeordnet ist, wie es beispielsweise bei Doppelkupplungsgetrieben bzw. Parallelschaltgetrieben der Fall sein kann. Es kann beispielsweise so sein, dass den Schaltgassen eines Teilgetriebes die geraden Gänge, und den Schaltgassen eines anderen Teilgetriebes die ungeraden Gänge zugeordnet sind. Es kann auch vorgesehen sein, dass ein oder mehrere oder alle Gänge jeweils in verschiedenen Teilgetrieben vorgesehen sind, also insgesamt betrachtet mehrfach.

Das Hauptbetätigungselement 26 bzw. der Schaltfinger 28 kann bewegt werden, um ein Ausgangselement 42 bzw. 44 zum Schalten einer Schaltschiene 18, 20 bzw. zum Einlegen von Gängen des Getriebes zu bewegen. Dieses vom Schaltfinger 28 bewegbare Ausgangselement 42 bzw. 44 ist den Gestaltungen gemäß des Fig. 1 bis 11 der Schaltfinger 28 selbst, und in den Gestaltungen gemäß den Fig. 12 bis 14 ein Nebenbetätigungselement, und zwar insbesondere ein solches welches aktuell nicht am Auslegen oder Sperren von Gängen (anderer Schaltgassen) beteiligt ist.

Durch eine Bewegung des Schaltfingers 28 in Schaltrichtung (Schwenken) kann bewirkt werden, dass der Schaltfinger 28 mit einem im Wesentlichen der jeweiligen Wählposition entsprechenden Schaltschiene 18, 20 bzw. dem Schaltmechanismus 14, 16, dem diese Schaltschiene 18, 20 zugeordnet ist, derart in Wirkverbindung tritt bzw. treten kann, dass über diesen Schaltmechanismus 14, 16 bzw. diese Schaltschiene 18, 20 ein entsprechender Gang im Getriebe 10 eingelegt wird; die Schaltschiene 18, 20 wird dabei entsprechend verschoben.

Durch eine Wählbewegung (hier Axialverschiebung) des Schaltfingers 28 kann dieser so positioniert werden, dass aus der entsprechenden Position anschließend durch Bewegung in Schaltrichtung, insbesondere Schwenken des Schaltfingers, das Einlegen eines Ganges bewirkt werden kann. Es wird beim Wählen also insbesondere der Schaltmechanismus 14, 16 bzw. die Schaltschiene 18, 20 ausgewählt, mit dem der Schaltfinger 28 in einer folgenden Schaltbewegung zum Schalten eines Ganges in Wirkverbindung treten kann. Mit einem jeweiligen Schaltmechanismus 14, 16 bzw. Schaltschiene 18, 20, über welche verschiedene, insbesondere zwei, Gänge des Getriebes 10 eingelegt werden können, kann der Schaltfinger 28 zum Schalten bzw. Einlegen des jeweils einen dieser beiden Gänge in Wirkverbindung treten, indem er ausgehend von einer Neutralstellung in der einen Orientierung der Schaltrichtung bewegt wird; und durch eine von einer Neutralstellung des Schaltfingers 28 ausgehende Bewegung in der entgegen gesetzten Orientierung der Schaltrichtung kann der Schaltfinger mit dieser Schaltschiene 18, 20 bzw. diesem Schaltmechanismus 14, 16 so in Wirkverbindung treten, dass der andere Gang des Getriebes 10, der diesem Schaltmechanismus 14, 16, bzw. dieser Schaltschiene 18, 20 zugeordnet ist, im Getriebe eingelegt wird. Dabei ist jedoch vorgesehen, dass der Schaltfinger 28 in diesen beiden Orientierungen jeweils in einen vorbestimmten Bereich bewegt werden muss, damit das Schalten eines Ganges im Getriebe auch ausgelöst wird.

Bei Gestaltungen mit zwei Teilgetrieben, z.B. Doppelkupplungs- oder Parallelschaltgetriebe - kann vorgesehen sein, dass der Schaltfinger 28 bzw. das Schaltelement 30 so in Wähl- bzw. Axialrichtung verschoben werden kann, dass er - insbesondere wahlweise - auf alle Schaltmechanismen beider Teilgetriebe zum Einlegen von Gängen einwirken kann, wobei insbesondere vorgesehen ist, dass die entsprechenden Schaltschienen 18, 20 der beiden Teilgetriebe entsprechend positioniert sind. Es kann also insbesondere vorgesehen sein, dass genau ein Schaltfinger 28 und/oder genau ein Schaltelement 30 zum Schalten der Gänge beider Teilgetriebe vorgesehen ist. Ein Schaltelement kann auch mehrere Schaltfinger aufweisen, wie die Beispiele gemäß Fig. 12 bis 14 zeigen.

Bei den Ausführungsbeispielen gemäß den Fig. 1 bis 11 ist vorgesehen, dass der Schaltfinger 28 zum Schalten eines Ganges des Getriebes 10 unmittelbar einen entsprechenden Schaltmechanismus 14, 16 bzw. eine entsprechende Schaltschiene 18, 20 belastet, er ist also ein Ausgangselement. Dies ist beispielsweise, wie der Gestaltung gemäß Fig. 1 entnommen werden kann, so, dass der Schaltfinger, der in Fig. 1 in einer Neutralstellung gezeigt ist, durch ein Verschwenken in der einen oder der anderen Orientierung mit einer Schaltschiene 18, 20 bzw. einem Schaltmechanismus 14, 16 nach einem gewissen Verschwenken in Kontakt tritt, und bei weiterem Verschwenken diese Schaltschiene 18, 20 bzw. Schaltmechanismus 14, 16 mitnimmt bzw. drückt, um in eine Gangstellung zu bewegen. Es kann aber auch vorgesehen sein, dass der Schaltfinger zum Schalten eines Ganges nur mittelbar die betreffende Schaltschiene 18, 20 bzw. den betreffenden Schaltmechanismus 14, 16 belastet, wie es beispielsweise in den Ausführungsbeispielen gemäß den Fig. 12 bis 14 gezeigt ist. Ferner kann vorgesehen sein, dass ein solches Zusammenwirken kontaktlos erfolgt, was beispielsweise durch ein elektrisches oder elektro-mechanisches Zusammenwirken erreicht werden kann.

Die Positionen des Schaltfingers 28 in Schaltrichtung werden auch als Betätigungspositionen bezeichnet. Die (End)Positionen, die der Schaltfinger anfahren muss, damit ein jeweiliger Schaltmechanismus 14, 16 bzw. Schaltschiene mittels des Schaltfingers in eine Gangstellung bzw. eine Schaltstellung "+G" bzw. "-G" bewegt bzw. gedrückt wird, werden als Betätigungspositionen "+G" bzw. "-G" bezeichnet, und eine Mittenposition wird als Neutralstellung bzw. "N" bzw. "Neutral" bezeichnet. Als "+N" bzw. "+Neutral" bzw. als "-N" bzw. "-Neutral" werden die Betätigungspositionen bezeichnet, bei der der Schaltfinger aus "Neutral" ausgelenkt (verschwenkt) ist, und bei weiterem Verschwenken (erstmalig) die betreffende Schaltschiene mittels des Schaltfingers bewegt wird. Dies ist darauf zurückzuführen, dass der Schaltfinger 28 einen Leerhub aufweist, bzw. im ersten Ausschnitt 92 der jeweiligen Schaltschiene in deren Längsrichtung bewegt werden kann, ohne diese zu belasten.

Es wird also ermöglicht, dass mittels des Schaltfingers 28 verschiedene Schaltschienen wahlweise zum Schalten von Gängen angesteuert oder belastet werden. Der Schaltfinger dient insbesondere dazu, dass mittels diesem Schaltfinger 28 Gänge des Getriebes eingelegt werden können. Der Schaltfinger ist mit den Schaltschienen bzw. Schaltmechanismen allerdings nicht so verbunden, dass der zuletzt mittels dieses Schaltfingers eingelegte Gang (zwangsläufig) ausgelegt wird, wenn der Schaltfinger aus dieser Gangposition zurück in seine Neutrallage bewegt wird. Es ist also insbesondere nicht vorgesehen, dass aus jeder Schaltfingerstellung eindeutig die Stellungen der Schaltschienen bzw. Schaltmechanismen bestimmt werden können.

Der Schaltfinger 28 kann relativ zu den Schaltschienen 18, 20 bzw. den Schaltmechanismen 14, 16 so bewegt werden, dass der Schaltfinger 28 in einer Neutralposition ist, wenn eine der Schaltschienen 18, 20 bzw. der Schaltmechanismen 14, 16 in einer Gangposition ist. Wenn der Schaltfinger in einer Gangstellung ist, kann er aus dieser in seine Neutrallage zurückbewegt werden, ohne dass der Gang, der zuvor mittels des Schaltfingers eingelegt wurde, dabei wieder ausgelegt wird. Es wird also ermöglicht, dass abweichend von klassischen Gestaltungen, bei denen nach dem Einlegen eines Ganges zunächst das Auslegen dieses Ganges, anschließend das Wählen und danach das Einlegen eines neuen Ganges erfolgt, dass Wählen eines neuen Ganges erfolgen kann, ohne dass der vorher eingelegte Gang ausgelegt wird.

Beim Schalten in Gänge belastet der Schaltfinger die betreffende Schaltschiene 18, bzw. 20 vorzugsweise nur über die geraden bzw. ebenen Flanken 98, 100. Die jeweiligen Auslegefinger 66, 68 belasten die jeweilige Schaltschiene beim Auslegen von Gängen vorzugsweise nur über die geraden bzw. ebenen Flanken 102, 104. Sofern eine Schaltschiene 18, 20 einen Auslegefinger 66, 68 mitnimmt belastet diese Schaltschiene 18, 20 diesen Auslegefinger 66, 68 vorzugsweise nur über die geraden Flanken 102, 104 dieser Schaltschiene 18, 20.

In der in Fig. 1 gezeigten Stellung ist die Schaltposition "neutral" und die Betätigungsposition "neutral". Es ist also der Schaltfinger 28 in einer Neutralposition, und über die Schaltschiene 18 bzw. den Schaltmechanismus 14 kein Gang des Getriebes eingelegt.

Bei vorbestimmten Bewegungen des Schaltelements bzw. des Schaltfingers in Schaltrichtung zum Einlegen eines Gangs wirken das Schaltelement 30 und die Nebenbetätigungseinrichtung 24 bzw. ein oder mehrere der Auslegehebel 36, 38 so zusammen, dass sichergestellt ist, dass die Auslegefinger 66, 68, die im gleichen Getriebes bzw. Teilgetriebes wirken wie der Schaltfinger, allerdings in den anderen Schaltgassen dieses Getriebes bzw. Teilgetriebes, jeweils in einem Stellungsbereich positioniert sind bzw. werden, in dem sichergestellt ist, dass die jeweiligen zugeordneten (anderen) Ausgangselemente, die insbesondere Auslegefinger sind, in einem Stellungsbereich zum Auslegen und/oder Sperren von Gängen positioniert ist. Die Bewegungen des Schaltelements 30 sind dabei insbesondere jeweils solche, durch welche das Schaltelement 30 bzw. der Schaltfinger 28 in eine Stellung gebracht wird in der das Schalten in einen Gang bewirkt wird bzw. so, dass der Schaltfinger in einem Stellungsbereich bewegt wird, in dem über den Schaltmechanismus, auf den der Schaltfinger 28 dabei einwirkt, ein Gang eingelegt wird. Die Stellung bzw. der Stellungsbereich eines jeweiligen Auslegefingers 66, 68 zum Auslegen eines Gangs ist dabei insbesondere so, dass über den Eingriff des betreffenden Ausgangselements 42, 44 bzw. Auslegefingers 28 in zugeordnete Schaltmechanismen 14, 16 des Getriebes bzw. Teilgetriebes diese Schaltmechanismen 14, 16 gesichert so positioniert werden - sofern sie es nicht bereits sind - das über den jeweiligen Schaltmechanismus 14, 16 kein Gang im Getriebe eingelegt ist, bzw. die jeweiligen dem betreffenden Schaltmechanismus 14, 16 zugeordneten Gänge gesperrt sind, und zwar insbesondere bevor durch das Schwenken des Schaltfingers 28 der Zielgang eingelegt ist. Es ist sichergestellt, dass dann, wenn dieser betreffende Gang im Getriebe bzw. Teilgetriebe eingelegt ist, die anderen Gänge des Getriebes bzw. des gleichen Teilgetriebes ausgelegt sind, so dass nur ein Gang des Getriebes bzw. Teilgetriebes gleichzeitig eingelegt sein kann.

Dieses wenigstens eine andere Ausgangselement ist in den Ausführungsbeispielen gemäß den Fig. 1 bis 11 ein Auslegefinger 66, 68, der in eine Schaltschiene 18, 20 eingreift, die von der Schaltschiene verschieden ist, in die der Schaltfinger aktuell eingreift.

Die Hauptbetätigungseinrichtung bzw. Schaltelement 30 und die Nebenbetätigungseinrichtung 24 bzw. die Auslegehebel 36, 38 wirken so zusammen, dass gesteuerte Relativbewegungen der Ausgangselemente erzeugt werden können. Die Relativbewegungen werden insbesondere mittels der Oberflächenprofilierungen 58, 82 des Schaltelements 30 sowie der Auslegehebel 36, 38 gesteuert. Diese sind insbesondere so, dass bei einer Bewegung des Schaltfingers 28 in eine Gangstellung, ein Ausgangselement, welches auch der Schaltfinger sein kann, in eine Gangstellung bewegt wird, wobei die Ausgangselemente des gleichen Getriebes bzw. Teilgetriebes, die anderen Schaltgassen zugeordnet sind bzw. dort aktuell wirken, - sofern sie nicht bereits in einer derartigen Stellung sind - jeweils in eine vorbestimmte Stellung bzw. einen vorbestimmten Stellungsbereich bewegt werden, die bzw. der so ist, das über die zugeordneten Schaltmechanismen im Getriebe kein Gang eingelegt ist, bzw. ein gegebenenfalls geschalteter Gang ausgelegt wird, und zwar insbesondere bevor der Schaltfinger 28 sein Gangstellung erreicht hat.

Es ist insbesondere vorgesehen, dass eine oder mehrere Oberflächenprofilierungen 58 der Hauptbetätigungseinrichtung bzw. des Schaltelements 30 mit einer oder mehreren Oberflächenprofilierungen der Nebenbetätigungseinrichtung bzw. der Auslegehebel derart zusammenwirken, dass beim Bewegen des Schaltfingers zum Schalten eines Ganges sichergestellt wird, dass die anderen Schaltgassen des gleichen Getriebes bzw. Teilgetriebes zugeordnet sind, ausgelegt sind, bevor der jeweilige Zielgang mittels des Schaltfingers eingelegt ist.

Die Steuerung erfolgt insbesondere mittels derartiger Oberflächenprofilierungen 58, 82, bzw. mittels des Zusammenwirkens dieser. Es kann insbesondere vorgesehen sein, dass bei einer Schwenkbewegung des Schaltfingers 28 aus einer Neutralstellung in einer Gangstellung eine oder mehrere Oberflächenprofilierungen 58 des Schaltelements 30 mit der bzw. den Oberflächenprofilierungen 82 von Auslegehebeln in Wirkverbindung treten, die dem gleichen Getriebe bzw. Teilgetriebe zugeordnet sind, in dem der Schaltfinger 28 aktuell wirkt, und die aktuell in anderen Schaltgassen wirken als der Schaltfinger. Dieses Zusammenwirken kann insbesondere so sein, dass durch Bewegung des Schaltfingers bzw. Schaltelements 30, die Oberflächenprofilierung(en) des Schaltelements so bewegt werden, dass sie - insbesondere über Eingriff in Oberflächenprofilierungen der betreffenden Auslegehebel, diese Auslegehebel 36, 38 bzw. deren Auslegefinger in eine Position zwingen, die eine Auslege- und/oder Sperrstellung ist. Die Auslegefinger sind bzw. wirken dabei bevorzugt als Ausgangselemente; es kann aber auch vorgesehen sein, dass sie mit Ausgangselementen gekoppelt sind. Die Ausgangselemente 42, 44 stellen bei Eingriff in Schaltschienen, der bevorzugt permanent gegeben ist, in ihrer Auslege- und/oder Sperrstellung sicher, dass über die den betreffenden Schaltschiene 18, 20 zugeordneten Gänge des Getriebes ausgelegt sind. Die Steuerung ist dabei insbesondere so, dass durch Bewegung des Schaltelements 30 zum Einlegen eines Ganges dieses einerseits eine Bewegung des Schaltfingers 28 bzw. eines von diesem diesem belasteten Ausgangselements zum Einlegen eines Gangs bewirkt, und andererseits über Oberflächenprofilierungen 58, 82 auf die Auslegehebel 36, 38 bzw. -finger 66, 68 bzw. Ausgangselemente 42, 44, die aktuell in anderen Schaltgassen des gleichen Getriebes bzw. Teilgetriebes wirken als der Schaltfinger 28 so einwirken, dass diese Auslegefinger bzw. Ausgangselemente in einer Auslege- und/oder Sperrstellung positioniert werden. Dabei ist vorzugsweise vorgesehen, dass nur die Schaltwelle bzw. das Schaltelement (von außen) belastet bzw. angetrieben werden muss, um die Relativbewegung der Ausgangselemente zu bewirken.

Es kann vorgesehen sein, dass, beispielsweise im Getriebe 10, für die jeweiligen Gänge Haltemechanismen, wie beispielsweise Rastierungen oder dergleichen, vorgesehen sind, die verhindern, dass ein Gang rausspringt, wenn der entsprechende Schaltmechanismus vom Schaltfinger entlastet wird, bzw. die Gefahr des Rausspringens verhindern. Die Haltekraft eines solchen Haltemechanismus kann insbesondere so sein, dass sie einerseits auf im Betrieb gegebenenfalls auftretende Schwingungen oder dergleichen abgestimmt ist, also eine ausreichende Haltekraft bietet, und andererseits ermöglicht, dass mittels der Nebenbetätigungseinrichtung bzw. eines Auslegehebels bzw. eines Auslegefingers der Gang ohne Verklemmen oder dergleichen auf verhältnismäßig einfache Art und Weise herausgenommen werden kann. Wenn der Schaltfinger, insbesondere nach einem Wählen, in einer anderen Schaltgasse wirkt, um einen dieser Schaltgasse zugeordneten Gang einzulegen, kann wiederum mittels der Nebenbetätigungseinrichtung bzw. einem Auslegehebel, bzw. einem Auslegefinger der zuvor geschaltete Gang bei der Bewegung des Schaltfingers in Schaltgassenrichtung mittels des Zusammenwirkens von Haupt- und Nebenbetätigungseinrichtung ausgelegt werden.

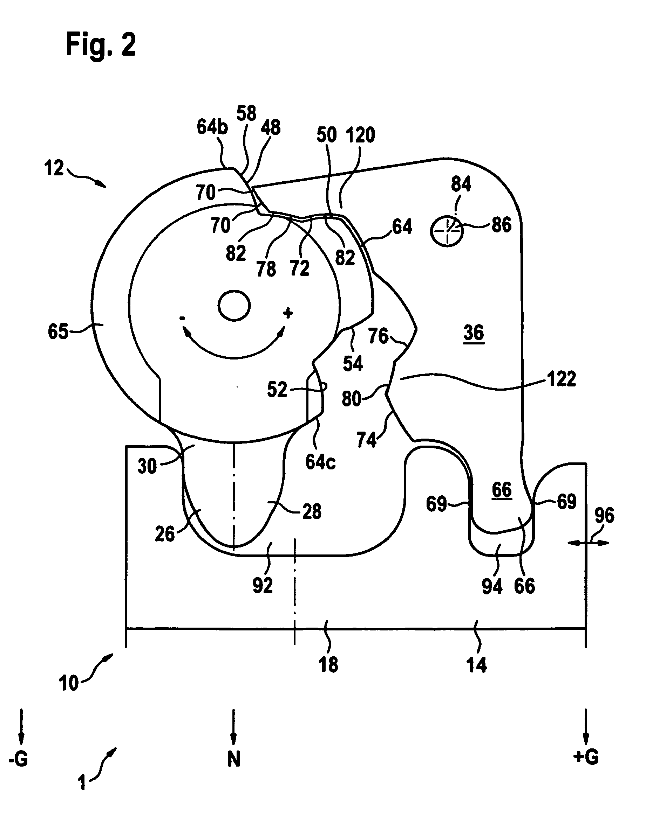

Ein Ausgangselement ist bei den Ausführungsbeispielen gemäß den Fig. 1 bis 11 der Schaltfinger; verbleibende Ausgangselemente werden bei den Ausführungsbeispielen gemäß den Fig. 1 bis 11 jeweils durch einen Auslegefinger 66, 68 gebildet. Die Fig. 12 bis 14 zeigen Ausführungsbeispiele, bei denen sämtliche Ausgangselemente von Auslegefingern gebildet werden. Gemäß dem Ausführungsbeispiel ist das Hauptbetätigungselement und das Nebenbetätigungselement, bzw. die Hauptbetätigungseinrichtung und die Nebenbetätigungseinrichtung bezüglich Toleranzen unabhängig von den Schaltschienen. Die die "Active Interlock"-Funktionalität ermöglichenden Geometrien sind bezüglich Toleranzen im Wesentlichen unabhängig vom Getriebe bzw. den Schaltschienen. In Fig. 2 der DE 102 06 561 A1 ist hingegen eine Gestaltung gezeigt, bei der die "Active Interlock"-Funktionalität nicht so toleranzunempfindlich auf die innere Getriebeschaltung bzw. die Schaltmechanismen übertragen werden kann, wie in Ausführungsbeispielen der Erfindung. Bei der Gestaltung nach Fig. 2 der DE 102 06 561 A1 sind die für die Auslege- und Sperrfunktion verantwortlichen Geometrien stark dem Toleranzeinfluss des Getriebes unterworfen. Sofern nämlich in dieser vorbekannten Gestaltung die Schaltschienen toleranzbedingt - insbesondere nach oben oder unten - relativ zueinander versetzt eingebaut sind, besteht die nicht unerhebliche Gefahr eines Verklemmens. Die Gefahr einer solchen versetzten Anordnung ist nicht gering, da sich bei der Montage des Getriebes, zu dem die Schaltschienen gehören, Toleranzen unter ungünstigen Umständen addieren.

Die Hauptbetätigungseinrichtung 22 bzw. das Hauptbetätigungselement 26 bzw. der Schaltfinger 28 kann mit einer Schaltschiene 18, 20 bzw. einem Schaltmechanismus 14, 16 derart in Wirkverbindung treten, dass ein entsprechender, diesen Schaltmechanismus 14, 16, bzw. dieser Schaltschiene 16, 18 zugeordneter Gang eingelegt werden kann bzw. eingelegt wird, wobei Auslegegeometrien, bzw. Auslegemechanismen bzw. Auslegehebel oder dergleichen in anderen Schaltgassen wirken bzw. wirken können, um dort gegebenenfalls eingelegte Gänge auszulegen, und/oder eine aktive Gangsperre für die Gänge zu bilden, die diesen anderen Schaltgassen zugeordnet sind. Dabei ist die Reihenfolge der schaltbaren Gänge nicht auf eine bestimmte Reihenfolge festgelegt, also insbesondere auf eine vorbestimmte Reihenfolge, die beim Hochschalten eingehalten werden muss, und eine vorbestimmte Reihenfolge, die beim Runterschalten eingehalten werden muss, sofern das Getriebe bzw. Teilgetriebe drei oder vier oder mehr Gänge aufweist, was bevorzugt der Fall ist. In Bezug auf das gleiche Getriebe bzw., sofern ein Doppelkupplungs- oder Parallelschaltgetriebe oder dergleichen gegeben ist, in Bezug auf das jeweils gleiche Teilgetriebe, wirken in allen Schaltgassen, in denen der Schaltfinger nicht zum Schalten bzw. Einlegen eines Ganges bzw. zum Verschieben einer Schaltschiene positioniert bzw. aktiv ist, Auslegegeometrien bzw. Auslegeelemente bzw. Nebenbetätigungseinrichtungen, um die dortigen, etwaigen geschalteten Gänge auszulegen bzw. aktiv zu sperren. Insbesondere ist vorgesehen, das die Oberflächenprofilierung 58 des Schaltelements und die der Nebenbetätigungseinrichtung bzw. der Auslegehebel solche Auslegegeometrien bilden, bzw. Bestandteil solcher sind. Es ist also vorzugsweise vorgesehen, dass das Auslegen von Gängen und das Einlegen von Gängen jeweils mittels getrennter Bauteile, die jedoch zusammenwirken, ausgeführt wird, und zwar insbesondere in Bezug auf verschiedene Schaltgassen. Es kann auch vorgesehen sein, dass mittels des Schaltfingers 28 aus einem über diese Schaltschiene geschalteten Gang in einen anderen dieser Schaltschiene geschalteten Gang geschaltet werden kann, wobei durch das Einlegen des neuen Ganges die Schaltschiene bzw. der entsprechende Schaltmechanismus so bewegt wird, dass der alte Gang während der Bewegung zum Einlegen ausgelegt wird. Vorteilhaft ist dabei vorgesehen, dass in einer Stellung, aus der in einer durch eine reine Schaltbewegung in einen Gang geschaltet werden kann, ein einer anderen Schaltgasse zugeordneter Gang eingelegt sein kann, der mittels Auslegegeometrien bzw. Auslegeelementen durch eine entsprechende Wirkverbindung ausgelegt wird, wenn in einer reinen Schaltbewegung in den neuen Gang geschaltet wird, wobei sichergestellt ist, dass der alte Gang ausgelegt ist, bevor der neue eingelegt ist. Die Umsetzung, die derartige Funktionalitäten ermöglicht und gegebenenfalls auch die vorteilhaften Funktionalitäten, wird im Rahmen dieser Offenbarung auch als "Active Interlock" bezeichnet. Eine "Active Interlock"-Grundfunktionalität ist, dass ein alter Gang vollständig ausgelegt sein muss, bevor ein neuer Gang eingelegt werden darf. Bei Gestaltungen mit verschiedenen Teilgetrieben, wie beispielsweise bei einem Parallelschaltgetriebe oder Doppelkupplungsgetriebe, bezieht sich dies auf das jeweilige Teilgetriebe.

Die Betätigungseinrichtung 12, die auch als "Active Interlock"-Kernmodul (Al-Kernmodul) bezeichnet werden kann, weist als Funktionselemente das Schaltelement 30 auf, welches über Rotation die "Active Interlock"-Funktionalität auf den bzw. mehrere oder die Auslegehebel 36, 38 überträgt bzw. übertragen kann. Der bzw. die Auslegehebel 36, 38 sind permanent im Eingriff mit der jeweiligen Schaltschiene 18, 20 bzw. dem jeweiligen Schaltmechanismus 14, 16. Die Schaltschienen 18, 20 bzw. die Schaltmechanismen 14, 16 sind Bestandteil eines jeweiligen Teilgetriebes bzw. des Getriebes bzw. einer inneren Getriebeschaltung.

Die Funktionsweise eines Parallelschaltgetriebes erfordert, dass innerhalb eines Teilgetriebes nur ein Gang (G) geschaltet sein darf. Bei anderen Gangstufen aufweisenden Getrieben, bei denen nicht-parallele Antriebsstrangabschnitte gegeben sind, kann die Forderung sogar derart sein, dass gleichzeitig nur ein Gang des (gesamten) Getriebes geschaltet sein darf. Bei den Ausführungsbeispielen gemäß den Fig. 1 bis 11 - und dies kann auch bei den Ausführungsbeispielen gemäß den Fig. 12 bis 14 gegeben sein, befinden sich deshalb die Auslegeflanken 48, 50, 52, 54 des Schaltelements 30 in bzw. auf einer anderen Ebene als der Schaltfinger 28. Es ist insbesondere vorgesehen, dass die Oberflächenprofilierung 58 - oder sofern mehrere Oberflächenprofilierungen 58 vorgesehen sind (vgl. Fig. 6), jeweils die Oberflächenprofilierung 58 (jeweils) in einer Ebene angeordnet sind, die in Achsrichtung zu der Ebene, in der der Schaltfinger 28 angeordnet ist, versetzt ist. Die Achsrichtung wird beispielsweise durch die Schwenkachse 88 bestimmt. Es kann vorgesehen sein, dass der Abstand einer Ebene, in der die Auslegeflanken 70, 72, 74, 76 angeordnet sind, von der Ebene, in der der Schaltfinger 28 angeordnet ist, dem Abstand zweier Schaltschienen 18, 20 des Getriebes 10 bzw. des gleichen Teilgetriebes im Wesentlichen entspricht, was insbesondere auch bei einer Gestaltung gemäß Fig. 6 und 7 bzw. 10 bzw. 11 gegeben sein kann. Hierdurch kann insbesondere erreicht werden, dass mittels der Oberflächenprofilierungen 58 bzw. mittels der Auslegeflanken 48, 50, 52, 54 Schaltmechanismen 14, 16 bzw. Schaltschienen 18, 20 zum Auslegen oder Sperren von Gängen eingewirkt werden kann, die demselben Getriebe 10 bzw. Teilgetriebe 10 zugeordnet sind, wie ein Schaltmechanismus 14, 16 bzw. eine Schaltschiene 18, 20, mit der der Schaltfinger zum Einlegen eines Ganges in Wirkverbindung tritt. Dies kann aber auch über andere Geometrien bzw. in anderer Weise erreicht werden. Es kann vorgesehen sein, dass die Oberflächenprofilierung 58 bzw. die Auslegeflanken 48, 50, 52, 54 des Schaltelements 30 in Achsrichtung sich soweit erstrecken, dass sie mit genau einem Auslegehebel jeweils zusammenwirken können. Es kann aber auch vorgesehen sein, dass sie in Achsrichtung so dimensioniert sind, dass sie mit mehreren Auslegehebeln zusammenwirken können, was im folgenden noch näher erläutert werden wird.

Es ist insbesondere vorgesehen, dass das Schaltelement 30 über seine Schwenkbewegung bzw. Rotation die "Active Interlock"-Funktionalität auf einen vorbestimmten bzw. den bzw. mehrere Auslegehebel überträgt.

Das Zusammenwirken der Oberflächenprofilierungen 58, 82, durch das sichergestellt wird, dass alle anderen Gänge des Getriebes 10, bzw. - bei Parallelschaltgetriebe oder Doppelkupplungsgetriebe - des gleichen Teilgetriebes ausgelegt sind, bevor der neue Gang mittel des Schaltfingers 28 eingelegt ist, wird insbesondere anhand der folgenden Fig. weiter verdeutlicht bzw. erläutert.

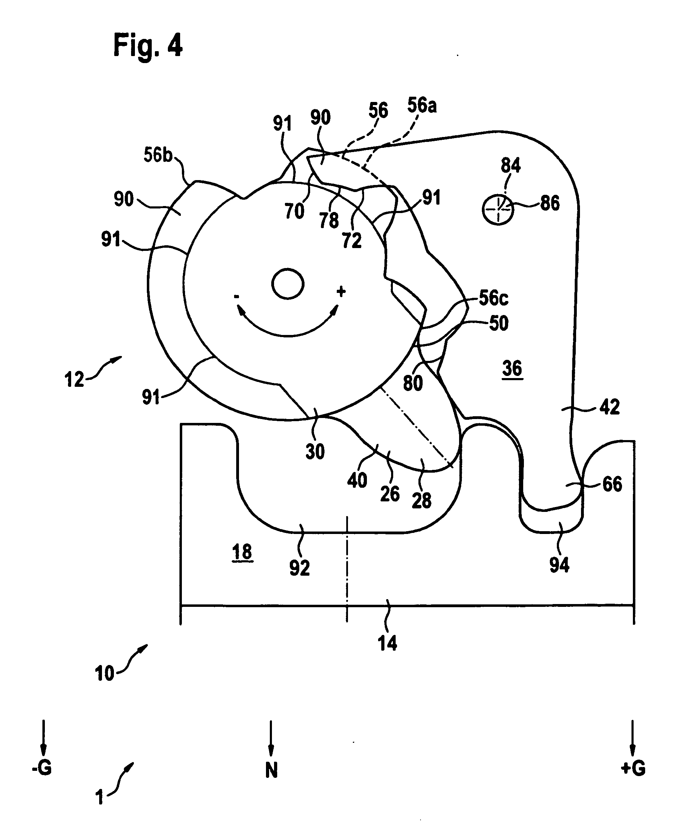

Fig. 2 zeigt die Gestaltung gemäß Fig. 1 in einer anderen Stellung. Gemäß Fig. 2 ist die Schaltschiene 18 bzw. der Schaltmechanismus 14 in einer Schaltposition "+G" geschaltet, so dass der der Schaltstellung "+G" der Schaltschiene 18 zugeordnete Gang des Getriebes eingelegt ist. Die Betätigungsposition ist in der Stellung gemäß Fig. 2 "neutral", entspricht also der Stellung, die auch in Fig. 1 gezeigt ist. Das Schaltelement 30 bzw. der Schaltfinger 28 ist also in seiner Neutralstellung. Durch die aus "neutral" verschobene Schaltschiene 18 wird bzw. wurde der Auslegehebel bzw. ein Abschnitt 120 des Auslegehebels 36 zum Schaltelement 30 hin geschwenkt. Dabei wurde insbesondere der Abschnitt 120 des Auslegehebels 36 zum Schaltelement 30 geschwenkt, an dessen Oberfläche ein Teil der Oberflächenprofilierung 82 des Auslegehebels 36 angeordnet ist, dem die Auslegeflanke 70, die Auslegeflanke 72 sowie die Sperrflanke 78 des Auslegehebels 36 zugeordnet ist. In Bezug auf die Neutral-Stellung des Schaltelements 30 wurde dabei, wie der Vergleich der Fig. 1 und 2 zeigt, der Auslegefinger 66 des Auslegehebels 36 vom Schaltelement 30 weggeschwenkt. Diese Stellung bzw. Schwenkstellung des Auslegehebels 36 wurde dadurch bewirkt, dass der Auslegehebel beim Bewegen bzw. Betätigen der Schaltschiene 18 in eine Gangstellung "+G" von dieser Schaltschiene 18 mitgenommen wurde. Dieses Mitnehmen ist so erfolgt, dass der Auslegefinger 66 mittels des Eingriffs dieses Auslegefingers in das Auslegemaul 94 von der Schaltschiene 18 mitgenommen wurde, und dabei ein Verschwenken des Auslegefingers 36 um die Schwenkachse 84 bewirkt hat. Die Bewegung der Schaltschiene 14 aus der in Fig. 1 gezeigten Neutralstellung in die in Fig. 2 gezeigte Gangstellung "+G" wurde - was in Fig. 2 nicht gezeigt ist - mittels des Schaltfingers 28 bewirkt. Der Schaltfinger wurde dabei, ausgehend von der in Fig. 1 gezeigten Neutral-Stellung (Betätigungsposition "neutral") in die in Fig. 4 gezeigte Gangstellung des Schaltfingers 28 in Schaltrichtung bewegt. Dabei hat der Schaltfinger 28 nach Überwindung des Leerhubs über das Schaltmaul bzw. die Flanke 100 die Schaltschiene derart belastet, dass diese in ihrer Bewegungsrichtung 96 in eine Gangstellung "+G" bewegt wurde, und über den bereits angesprochenen Eingriff mit dem Auslegefinger 66 den Auslegehebel in der bereits genannten Weise geschwenkt hat.

Bei dieser Bewegung hat der Schaltfinger 28 mit der Auslegefinger 66 bzw. der Auslegehebel 36 mit der gleichen Schaltschiene 18 zusammen gewirkt. Dieser Auslegefinger 66 wirkt dabei allerdings nicht, um eine Neutralstellung eines Schaltmechanismus zu bewirken; er wir vielmehr entsprechend einer Gangstellung ausgelenkt.

Gegenüber der in Fig. 4 gezeigten Gangstellung des Schaltfingers bzw. der Betätigungsposition "Gangstellung" bzw. "+G" ist der Schaltfinger in der in Fig. 2 gezeigten Stellung wieder zurück in seine Neutral-Position (Betätigungsposition "neutral") bewegt worden. Das Zusammenwirken von anderen Auslegehebelns 36, 38, die bei dem zuvor beschriebenen Einlegen eines Ganges mittels des Schaltfingers 28 anderen Schaltgassen zugeordnet sind, als der Schaltgasse, in welcher der Schaltfinger in vorbeschriebener Weise den Gang eingelegt hat, wird im folgenden noch beschrieben. Fig. 2 bzw. der Zusammenschau aus Fig. 2 und Fig. 4 kann entnommen werden, dass der Schaltfinger 28 bzw. das Schaltelement 30 aus seiner Gangstellung, in welcher es bewegt werden kann, um das Einlegen eines Ganges des Getriebes zu bewirken (vgl. Fig. 4) durch Bewegung in Schaltrichtung in seine Neutralstellung (vgl. Fig. 2) zurückbewegt werden kann, ohne dass durch diese Bewegung das Auslegen des zuvor eingelegten Ganges bewirkt wird (vgl. Fig. 2). Wenn der Schaltfinger 28 in der in Fig. 2 gezeigten Neutral-Stellung bzw. Mittellage ist, kann er zum Wählen, bzw. einer Wählrichtung bewegt werden. Die Wählrichtung erstreckt sich gemäß den Fig. 1 bis 5 senkrecht zur Bildebene. Der Schaltfinger kann also in Achsrichtung bzw. in Richtung der Achse 88, insbesondere translatorisch, bewegt werden. Es werden also zwischen dem Auslegehebel 36 bzw. den Auslegehebeln 36, 38 und dem Schaltelement 30, bzw. zwischen der Schaltschiene 18 bzw. den Schaltschienen 18, 20 und dem Schaltelement 30 ein bzw. mehrere Freiräume gebildet, die diese axiale Bewegung des Schaltelements 30 (in Wählrichtung) ermöglichen, also in der Darstellung gemäß Fig. 2 eine axiale Bewegung in die bzw. aus der Darstellungsebene. Das Schaltelement 30 bzw. der Schaltfinger 28 befindet sich dann in Neutral-Stellung. Es sei angemerkt, dass diese Freiräume nicht zu verwechseln sind mit den bereits im Rahmen der Fig. 1 angesprochenem Freiraum 90. Mit den zuvor im Zusammenhang mit der Fig. 2 angesprochenen Freiräumen ist vielmehr gemeint, dass die Auslegehebel 36, 38 bzw. die Schaltschienen 18, 20 so gestaltet und angeordnet sind, dass das Schaltelement 30 mit dem Schaltfinger 28 in der Wählrichtung bewegt werden kann, wenn dieses Schaltelement 30 bzw. dieser Schaltfinger 28 in seiner Neutral-Stellung ist. Das Schaltelement 30 bzw. der Schaltfinger wird also insbesondere nicht an dieser Bewegung in der Richtung durch ein Anschlagen an einem der Auslegehebel 36, 38 bzw. der Schaltschienen 18, 20 gehindert.

Durch eine derartige Bewegung des Schaltelements 30 bzw. des Schaltfingers 28 in Wählrichtung kann das Schaltelement so bewegt werden, dass eine in Achsrichtung des Schaltelements 30 gelegene Ebene, in welcher eine Oberflächenprofilierung 58 angeordnet ist, so positioniert wird, dass sie im Wesentlichen in einer Ebene mit dem Auslegehebel 36 positioniert ist, wobei der in einer dazu parallelen Ebene angeordnete Schaltfinger in Wählrichtung so positioniert wird, dass er mit einem anderen Schaltmechanismus 16, wie beispielsweise einem benachbarten, bzw. mit einer anderen Schaltschiene 20, wie beispielsweise einer benachbarten, zusammenwirken kann. Das Schaltelement 30 kann in Wählrichtung aber auch so positioniert werden, dass der Schaltfinger 28 mit der Schaltschiene 18 bzw. dem Schaltmechanismus 14 zusammenwirken kann, bzw. in der entsprechenden Ebene dieser Schaltschiene angeordnet ist, und die Profilierung 58 des Schaltelements 30 in einer hierzu parallelen Ebene angeordnet ist, in welcher es mit einem anderen Auslegehebel 20 zusammenwirken kann.

Zunächst soll der Fall betrachtet werden, dass das Schaltelement in einer solchen Wählstellung ist, bei der die Profilierung 58 bzw. die Auslegeflanken 48, 50 des Schaltelements 30 so positioniert sind, dass sie im Wesentlichen mit dem Auslegehebel 36 in einer Ebene liegen (Schaltelement auf Ebene der Auslegeflanken betrachtet; Fig. 2). In diesem Fall ist der Schaltfinger 28 in einer parallelen Ebene angeordnet, die beispielsweise so ist, dass er mit einem anderen, vom Auslegehebel 36 verschiedenen Auslegehebel 38 zusammenwirken kann, um beispielsweise einen Gang einzulegen.

Auf der angesprochenen Ebene der Auslegeflanken betrachtet stellt sich insbesondere folgender Fall ein: Bei Rotation bzw. einem Verschwenken des Schaltelements 30 wird je nach Schwenk- bzw. Drehrichtung dieses Schaltelements 30 der Auslegehebel 36 über Kontakt an den Flanken 48 und 70 bzw. 50 und 72 gleich- bzw. gegensinnig bewegt. Wenn in der in Fig. 2 gezeigten Stellung das Schaltelement 30 im Uhrzeigersinn geschwenkt wird, tritt die Auslegeflanke 48 des Schaltelements mit der Auslegeflanke 70 des Auslegehebels 36 so in Kontakt, dass der Auslegehebel 36 über die Auslegeflanke 70 belastet wird. Die Auslegeflanke 70 ist in Bezug auf die Schwenkachse 84 des Auslegehebels 36 so angeordnet, dass dabei der Auslegehebel 36 ebenfalls im Uhrzeigersinn geschwenkt wird. Wenn das Schaltelement 30 im Gegenuhrzeigersinn geschwenkt wird, tritt bei der in Fig. 2 gezeigten Stellung die Auslegeflanke 50 des Schaltelements 30 so mit der Auslegeflanke 72 des entsprechend einer Gangstellung "+G" verschwenkten Auslegehebels 36 so in Kontakt, dass bei der beim Verschwenken des Schaltelements 30 entgegen dem Uhrzeigersinn der Auslegehebel 36 im Uhrzeigersinn verschwenkt wird. Hierzu ist die Auslegeflanke 72 entsprechend in Bezug auf die Schwenkachse 84 des Auslegehebels 36 angeordnet.

Nicht gezeigt in den Fig. 1 bis 5 ist der korrespondierende Fall, dass die Schaltschiene 18 entsprechend der anderen ihr zugeordneten Gangstellung "-G" positioniert ist. Bei dieser Stellung wäre - sofern der Schaltfinger ebenfalls in "Neutral" positioniert wäre - der Auslegefinger 66 zum Schaltelement 30 hin geschwenkt, und der Bereich 120, in dem die Oberflächenprofilierung bzw. ein Teil der Oberflächenprofilierung die Flanken 70 und 72 des Auslegehebels 36 ausbildet, vom Schaltelement 30 weggeschwenkt, bzw. ein anderer Abschnitt 122 des Auslegehebels 36, an dessen Oberfläche die Auslegeflanken 74, 76 ausgebildet werden, zum Schaltelement 30 hingeschwenkt. Bei einer derartigen, entsprechend einem Gang "-G" ausgelenkten Stellung des Auslegehebels 36, würde bei einem Verschwenken des Schaltelements 30, ausgehend aus der Neutral-Stellung im Uhrzeigersinn die Auslegeflanke 54 des Schaltelements 30 derart mit der Auslegeflanke 76 des Auslegehebels 36 in Kontakt treten, dass der Auslegehebel 36 entgegen dem Uhrzeigersinn geschwenkt wird. Die Auslegeflanke 76 ist entsprechend bezüglich der Schwenkachse 84 des Auslegehebels 36 positioniert. Ausgehend von dieser entsprechend der Gangstellung "-G" ausgelenkten Stellung des Auslegehebels 36 würde bei einem Verschwenken des Schaltelements 30 im Gegenuhrzeigersinn die Auslegeflanke 52 des Schaltelements 30 derart mit der Auslegeflanke 74 des Auslegehebels in Kontakt treten, dass dieser Auslegehebel 36 im Gegenuhrzeigersinn verschwenkt wird. Das Verschwenken des Schaltelements 30 bewirkt also in jedem Fall ein Verschwenken dieses entsprechend einer Gangstellung "+G" bzw. "-G" der Schaltschiene 18 ausgelenkten Auslegehebels 36, die so ist, dass dieser Auslegehebel 36 in Richtung der Neutral-Stellung bewegt wird, bzw. von diesem Schwenken des Auslegehebels bzw. der Rotation des Auslegehebels 36, die entsprechend einer Gangstellung "+G" bzw. "-G" ausgelenkte Schaltschiene in Richtung ihrer Neutral-Stellung bewegt wird. Durch entsprechende Rotation bzw. Schwenkung des Auslegehebels 36 wird also in jedem Fall die Schaltschiene 18 wieder zurück in ihre Stellung "neutral" bewegt. Sofern, was auch möglich ist, ein Auslegehebel, der einer Schaltgasse zugeordnet ist, in der der Schaltfinger 28 aktuell nicht positioniert ist, bzw. die einem solchen Auslegehebel zugeordnete Schaltschiene bereits in einer Neutral-Stellung befindet, kann bevorzugt vorgesehen sein, dass ein Verschwenken des Schaltelements die Stellung dieses Auslegehebels bzw. dieser Schaltschiene im Wesentlichen unverändert lässt.

Eine Grundfunktionalität eines Parallelschaltgetriebes bzw. eine Grundfunktionalität eines "Active Interlocks" ist, dass ein alter Gang vollständig ausgelegt sein muss, bevor ein neuer Gang eingelegt werden darf. Damit auch unter Einfluss von Toleranzen und Verdrehspielen das Auslegen der Gänge über die Schaltwelle 48 und den bzw. mehrere Auslegehebel 36 dieser Forderung gerecht wird, ist der Drehwinkel an dem Schaltelement 30 zum Auslegen der Gänge kleiner als der Drehwinkel zum Einlegen der Gänge. Dabei ist der Auslege- und Einlegeweg an der Schaltschiene 18, 20 jeweils gleich.

Es ist also insbesondere vorgesehen, dass durch eine Bewegung des Schaltelements 30 bzw. eine dabei ausgeführte Bewegung des Schaltfingers 28 in Schaltrichtung, sowohl das Auslegen alter Gänge als auch das Einlegen eines neuen Ganges bewirkt werden kann, und zwar in Bezug auf das gleiche Getriebe bzw. Teilgetriebe. Diese Unterscheidung zwischen Getriebe bzw. Teilgetriebe, in denen Gänge ausgelegt werden sollen, wird insbesondere im Hinblick auf unterschiedliche Getriebebauarten gemacht. Bei Getrieben, bei denen gleichzeitig nur ein Gang eingelegt werden darf, wird sichergestellt, dass sämtliche Gänge, die anderen Schaltgassen zugeordnet sind, ausgelegt sind. Bei Getrieben, bei denen in unterschiedlichen Teilgetrieben, jeweils ein Gang geschaltet sein darf, allerdings nicht jeweils mehrere, wie beispielsweise bei einem Parallelschaltgetriebe, wird jeweils sichergestellt, dass in Bezug auf ein solches Teilgetriebe jeweils nur ein Gang geschaltet sein kann. Es ist also insbesondere vorgesehen, dass in Bezug auf ein solches Getriebe bzw. Teilgetriebe, in dem nur ein Gang geschaltet werden darf, durch eine stetige Bewegung bzw. eine, insbesondere stetige, Bewegung in Schaltrichtung des Schaltelements 30 bzw. des Schaltfingers 28 einerseits ein Zielgang eingelegt werden kann, und andererseits etwaige geschaltete Gänge dieses Teilgetriebes bzw. Getriebes ausgelegt werden, bzw. sichergestellt wird, dass sie ausgelegt sind, wobei das Schaltelement in Bezug auf die Schaltschiene bzw. den Schaltmechanismus zum Einlegen eines Ganges anders übersetzt ist, als zum Auslegen dieses Ganges. Diese Übersetzung meint nicht die Übersetzung des Getriebes, die unterschiedlichen Gangstufen zugeordnet ist, sondern vielmehr, dass eine Bewegung des Schaltelements 30 beim Einlegen eines vorbestimmten Ganges des Getriebes in eine Bewegung einer Schaltschiene oder dergleichen, der dieser Gang des Getriebes zugeordnet ist, übersetzt wird, die von der Übersetzung zwischen der Bewegung dieses Schaltelements, und der Bewegung dieser Schaltschiene verschieden ist, die gegeben ist, wenn mittels dieser Gang mittels einer Bewegung wieder ausgelegt wird, und zwar insbesondere mittels eines Auslegehebels.

Im folgenden soll nun der Fall erläutert werden, der sich einstellt, wenn das Schaltelement so positioniert ist, dass der Schaltfinger 28 in der Ebene des entsprechend der Gangstellung "+G" der Schaltschiene 18 ausgelenkten Auslegehebels 36 positioniert ist (Schaltelement auf Ebene des Schaltfingers betrachtet). Gegenüber dem vorgenannten Fall ist das Schaltelement 30 also hier in Wählrichtung verlagert, wobei unterstellt wird, dass die dortige Stellung der Schaltschiene der in Fig. 2 gezeigten entspricht. Wenn das Schaltelement 30 in "-"-Richtung bzw. aus einer Neutral-Stellung in Schaltrichtung in einen Bereich zum Einlegen eines Ganges "-G" der Schaltschiene 18 bewegt wird (dies entspricht in Fig. 2 einem Verschwenken im Uhrzeigersinn; bzw. Rotation in "-"-Richtung), legt der Schaltfinger 28 den - mittels der Schaltschiene 18 geschalteten - Gang (+G) aus. Der Schaltfinger nimmt dabei über Eingriff in das Schaltmaul 92 bzw. die Flanke 98 die Schaltschiene 18 mit, und verlagert diese translatorisch. Durch den Eingriff des Auslegefingers 66 in das Auslegemaul 94 folgt dabei der Auslegehebel 36 der Bewegung derart, dass der Auslegehebel 36 verschwenkt wird, und im Wesentlichen in eine Neutral-Stellung des Auslegehebels 36 überführt wird. Wenn auf diese Weise die Schaltschiene 18 in eine Neutral-Stellung positioniert ist, in welcher kein Gang des Getriebes über diese Schaltschiene bzw. den zugeordneten Schaltmechanismus 14 eingelegt ist, und das Schaltelement 30 weiter verschwenkt wird, wird dann der Schaltfinger 28 einen Stellungsbereich erreichen, in dem bewirkt wird, dass der andere über die Schaltschiene 18 einlegbare Gang, der Gang "-G" dieser Schaltschiene 18 bzw. des zugeordneten Schaltmechanismus 14, eingelegt wird. Auch dabei folgt der Auslegehebel 36 der Bewegung der Schaltschiene 18 derart, dass er weiter verschwenkt wird.

Der Schaltfinger 28 kann allerdings auch dann, wenn die Schaltschiene 18 ihre Neutral-Stellung erreicht hat, zurück in seine Neutral-Stellung geschwenkt werden, so dass die in Fig. 1 gezeigte Position erreicht ist. Dies kann insbesondere so sein, dass auf diese Weise erreicht wird, dass sämtliche Gänge des Teilgetriebes bzw. Getriebes ausgelegt sind.

Wenn der Schaltfinger 28 bzw. das Schaltelement 30 in Richtung seiner Betätigungsposition "+G", ausgehend von der in Fig. 2 gezeigten Stellung verschwenkt wird bzw. rotiert (Rotation in "+"-Richtung; auf Ebene des Schaltfingers betrachtet), wird kein Auslegen des - mittels der Schaltschiene 18 - geschalteten Gangs "+G" bewirkt. Der Schaltfinger 28 bewegt sich hierbei in die Richtung der noch geschalteten Schaltschiene 18.

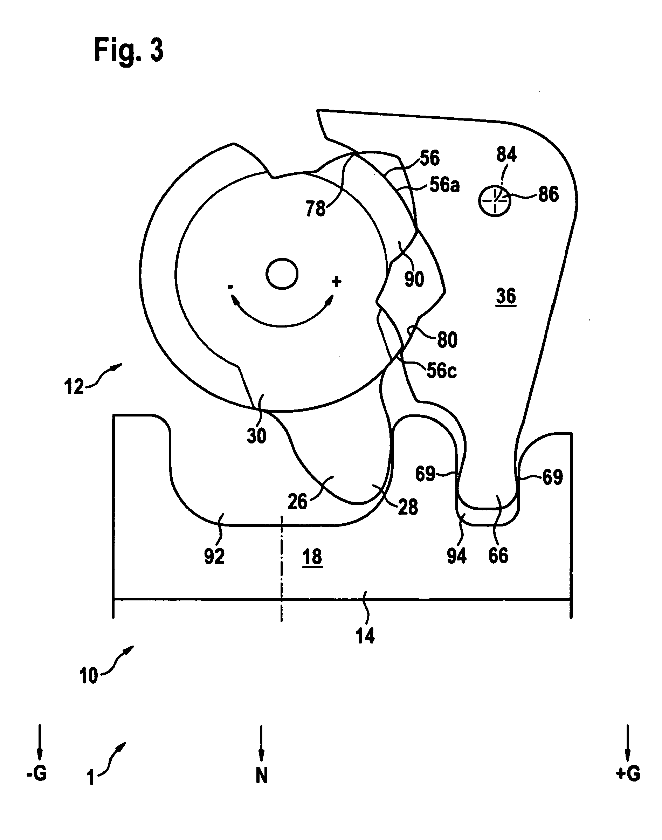

Fig. 3 zeigt eine weitere Stellung der in den Fig. 1 und 2 gezeigten Gestaltungen. Die Schaltposition ist hier "neutral", so dass die Schaltschiene 14 in einer Stellung ist, bei der mittels dieser Schaltschiene bzw. des zugeordneten Schaltmechanismus 14 kein Gang des Getriebes eingelegt ist. Die Betätigungsposition, also die Stellung bzw. Position des Schaltelements 30, bzw. des Schaltfingers 28, bzw. des Hauptbetätigungselements 26 ist hier so, dass der Schaltfinger 28 aus einer in den Fig. 1 und 2 gezeigten Neutral-Position in Richtung eines Stellungsbereichs ausgelenkt ist, dem eine eingelegte Gangstellung zugeordnet ist. Der Schaltfinger ist allerdings noch nicht in diesem Stellungsbereich; er ist vielmehr in einer Stellung, bei der eine weitere Bewegung in Richtung dieses Stellungsbereichs dazu führen würde, dass der Schaltfinger die Schaltschiene in Richtung der Gangstellung "+G" belastet. Der Schaltfinger hat also seinen "Leerhub", der zwischen seiner Neutral-Stellung in Richtung "+G" gegeben ist, gerade überwunden, und würde bei weiterem Verschwenken bzw. bei weiterer Bewegung die Schaltschiene 18 mitnehmen. Diese Betätigungsposition bzw. Stellung wird auch als "+Neutral"-Position des Schaltfinger bezeichnet. In entsprechender Weise kann, was nicht gezeigt ist, eine "-Neutral"-Stellung des Schaltfingers angefahren werden.

Fig. 4 zeigt eine weitere Stellung der Gestaltung gemäß den Fig. 1 bis 3. In der Stellung gemäß Fig. 4 ist die Schaltposition und die Betätigungsposition jeweils "+G". Das Hauptbetätigungselement 26 bzw. der Schaltfinger 28 ist also in einer Stellung bzw. einem Stellungsbereich, bei deren Erreichen ein Gang des Getriebes 10 eingelegt ist, bzw. der einer eingelegten Gangstellung des Getriebes zugeordnet ist. Dies ist hier der Schaltschiene 18 bzw. der dem Schaltmechanismus 14 zugeordnete Gang "+G". Die Schaltschiene 18 bzw. der korrespondierende Schaltmechanismus 14 ist ebenfalls in einer Gangstellung in bzw. durch welchen bewirkt wird, dass ein Gang des Getriebes eingelegt ist. Bei dem Ausführungsbeispiel gemäß den Fig. 1 bis 5, und das kann auch für die Ausführungsbeispiele gemäß den Fig. 6 bis 11 gelten, und gegebenenfalls auch für die Ausführungsbeispiele gemäß den Fig. 12 bis 14, korrespondiert mit der Stellung einer jeweiligen Schaltschiene jeweils eine entsprechende Stellung eines jeweiligen Auslegehebels, da der Auslegehebel von der zugeordneten Schaltschiene mitgenommen wird bzw. umgekehrt.

Folglich ist auch der Auslegehebel 36 in der Gestaltung gemäß Fig. 4 in einer Stellung, die hier als "+G" bezeichnet werden kann. In Fig. 4 ist das Schaltelement 30 so positioniert, dass der Schaltfinger 28 im Wesentlichen in einer Ebene mit dem Auslegehebel 36 positioniert ist. Es ist bereits angesprochen worden, dass das Schaltelement 30 in der Ebene des Schaltfingers 28 einen bzw. mehrere Freiräume 90 aufweist, die ermöglichen, dass ein Auslegehebel in diesen Freiraum schwenkt. In Fig. 4 ist gezeigt, dass der Auslegehebel in den Freiraum 90 schwenkt, welcher nur auf der ebene des Schaltfingers 28 existiert. Das Sperrteil bzw. der Sperrzylinder 56 des Schaltelements 30 ist gemäß Fig. 4 in einer zum Auslegehebel 36 versetzten Ebene angeordnet, so dass der Auslegehebel mit seiner Sperrflanke 78 bzw. 80 nicht an dem Sperrteil 56 des Schaltelements 30 anliegt bzw. anschlägt, sondern vielmehr, wie bereits erwähnt, in einen Freiraum 90 des Schaltelements 30 schwenken kann. Das Zusammenwirken von einem in einer Ebene positionierten Auslegehebel 38, die versetzt zur Ebene des Schaltfingers 28 angeordnet ist, ist in Fig. 4 nicht gezeigt, und wird nachfolgend anhand der Fig. 5 erläutert werden. Wie angesprochen, schwenkt der Außenhebel 36, der in der Ebene des Schaltfingers 28 gelegen ist, in den Freiraum 90 des Schaltelements 30, wenn der Schaltfinger 28 in einer Stellung ist, deren eingelegter Gang des Getriebes zugeordnet ist, also gemäß Fig. 4 in einer Betätigungsposition "+G".

In entsprechender Weise schwenkt der in der Ebene des Schaltfingers 28 jeweils gelegene Auslegehebel 36 bzw. 38 ebenfalls in einen Freiraum 90 des Schaltelements 30, wenn der Schaltfinger 28 in einer der gleichen Schaltgasse zugeordneten anderen Gangstellung ist, also - was in Fig. 4 nicht gezeigt ist - jeweils die Gangstellung "-G" bewegt wird. Da dabei - ausgehend von Fig. 4 - die dortige Schaltschiene 18 nach links bis zur Stellung "-G" verlagert ist, ist der Auslegehebel entsprechend verschwenkt. Während der in Fig. 4 gezeigten Stellung der Auslegehebel 36 mit seiner Sperrflanke 78 in den Freiraum 90 schwenkt, würde er bei der angesprochenen "-G"-Gangstellung mit seiner Sperrflanke 80 in den Freiraum 90 schwenken.

Der Freiraum 90 existiert an dem Schaltelement 30 nur auf bzw. in der Ebene des Schaltfingers 28, so dass die bzw. alle verbleibenden Auslegehebel, die dem gleichen Getriebe bzw. - insbesondere im Falle eines Parallelschaltgetriebes bzw. Doppelkupplungsgetriebes, dem gleichen Teilgetriebe zugeordnet sind, nicht in einen solchen Freiraum 90 schwenken können, so dass mittels diesen - insbesondere bei einer stetigen Bewegung des Schaltfingers 28 in Schaltrichtung und insbesondere getrieben vom Schaltelement 30 - die Gänge (aller) anderen Schaltgassen des gleichen Getriebes bzw. Teilgetriebes gesperrt und/oder ausgelegt werden. Das Zusammenwirken dieser anderen Auslegehebel mit der Hauptbetätigungseinrichtung bzw. dem Schaltelement 30 wird im Folgenden anhand der Fig. 5 erläutert. Der Freiraum 90 ist im Wesentlichen so gestaltet, dass das Schaltelement 30 bzw. der Schaltfinger 28, ausgehend von der Gangstellung, zurück in seine Neutrallage verschwenkt werden kann, ohne dass der Auslegehebel 36 dabei bewegt, bzw. mitgeschwenkt, bzw. mitgenommen wird. Dies wird im Ausführungsbeispiel gemäß den Fig. 1 bis 5, das gleiche kann auch für die verbleibenden Ausführungsbeispiele gelten, im Wesentlichen dadurch erreicht, dass in dem Bereich, in den der Auslegehebel 36 geschwenkt ist, im Wesentlichen keine Profilierungen der Mantelfläche gegeben sind, die so sind, dass bei einem Verschwenken des Schaltelements der Auslegehebel 36 belastet werden würde. Eine besonders geeignete, in Fig. 4 gezeigte Oberflächengestaltung kann so sein, dass die Mantelfläche des Schaltelements 30 in der Ebene des Schaltfingers 28 in den Bereichen, in denen der Auslegehebel 36 in den Freiraum 90 eingreifen kann, im Wesentlichen zylindrisch, bzw. nach Art eines Zylindersegments gestaltet ist.

Fig. 5 zeigt die Eingriffsverhältnisse des oben beschriebenen Zustandes zur benachbarten Schaltschiene im gleichen Teilgetriebe bzw. Getriebe. In Fig. 5 ist insbesondere einerseits die anhand der Fig. 4 erläuterte Stellung gezeigt, bei der der Schaltfinger 28 mit dem Auslegehebel 36 in einer Ebene positioniert ist, wobei dieser Auslegehebel 36 in die Schaltschiene 18 eingreift, und wobei der Schaltfinger 28 und die Schaltschiene 18 bzw. der Schaltmechanismus 14 jeweils in einer "+G"-Stellung sind; andererseits ist insbesondere ein weiterer Auslegehebel 38 der Nebenbetätigungseinrichtung 24 gezeigt, der dem gleichen Getriebe bzw. - insbesondere im Fall eines Parallelschaltgetriebes bzw. Doppelkupplungsgetriebe - demselben Teilgetriebe zugeordnet ist. Der Auslegehebel 38 greift in eine benachbarte bzw. versetzt zur Schaltschiene 18 angeordnete Schaltschiene 20 mit seinem Auslegefinger 68, der hier ein Ausgangselement 44 bildet, ein. Hierzu weist die Schaltschiene 20 in bereits oben beschriebener Weise einen zweiten Ausschnitt 94 auf. Die Schaltschiene 20 weist ferner einen bereits oben beschriebenen ersten Ausschnitt 92 auf. Der Schaltfinger 28 ist gemäß Fig. 5 allerdings in dem ersten Ausschnitt bzw. Schaltmaul 92 der Schaltschiene 18 angeordnet, und nicht in dem ersten Ausschnitt bzw. Schaltmaul 92 der Schaltschiene 20. Der Schaltfinger 28 wirkt also in einer Schaltgasse, in welcher die der Schaltschiene 18 bzw. dem Schaltmechanismus 14 zugeordnete Gänge eingelegt werden können. Der Schaltschiene 20 ist einem vom Schaltmechanismus 14 verschiedenen Schaltmechanismus 16 zugeordnet.

Während der Schaltfinger 28 die Schaltschiene 18 von der "Neutral"-Stellung dieser Schaltschiene 18 in Richtung der Gangstellung "+G" bzw. "-G", dieser Schaltschiene 18 bewegt, wird über den Sperrzylinder 56 und die Sperrflanke 78 bzw. die Sperrflanken 78, 80 ein ungewolltes Mitschleppen der benachbarten Schaltschiene 20 des gleichen Teilgetriebes bzw. des Getriebes verhindert. Wie angesprochen, ist die Schaltschiene 18 in Fig. 5 in einer Stellung gezeigt, in der der ihr zugeordnete Gang "+G" eingelegt ist, und der Schaltfinger 28 in einer entsprechenden Stellung, bzw. einem entsprechenden Stellungsbereich bzw. einer Betätigungsposition "+G" positioniert ist. Fig. 5 kann entnommen werden, dass in dieser Betätigungsposition "+G" des Schaltfingers 28 die Sperrflanke 78 des (anderen) Auslegehebels 38 mit dem Sperrzylinder 56 bzw. dessen Abschnitt 56a zusammenwirkt, um ein Schwenken des Auslegehebels 38 in einer Orientierung der Schwenkrichtung zu verhindern. Diese Orientierung ist in der Gestaltung gemäß Fig. 5 so, dass über das genannte Zusammenwirken eine Schwenkbewegung des Auslegehebels 38 im Gegenuhrzeigersinn verhindert bzw. blockiert wird, und insbesondere dadurch, dass die Sperrflanke 78 an das Sperrteil 56 bzw. deren Abschnitt 56a anschlägt.

In entsprechender Weise wird durch das Zusammenwirken der Sperrflanke 80 des Auslegehebels 38 mit dem Sperrteil 56 bzw. dessen Abschnitt 56c eine Schwenkbewegung des Auslegehebels 38 in der entgegen gesetzten Orientierung - hier im Uhrzeigersinn - verhindert bzw. blockiert. Dies wird insbesondere dadurch bewirkt, dass das Sperrteil 56 bzw. dessen Abschnitt 56c einen Anschlag für die Sperrflanke 80 bildet.

Das Sperrteil 56 bzw. dessen Abschnitte 56a und 56c sowie die Sperrflanken 78 und 80 sind jeweils so gestaltet und ausgelegt, dass eine (Schwenk-)Bewegung des Auslegehebels 38 verhindert wird, eine Schwenkbewegung des Schaltelements 30 allerdings ermöglicht wird. Die Auslegung ist hier ferner so, dass diese Sperrwirkung in einem gewissen (Schwenk-)Stellungsbereich des Schaltelements 30 aufrechterhalten wird.

Dies wird in dieser beispielhaften Ausführungsform dadurch erreicht, dass sich das Sperrteil 56 bzw. dessen Abschnitte 56a und 56c jeweils über einen gewissen Bereich konzentrisch zur Schwenkachse 88 des Schaltelements 30 erstrecken; die Sperrflanken 78 und 80 des Auslegehebels 38 erstrecken sich hingegen nicht - konzentrisch - zur Schwenkachse 84 des Auslegehebels 38.

Dadurch kann das Schaltelement 30 geschwenkt werden, ohne dass es an der Schwenkbewegung durch den Auslegehebel 38 gehindert wird. Das Schaltelement 38 kann also beispielsweise auch aus der in Fig. 5 gezeigten Stellung in seine Betätigungsposition "Neutral" bzw. in seine "Neutral"-Stellung bewegt werden, wobei zumindest über einen gewissen Schwenkbereich die Sperrstellung des Auslegehebels 38 beibehalten wird.

Die angesprochene Sperrstellung des Auslegehebels wird bereits erreicht, bevor das Schaltelement 30 seine Betätigungsposition "+G" erreicht hat, so dass vor dem Einlegen des Ganges "+G" der der Schaltschiene 18 zugeordnet ist, der Auslegehebel 38 in einer Sperrstellung ist. Dies wird auch aus Fig. 3 deutlich, wobei hierzu allerdings anzumerken ist, dass dieser dort gezeigte Auslegehebel 36 sich in der Ebene des Schaltfingers befindet, und nicht, wie der Auslegehebel 38 in Fig. 5, in einer dazu parallel angeordneten Ebene. Der Auslegehebel 36 befindet sich also in Bezug auf die Axialrichtung des Schaltelements 30 an einer Stelle, an der ein Freiraum 90 gegeben ist. Auch in der Gestaltung gemäß Fig. 3 ist allerdings ein - dort nicht gezeigter - Auslegehebel 38 vorgesehen, der mit der Oberflächenprofilierung 58, die in einer zum Auslegefinger 28 parallelen Ebene des Schwenkteils angeordnet ist, zusammenwirken kann. Da in dem Ausführungsbeispiel nach den Fig. 1 bis 5 die Schwenkachsen 84 der Auslegehebel - zumindest in Bezug auf das gleiche Teilgetriebe, wenn beispielsweise ein Parallelschaltgetriebe oder ein Doppelkupplungsgetriebe gegeben ist - konzentrisch sind, wirkt in der parallelen Ebene ein Auslegehebel mit der Profilierung 58 des Schaltelements 30 zusammen. Unter Berücksichtigung dessen verdeutlicht Fig. 3, dass dort bereits ein an der parallelen Ebene angeordneter Auslegehebel mit der Oberflächenprofilierung 58 des Schwenkteils zusammenwirkt, und zwar so, dass bereits in der dort gezeigten Stellung der Auslegehebel 38 über das Zusammenwirken der Sperrflanke 78 mit dem Sperrteil 56 bzw. dessen Abschnitt 56a, und über das Zusammenwirken der Sperrflanke 80 mit dem Sperrteil 56 bzw. dessen Abschnitt 56c an einem Verschwenken gehindert wird, bzw. in einer Sperrstellung ist.

In der Fig. 3 ist allerdings, wie oben angesprochen, der Schaltfinger 28 nicht in einer einem Gang zugeordneten Stellung, sondern vielmehr in der Stellung "+Neutral", so dass die dortige Schaltschiene 18 noch in einer Neutralstellung ist. Wenn ausgehend von der in Fig. 3 gezeigten Stellung in die in Fig. 5 gezeigte Stellung weitergeschaltet wird, schwenkt der in die Schaltschiene 18 eingreifende Auslegehebel 36 in den Freiraum 90 des Schaltelements 30, und der in einer versetzt dazu angeordneten Ebene angeordnete Auslegehebel 38 wird über das Zusammenwirken der Sperrflanke 78 mit dem Abschnitt 56a des Sperrteils 56 bzw. das Zusammenwirken der Sperrflanke 80 des Auslegehebels 38 mit dem Abschnitt 56c des Sperrteils 56 weiter in einer Sperrstellung gehalten. Es wird also sichergestellt, dass bereits vor dem Erreichen der Gangstellung - und hier während einer Bewegung des Schaltfingers in Schaltrichtung - über das Zusammenwirken der Hauptbetätigungseinrichtung und der Nebenbetätigungseinrichtung bzw. hier des Auslegehebels 38 - die Gänge in den Schaltgassen, in denen nicht der Zielgang liegt, ausgelegt sind bzw. gesperrt werden (hier mittels der Schaltschiene 20).

Entsprechend sind die Verhältnisse, wenn die Schaltschiene 18 - was in Fig. 5 nicht gezeigt ist - in einer Gangstellung des anderen ihr zugeordneten Ganges (Gang "-G") ist, bzw. aus der Neutrallage in diese geschaltet wird. Dabei wirkt allerdings die Sperrflanke 78 des Auslegehebels 36 mit dem Abschnitt 56b des Sperrteils 56, und die Auslegeflanke 80 des Auslegehebels 36 mit dem Abschnitt 56a des Sperrteils 56 zum Sperren zusammen.

Die wenigstens eine Oberflächenprofilierung 58 der Hauptbetätigungseinrichtung 22 bzw. des Schaltelements 30 und die Oberflächenprofilierungen 82 Nebenbetätigungseinrichtung 24 bzw. der Auslegehebel 66, 68 sind jeweils symmetrisch ausgebildet, was beispielsweise anhand der Fig. 1 deutlich zu erkennen ist. Die Oberflächenprofilierungen 58, 82 sind vorteilhafter Weise zumindest in den Bereichen symmetrisch ausgebildet, die mit einer anderen Oberflächenprofilierung zusammenwirken.

Wie die gestrichelte Linie 108 in Fig. 1 verdeutlicht, die eine Symmetrielinie bzw. eine Symmetrieebene in Bezug auf die Oberflächenprofilierung bzw. die Oberflächenprofilierungen 58 des Schaltelements 30 andeuten soll, ist diese Oberflächenprofilierung 58 in Bezug auf die Symmetrielinie bzw. -ebene 108 symmetrisch gestaltet. Diese Symmetrielinie bzw. -ebene steht radial zur Schwenkachse 88 des Schaltelements 30. Die gestrichelte Linie 110 in Fig. 1 symbolisiert eine Symmetrielinie bzw. Symmetrieebene der Oberflächenprofilierung 82 eines jeweiligen Auslegehebels 36, 38. Auch diese Symmetrielinie bzw. Symmetrieebene 110 steht radial zur Schwenkachse 84 des jeweiligen Auslegehebels 36, 38. Wie Fig. 1 weiter verdeutlicht, existiert für jeden Auslegehebel 36, 38, der dem Getriebe bzw. - insbesondere im Fall eines Parallelschaltgetriebes bzw. Doppelkupplungsgetriebes desselben Teilgetriebes - bevorzugt eine Relativstellung des Schaltelements 30 zum betreffenden Auslegehebel 36, 38, bei dem die Symmetrielinien bzw. Symmetrieebenen 108, 110 der Profilierung 58 des Schaltelements 30 mit der des jeweiligen Auslegehebels 36, 38 zusammenfällt.

In besonders vorteilhafter Weise sind die Oberflächenprofilierungen 58, 82 jeweils so gestaltet, dass sie keine Hinterschneidungen aufweisen.

Derartige Oberflächenprofilierungen 58 der Hauptbetätigungseinrichtung bzw. des Schaltelements 30 weisen Auslegeflanken 48, 50, 52, 54 und Sperrteile bzw. Sperrzylinder 56, 56a, 56b, 56c oder dergleichen auf. Die Oberflächenprofilierungen 82 der Nebenbetätigungseinrichtung bzw. der Auslegehebel 36, 38 weisen jeweils Sperrflanken 78, 80 und Auslegeflanken 70, 72, 74, 76 auf.

Die oben beschriebenen Eigenschaften bzw. das Zusammenwirken zwischen dem Schaltelement 30, dem bzw. den Auslegehebeln 36, 38 und der bzw. den Schaltschienen in Richtung "+G" gelten auch für die Bewegung in Richtung "-G", was insbesondere auch auf die symmetrische Ausführung der "Active Interlock"-Geometrie bzw. Geometrien zurückzuführen ist (vgl. auch Symmetrielinien 108, 110 in Fig. 1).

In Bezug auf die Fig. 1 bis 5 wurden beispielhaft zwei Auslegehebel 36, 38 sowie die diesen zugeordneten Schaltschienen 18, 20, die Bestandteil eines jeweiligen Schaltmechanismus 14, 16 sind, angesprochen. Diese Gestaltung kann allerdings auch bei Getrieben oder Teilgetrieben eingesetzt werden, bei denen mehr als zwei Schaltmechanismen bzw. mehr als zwei Schaltschienen oder dergleichen gegeben sind, die dem Getriebe bzw. dem gleichen Teilgetriebe zugeordnet sind. Bei einer solchen Gestaltung ist insbesondere vorgesehen, dass die oben beschriebenen Auslege- bzw. Sperrfunktionalitäten jeweils in sämtlichen Schaltgassen wirken, in denen der Schaltfinger nicht positioniert ist, bzw. nicht in Schaltrichtung bewegt wird, um einen Gang einzulegen. Bei solchen Gestaltungen sind also vorzugsweise entsprechend mehr Auslegehebel und Schaltschienen gegeben. Die Profilierung bzw. die Profilierungen der Hauptbetätigungseinrichtung bzw. des Schaltelements 30 können dabei entsprechend breit ausgeführt werden, so dass sie mit mehreren, nebeneinander angeordneten Auslegehebeln zusammenwirken können; es kann auch vorgesehen sein, dass jeweils separate Profilierungen zum Zusammenwirken mit verschiedenen Auslegehebeln vorgesehen sind. In bevorzugter Gestaltung ist allerdings bei derartigen Fällen vorgesehen, dass - in Achsrichtung des Schaltelements 30 gesehen - beidseits der Ebene, in der der Schaltfinger angeordnet ist, Profilierungen 58 so vorgesehen sind, dass sie mit (n-1)-Schaltschienen bzw. Schaltmechanismen bzw. Auslegehebeln bzw. den Profilierungen dieser Auslegehebel zusammenwirken können, wobei n die Anzahl der Schaltmechanismen bzw. Schaltschienen des Getriebes (z.B. bei Handschaltgetriebe oder ASG) oder Teilgetriebes (z.B. bei DKG oder PSG) ist. Sofern mehrere Teilgetriebe gegeben sind, und die Anzahl der Schaltschiene in diesen verschieden ist, z.B. einerseits n und andererseits m, ist bevorzugt vorgesehen, dass "n" größer als "m" ist, wenn das gleiche Schaltelement für beiden, oder auch mehr als 2, Teilgetriebe vorgesehen ist, bzw. wahlweise in diesen eingesetzt werden soll.

Auf diese Art und Weise kann erreicht werden, dass unabhängig davon, auf welche Schaltschiene (des Getriebes bzw. Teilgetriebes) der Schaltfinger 28 einwirkt, die Auslege- und/oder Sperrfunktion in sämtlichen verbleibenden Schaltgassen des gleichen Getriebes bzw. Teilgetriebes wirkt.

Wie angesprochen, kann die Gestaltung bei Getrieben eingesetzt werden, bei denen parallele Antriebsstrangabschnitte gegeben sind, wie beispielsweise bei einem Parallelschaltgetriebe oder einem Doppelkupplungsgetriebe. Bei solchen Getrieben kann die anhand der Fig. 1 bis 5 erläuterte Gestaltung beispielsweise so eingesetzt werden, dass für jedes der Teilgetriebe, die jeweils einem parallel geschalteten Antriebsstrangabschnitt zugeordnet sind, die erläuterte Auslege- bzw. Sperrfunktion beim Schalten in einen Gang mittels des Hauptbetätigungselements bzw. des Schaltfingers in allen von der Schaltgasse des Zielgangs verschiedenen Schaltgassen dieses Teilgetriebes wirkt, so dass sichergestellt wird, dass nur ein Gang des jeweiligen Teilgetriebes gleichzeitig eingelegt werden kann.

Bei dieser Gestaltung kann vorgesehen sein, dass dieses in Bezug auf beide Teilgetriebe gilt. Dabei kann vorgesehen sein, dass genau eine Hauptbetätigungseinrichtung bzw. ein Schaltelement 30 vorgesehen ist, das - wahlweise - auf beide Teilgetriebe einwirken kann, um dort Gänge zu schalten. Es ist dabei allerdings möglich, dass ein Gang des einen Teilgetriebes geschaltet ist, wenn gleichzeitig ein Gang des anderen Teilgetriebes geschaltet ist. Die Auslege- bzw. Sperrfunktion ist also separat für die jeweiligen Teilgetriebe vorgesehen. In bereits oben skizzierter Weise kann dabei vorgesehen sein, dass in beiden Teilgetrieben entsprechende Auslegehebel vorgesehen sind.

Bei Getrieben, die nicht parallele Antriebsstrangabschnitte aufweisen, wie beispielsweise Handschaltgetriebe oder automatisiertes Schaltgetriebe, kann insbesondere vorgesehen sein, dass die Auslege- bzw. Sperrfunktion in sämtlichen Schaltgassen wirkt, die von der Schaltgasse verschieden sind, in welcher das Hauptbetätigungselement zum Einlegen eines Ganges bewegt wird.

Aus diesem Grund wurde oben verschiedentlich auch von "Getriebe bzw. Teilgetriebe" gesprochen.

Die Betätigungseinrichtung 12 wird vorzugsweise vormontiert und als Einheit bzw. Baugruppe an bzw. auf das Getriebe angesetzt bzw. mittels geeigneter Befestigungsmittel montiert. Die Schaltwelle 46 und die Welle 86 können beispielsweise in einem Getriebeaktor bzw. einem Gehäuse gelagert sein. Es kann vorgesehen sein, dass die Einheit aus diesem Getriebeaktor und der Betätigungseinrichtung bzw. dem Gehäuse und der Betätigungseinrichtung als Baugruppe - insbesondere auch mit Welle 86 und Schaltwelle 46 - vormontiert ist, und auf das Getriebe aufgesetzt bzw. an diesem montiert wird.

Die Betätigungseinrichtung 12 bzw. das beschriebene Funktionsmodul bietet den Vorteil, dass die für die Auslege- und Sperrfunktion verantwortlichen Geometrien im Wesentlichen nur dem Toleranzeinfluss des Achsabstandes zwischen dem Schaltelement 1 und dem bzw. den Auslegehebeln 36, 38 unterliegen. Die Achsenlagerung dieser beiden Teile liegt beispielsweise im Getriebeaktor. Dadurch gibt es keinen getriebeseitigen Einfluss auf die "Active Interlock"-Funktionsgeometrien. Die durch den Doppelpfeil 140 in Fig. 5 schematisch angedeutete Dimension zeigt einen entscheidenden Toleranzeinfluss des "Active Interlock"-Kernmoduls zu den Getriebebauteilen, der maßgeblich durch die Montage bedingt ist. Aufgrund der Ausführung im Kontakt zwischen Schaltfinger 28 als Evolventenform bzw. Auslegefinger 66, 68 als Radiusform, und den Gegenflanken 98, 100, 102, 104 als gerade bzw. ebene Flanken wird erreicht, dass die Dimension 140 eine untergeordnete bzw. eine absolut untergeordnete Bedeutung für das Zusammenwirken zwischen dem Schaltelement 30, dem bzw. den Auslegehebeln 36, 38 und der bzw. den Schaltschienen 18, 20 bekommt. Ein weiterer Vorteil ist, dass bis auf die Gradflankigkeit der Ausschnitte 92, 94 die Anforderungen an die Schaltschienen 18, 20 relativ gering sind. Es kann in vorteilhafter Ausführung vorgesehen sein, dass die Ausschnitte 92, 94 nur durch Stanzen von Blech erzeugt werden.

Als Vorteil der Betätigungseinrichtung 12 bzw. des "Active Interlock"-Kernmoduls erweist sich auch die Möglichkeit, das System auf Getriebevarianten mit größerem oder kleinerem Schaltweg zu übertragen. Für diesen Fall braucht man nur die Länge des wirksamen Schaltfingers 28 und/oder der wirksamen Auslegefinger 32, 34 an den gewünschten Schaltweg anzupassen. Die übrigen, insbesondere alle Geometrien können beibehalten werden. Bei der Gestaltung gemäß den Fig. 1 bis 5 ist für jede Schaltschiene 18, 20 des Getriebes jeweils ein (separater) Auslegehebel 36, 38 vorgesehen. Die Auslegehebel sind relativ geringen Auslegekräften ausgesetzt. Sie können daher in vorteilhafter Gestaltung aus Kunststoff sein, und beispielsweise als Kunststoffspritzteil gefertigt werden, was eine sehr günstige Lösung darstellt.

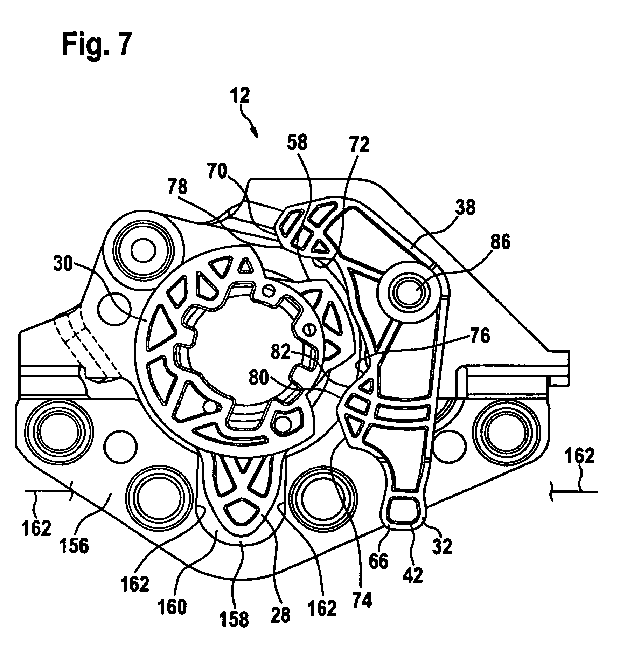

Fig. 6 zeigt eine Betätigungseinrichtung 12 bzw. ein "Active Interlock"-Kernmodul für eine spezielle Getriebebauform, bei der die Teilgetriebe 150, 152 paarweise mit Auslegehebel 36, 38 nebeneinander angeordnet sind. Es sind insbesondere die Auslegehebel 36, 38 für das Teilgetriebe 52 nebeneinander angeordnet, und die Auslegehebel 36, 38 für das Teilgetriebe 150. In entsprechender Weise können dann die Schaltschienen der Teilgetriebe bzw. entsprechende Elemente jeweils paarweise nebeneinander angeordnet sein. Anhand der Fig. 6 soll ferner, wie auch anhand der Fig. 7 bis 11, erfindungsgemäße Möglichkeiten aufgezeigt werden, mit denen das Schaltschema bzw. das Schaltbild abgebildet werden kann. Dies wird auch als "Gate-Funktionalität" bezeichnet.

Das Ermitteln bzw. Abbilden des Schaltschemas bzw. Schaltbildes spielt insbesondere bei solchen Getrieben bzw. Getriebeeinrichtungen eine Rolle, bei denen das Getriebe bzw. Schaltvorgänge im Getriebe elektronisch gesteuert werden. Elektronische Steuerungen für Getriebe sind bereits bekannt und werden beispielsweise bei so genannten automatisierten Schaltgetrieben (ASG) verwendet. Auch bei Doppelkupplungsgetrieben bzw. Parallelschaltgetrieben werden in der Regel elektronische Steuerungen eingesetzt. Hierzu werden in der Regel Elektromotoren verwendet. Dies kann so sein, dass ein Elektromotor für das Wählen verwendet wird, und ein Elektromotor für das Schalten. Es kann beispielsweise vorgesehen sein, dass ein Elektromotor vorgesehen ist, um eine Schaltwelle axial zu verstellen, und ein Elektromotor um eine solche Schaltwelle in Drehrichtung bzw. Schwenkrichtung zu verstellen. Elektromotoren können dabei mit einem elektronischen Steuergerät zusammenwirken, welches Elektromotoren bzw. die Spannungsversorgung der Elektromotoren ansteuert. Derartige elektronische Steuergeräte können wiederum in Wirkverbindung mit einer oder mehreren elektronisch gesteuerten Kupplungen stehen, wie Kupplungen eines Doppelkupplungsgetriebes oder Parallelschaltgetriebes oder automatisierte Schaltgetriebe, die als Art Anfahrkupplungen wirken. Mittels eines solchen elektronischen Steuergeräts können Betätigungsvorgänge der Kupplung und des Getriebes aufeinander abgestimmt werden. Ferner kann ein solches elektronisches Steuergerät in Wirkverbindung mit der Brennkraftmaschine eines Kraftfahrzeugs stehen. Hier können beispielsweise Kennwerte ausgetauscht oder übermittelt werden. Dies kann beispielsweise ermöglichen, dass Kennwerte der Brennkraftmaschine ebenfalls zur Steuerung der Kupplung und/oder des Getriebes verwendet werden.

Solche Anfahrkupplungen und Getriebe können Bestandteil eines Antriebsstrangs eines Kraftfahrzeugs sein, der Energie von der Brennkraftmaschine eines Kraftfahrzeugs zu dessen Antriebsachsen überträgt. Derartige Gestaltungen, und insbesondere auch ein solcher Antriebsstrang sind auch unabhängig von der Gestaltung gemäß Fig. 6 bevorzugte Gestaltungen der Erfindung, wobei hier insbesondere eine erfindungsgemäß Betätigungseinrichtung bzw. eine erfindungsgemäße Getriebeeinrichtung vorgesehen sein kann.

Die Anordnung gemäß Fig. 6 macht es erforderlich, dass zwischen den Teilgetrieben 150, 152 eine Distanz 154 von einer Schaltschienenbreite frei von "Active Interlock"-Funktionselementen bleiben muss. Dies bezieht sich insbesondere auf eine Gestaltung, bei der - wie in Fig. 6 gezeigt - für die beiden Teilgetriebe 150, 152 jeweils zwei Auslegehebel 36, 38 vorgesehen ist, und entsprechend die Teilgetriebe 150, 152 jeweils zwei Schaltschienen bzw. entsprechende Elemente, bzw. Schaltmechanismen aufweisen. Es ist aber auch möglich, dass in einem oder in beiden der Teilgetriebe 150, 152 mehr als zwei Auslegehebel vorgesehen sind, bzw. das jeweilige entsprechende Teilgetriebe 150 bzw. 152 mehr als zwei Schaltschienen aufweist. Sinnvoll ist in einem solchen Fall, dass die Distanz 154 entsprechend so angepasst wird, dass in jedem der Teilgetriebe 150, 152 gewährleistet ist, dass jeder Gang geschaltet werden kann, und dabei jeweils alle anderen Gänge des Teilgetriebes mittels einer erfindungsgemäßen Betätigungseinrichtung ausgelegt werden können, und zwar ohne auf das jeweils andere Teilgetriebe einzuwirken bzw. dort Gänge mit auszulegen. Es ist also in diesem Sinne sinnvoll, dass der Abstand 154 dem (n-1)-fachen der Schaltschienenbreite bzw. der Breite des Auslegehebels 36, 38 entspricht, wobei n die größere Anzahl der Auslegehebel 36, 38 bzw. Schaltschienen ist, die in dem einen bzw. dem anderen Teilgetriebe gegeben ist. Sofern zwischen den Schaltschienen bzw. den Auslegehebeln eines Teilgetriebes Spiel gegeben ist, ist es sinnvoll, wenn der Abstand 154 um dieses Spiel vergrößert wird.

Die Distanz 154 bzw. der dortige Zwischenraum wird in der Gestaltung gemäß Fig. 6 mit einer festen Platte 156 ausgefüllt bzw. teilweise ausgefüllt. Diese Platte 156 kann bei der Ermittlung des Schaltbildes als Referenz für die Schaltstellung bzw. Betätigungsstellung "neutral" dienen. Hierzu kann diese Platte, wie in Fig. 7 gezeigt, die einen Schnitt entlang der Linie VII-VII aus Fig. 6 darstellt, einen Durchbruch 158 aufweisen, der so ist, dass das Schaltelement 30 axial in einem vorbestimmten Stellungsbereich durch diesen bewegt werden kann. Dieser Stellungsbereich ist so, dass für den Schaltfinger 28 eine spezielle Ausnehmung 160 in der Platte 156 vorgesehen ist, die nur in einem vorbestimmten Schwenkstellungsbereich des Schaltelements 30 gegeben ist. Wenn der Schaltfinger 28 außerhalb dieses Schwenkstellungsbereichs positioniert ist, verhindert die Platte, dass das Schaltelement 30 durch diese bewegt werden kann. Die Ausnehmung 160 ist dabei im Wesentlichen so positioniert, dass das Schaltelement durch den Durchbruch 158 bewegt werden kann, wenn es in einer Neutral-Stellung ist. Zum steuerungstechnischen Erkennen der Neutral-Position wird der Schaltfinger 28 in den Bereich der Ausnehmung 160 verfahren, wobei dann mittels des Schaltfingers die Begrenzung durch die Flanken 162 in Rotationsrichtung ermittelt wird. Der Schaltfinger 28 kann also in dieser entsprechenden Stellung in der einen und der anderen Orientierung der Rotationsrichtung bis zum Anschlag an die Flanken 162 verschwenkt werden.

Nur in der angesprochenen Schaltwellenstellung bzw. Stellung des Schaltelements 30 bzw. Schwenkstellung des Auslegefingers 28 kann das Schaltelement 30 in axialer Richtung zu jeder beliebigen Schaltschiene zwischen den beiden Teilgetrieben 150, 152 verfahren werden, unabhängig davon, ob ein Gang geschaltet ist oder nicht. Die Lage der Schaltschienen ist in Fig. 7 schematisch durch die Linie 162 angedeutet.

Stellt sich ein Zustand bzw. eine Stellung entsprechend der Fig. 3 ein, so kann die Schaltwelle 46 bzw. das Schaltelement 30 in axialer Richtung innerhalb von diesem bzw. dem entsprechenden Teilgetriebe verfahren werden. Die axiale Begrenzung wird durch die Platte 156 und - je nach Teilgetriebe - die Platte 164 bzw. die Platte 166 gegeben. Dieses Gebiet innerhalb des Gates bzw. des Schaltbildes, bzw. das Gebiet, was durch jeweils zwei axiale Anschläge in Schaltrichtung, und die Breite des Neutral-Bereichs in Wählrichtung begrenzt wird, wird auch erweiterter Neutral-Bereich genannt. Es kann vorgesehen sein, dass zunächst allgemein die Ausdehnung des erweiterten Neutral-Bereichs für das Gesamtgetriebe ermittelt wird, und in anschließenden Schritten die Ausdehnung des erweiterten Neutral-Bereichs für das eine Teilgetriebe 150 sowie die Ausdehnung des erweiterten Neutral-Bereichs für das andere Teilgetriebe 152 in Wählrichtung. Dies kann beispielsweise so sein, dass zum Ermitteln des erweiterten Neutral-Bereichs für das Gesamtgetriebe das Schaltelement von der einen Platte 164 zur anderen Platte 166 in der Neutral-Stellung bewegt wird, so dass die Ausdehnung des erweiterten Neutral-Bereichs des Gesamtgetriebes als Abstand dieser Anschlagpositionen ermittelt wird. Anschließend kann dann für jedes der beiden Teilgetriebe 150, 152 mittels des Schaltelements 30 bzw. des Schaltfingers 28 die Wand 156 ertastet werden, wenn der in Schaltrichtung gelegene Abstand zwischen dieser Wand und der Wand 166 bzw. der Wand 164 als Ausdehnung des erweiterten Neutral-Bereichs in Schaltrichtung für das jeweilige Teilgetriebe bestimmt werden. Stellt sich ein Zustand gemäß Fig. 4 ein, bzw. wenn eine Stellung gemäß Fig. 4 gegeben ist, kann die Schaltwelle bzw. das Schaltelement 30 bzw. der Schaltfinger 28 in axialer Richtung innerhalb eines bestimmten schmalen Spiels verfahren werden. Die axiale Begrenzung wird durch die Tiefe des ersten Ausschnitts 92 bzw. durch die unterschiedliche Tiefen 168, 170 des Auslegehebels gegeben. Die Steuerung kann dann innerhalb des Gates bzw. innerhalb des Schaltbildes erkennen, dass eine Gang-Schaltschienenstellung "-G" oder "+G" vorliegen muss.

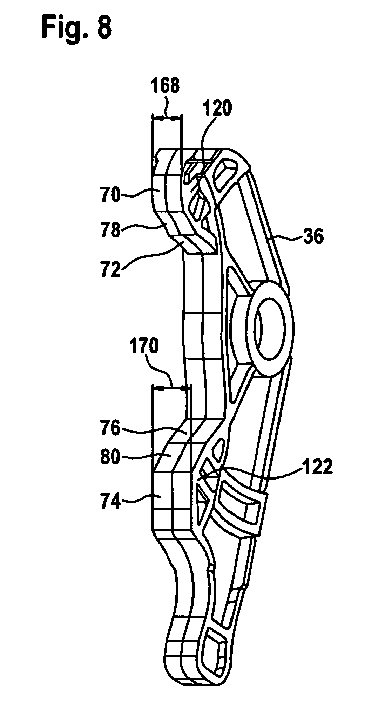

In vorteilhafter Gestaltung ist die Tiefe 168 bzw. 170 der Auslegehebel 36, 38, wie in Fig. 8 gezeigt, in den Bereichen 120 und 122 unterschiedlich. Beispielsweise hierdurch kann erreicht werden, dass - je nach Schwenkstellung des Auslegehebels - zwei verschiedene axiale Verfahrwege der Schaltwelle bzw. Schaltelements 30 bei dem vorgenannten Verfahren (Bewegen) innerhalb des schmalen Spiels erkannt werden. Mittels dieses Unterschieds kann ermittelt werden, ob das Schaltelement, insbesondere in Bezug auf die jeweilige Schaltgasse, in der "+G"-Richtung oder in der "-G"-Richtung verdreht ist. Hierdurch kann spezieller festgelegt werden, welcher der der Schaltschiene zugeordnete Gang eingelegt ist.

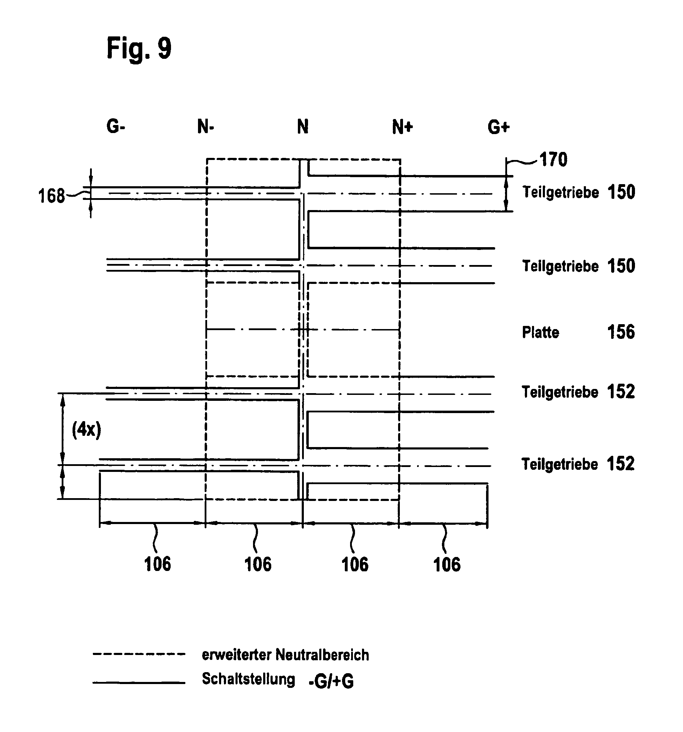

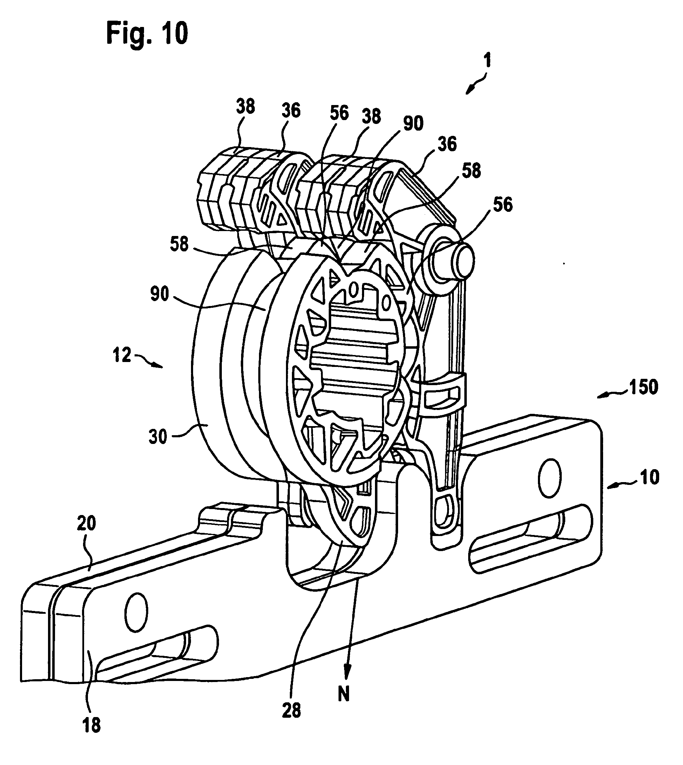

Fig. 9 zeigt die Schaltbild- bzw. Gate-Bereiche, die durch die Steuerung, wie dargestellt, erkannt werden. Die Besonderheit der Gate-Funktionalität bzw. der Gate-Ausführung bzw. der Schaltbild-Ausführung besteht darin, dass die Kennwerte bzw. Merkmale "erweiterter Neutral-Bereich" und "Schaltstellung -G/+G" bzw. deren Lagen und/oder Abmaße sich dynamisch mit der jeweiligen Stellung des Schaltelements 30 bzw. des Auslegehebels 36, 38 einstellen. Es wird insbesondere ermöglicht, dass diese vom Allgemeinen ins Spezielle ermittelt werden können bzw. ermittelt werden. Ein weiteres Merkmal im Zusammenhang der Orientierung der Steuerung anhand der Gate-Zustände ist die Möglichkeit, das Schaltelement 30 zwischen zwei Schaltschienen eines Teilgetriebes axial zu positionieren. Bei Rotation des Schaltelements 30 (entsprechend der Stellung gemäß Fig. 3) werden beide Schaltschienen über die Auslegehebel in die Stellung "neutral" gebracht. Dabei kann das Schaltelement 30 genau soweit verdreht werden (vgl. Fig. 10), bis die beiden Schaltschienen 36, 38 die Position "Neutral" erreicht haben. Ab dieser Stellung ist ein Weiterdrehen des Schaltelements 30 nicht möglich, weil sich über den Schaltfinger 28 zwei Schaltschienen 18, 20 und zwei Auslegehebel 36, 38 das Drehmoment am Sperrzylinder auf den Ebenen vor bzw. hinter dem Finger 28 abgestützt wird. Es stellt sich eine innere Verspannung ein. Diese Position hilft der Steuerung zur Ermittlung einer Referenz.

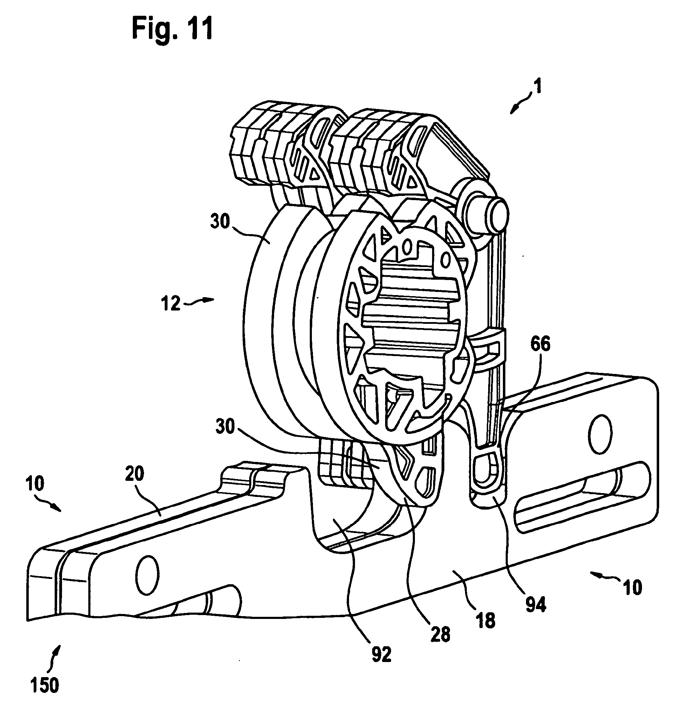

Das Auslegen der zwei Gänge ist auch möglich, wenn das Schaltelement 30 - wie in Fig. 11 dargestellt - axial bis an die Begrenzung der Platte 166 bzw. 164 bzw. an die durch die Platte 166 bzw. 164 gebildete Begrenzung verschoben wird. Der Schaltfinger 28 ist damit um einen halben Abstand zweier Schaltschienen eines Teilgetriebes versetzt. Die Platten können dabei entsprechend positioniert sein. Es stellt sich somit der gleiche bzw. ein entsprechender Verspannungszustand ein, wie anhand der Fig. 10 beschrieben. Abweichend von Fig. 10 bzw. dem Verspannungszustand gemäß Fig. 10 stützt sich der Schaltfinger in der Stellung gemäß Fig. 11 nicht an zwei Schaltschienen 18, 20 ab.

Die beschriebenen Prozeduren zur gleichzeitigen Betätigung zweier Schaltschienen 18, 20 erlangen insbesondere dann Bedeutung, wenn die Steuerungseinheit bzw. das Steuergerät durch einen Fehler sämtliche Referenzen verliert. Für diesen Fall bzw. Zustand müssen sämtliche Referenzen neu ermittelt bzw. gelernt werden, und zwar möglichst ohne in eine gefährliche Situation zu geraten, bzw. ohne dass hierbei gefährliche Situationen auftreten (wie z. B. ungewolltes Einlegen eines Ganges).

Die Fig. 12 bis 14 zeigen verschiedene Ausführungsvarianten, die bei unterschiedlichen Getriebetypen verwendet werden können.

Variabilität eines "Active Interlock"-Kernmoduls bzw. einer Betätigungseinrichtung 12 kann erreicht werden, wenn man die "Active Interlock"-Geometrien (Auslegeflanken 48, 50, 52, 54 des Schaltelements 30, Sperrzylinder 56 des Schaltelements 30, Auslegeflanken 70, 72, 74, 76 des Auslegehebels, Sperrflanke 78, 80 des Auslegehebels; vgl. Fig. 1) soweit zum Schaltfinger 28 verdreht, dass man diese gespiegelt für die gegenüberliegende Seite verwenden kann. Dabei ergibt sich jedoch, dass (scheinbare) Problem, dass die Auslegeflanke 74 mit dem Schaltfinger 28 bei Rotation kollidiert. Wenn man jedoch die Form des Schaltfingers 28 ändert, und auf einen Eingriff zwischen dem Schaltfinger 28 und der Schaltschiene bzw. dem ersten Ausschnitt der Schaltschiene verzichtet, bietet sich die Möglichkeit, die Schaltbewegung indirekt über den Auslegehebel 36, 38 (vgl. Fig. 12 bis 14) in die Schaltschiene 18 bzw. 20 einzuleiten. Aus diesen Modifikationen können Anwendungsvarianten abgedeckt werden, bei denen der Auslegefinger 32 bzw. 34 (vgl. Fig. 12 bis Fig. 14) in einem Bereich 180° verdreht angeordnet wird.

Die Variationsbreite drückt sich in der Anordnung und Verteilung der Auslegehebel 36 bzw. 38 (vgl. Fig. 12 bis 14) aus.

Bei den Gestaltungen gemäß den Fig. 12 bis 14 sind nur Nebenbetätigungselemente 32, 34 bzw. Auslegefinger 66, 68 Ausgangselemente 42, 44 der Betätigungseinrichtung 12. Der Schaltfinger 28 bildet hier kein Ausgangselement, kann also nicht direkt in die Schaltmechanismen 14, 16 bzw. die Schaltschienen 18, 20 des Getriebes eingreifen, bzw. in dort angeordnete Mäuler bzw. Ausschnitte. In diese Mäuler greifen nur die Auslegefinger ein. Die Auslegehebel 36, 38 werden allerdings von dem Schaltfinger 28 zum Auslösen einer Schaltbewegung einer Schaltschiene belastet. Auch gemäß den Gestaltungen 12 bis 14 können die Profilierungen 58 in einer zum Schaltfinger in Achsrichtung des Schaltelements versetzten Ebene angeordnet sein. Dabei kann insbesondere auch vorgesehen sein, dass entsprechend oben beschriebener Weise ein Freiraum 90 gebildet wird.

Die Gestaltungen gemäß den Fig. 1 bis 11 können, soweit nichts Gegenteiliges gesagt ist, kombiniert werden. Insbesondere können die Ausführungsbeispiele gemäß den Fig. 6 bis 11 eine Gestaltung gemäß den Fig. 1 bis 5 aufweisen. Auch die Gestaltungen gemäß den Fig. 12 bis 14 können mit Merkmalen versehen sein, die anhand der Fig. 1 bis 11 erläutert wurden.

Wie insbesondere auch bevorzugte Ausführungsformen und Ausführungsbeispiele zeigen, ist es erfindungsgemäß gelungen, ein Bauteilarrangement zu finden, welches eine "Active Interlock"-Funktionalität toleranzunempfindlich auf die bzw. eine innere Getriebeschaltung überträgt. Ferner zeigen zumindest Ausführungsbeispiele, dass es erfindungsgemäß gelungen ist, ein Bauteilarrangement zu finden, welches nicht die Schaltschienen des Getriebes als "Active Interlock"-Funktionselemente benötigt. Ferner ist es mittels der Erfindung bzw. deren Ausführungsbeispiele gelungen, eine "Active Interlock"-Geometrie zu finden, die Toleranzen beim Auslegen von Gängen kompensieren kann. Weiter ist es gelungen, wie zumindest Ausführungsbeispiele der Erfindung zeigen, eine Gate-Funktionalität zu integrieren. Ferner wird, wie Ausführungsbeispiele der Erfindung zeigen, eine Anwendungsvariabilität hinsichtlich unterschiedlicher Getriebetypen geschaffen. Das erfindungsgemäße Kernmodul bzw. "Active Interlock"-Kernmodul bzw. die erfindungsgemäße Betätigungseinrichtung ist vorzugsweise für ein Parallelschaltgetriebe bzw. kann für ein solches verwendet werden. Die Auslegehebel bzw. die Auslegefinger können - wie in den Ausführungsbeispielen gemäß den Fig. gezeigt - jeweils axial im Wesentlichen fest angeordnet sein. Vorzugsweise sind sie nur in Schwenk- bzw. Drehrichtung beweglich.

### Bezuaszeichenliste

- 1: Getriebeeinrichtung
- 10: Getriebe
- 12: Betätigungseinrichtung
- 14: Schaltmechanismus
- 16: Schaltmechanismus
- 18: Schaltschiene
- 20: Schaltschiene
- 22: Hauptbetätigungseinrichtung
- 24: Nebenbetätigungseinrichtung
- 26: Hauptbetätigungselement
- 28: Schaltfinger
- 30: Schaltelement
- 32: Nebenbetätigungselement
- 34: Nebenbetätigungselement
- 36: Auslegehebel
- 38: Auslegehebel
- 40: Ausgangselement
- 42: Ausgangselement
- 44: Ausgangselement
- 46: Schaltwelle
- 48: Auslegeflanke von 30
- 50: Auslegeflanke von 30
- 52: Auslegeflanke von 30
- 54: Auslegeflanke von 30
- 56: Sperrteil, Sperrzylinder
- 56a: Abschnitt von 56
- 56b: Abschnitt von 56
- 56c: Abschnitt von 56
- 58: Oberflächenprofilierung von 30
- 60: Oberflächenvertiefung
- 62: Oberflächenvertiefung
- 64: Oberflächenerhöhung
- 64b: Oberflächenerhöhung
- 64c: Oberflächenerhöhung
- 65: Bereich
- 66: Auslegefinger
- 68: Auslegefinger
- 69: Radiuskontaktfläche
- 70: Auslegeflanke von 36 bzw. 38
- 72: Auslegeflanke von 36 bzw. 38
- 74: Auslegeflanke von 36 bzw. 38
- 76: Auslegeflanke von 36 bzw. 38
- 78: Sperrflanke
- 80: Sperrflanke
- 82: Oberflächenprofilierung von 36 bzw. 38
- 84: Schwenkachse von 36 bzw. 38
- 86: Welle zur Aufnahme von 36 bzw. 38
- 88: Schwenkachse von 28 bzw. 30
- 90: Freiraum von 30
- 91: radial äußere Begrenzung von 30 in Ebene von 28
- 92: erster Ausschnitt in 18, 20; Schaltmaul
- 94: zweiter Ausschnitt in 18, 20; Auslegemaul
- 96: Bewegungsrichtung von 18, 20
- 98: Flanke von 92
- 100: Flanke von 92
- 102: Flanke von 94
- 104: Flanke von 94
- 106: Schaltweg
- 108: Symmetrielinie
- 110: Symmetrielinie
- 120: Abschnitt von 36
- 122: Abschnitt von 36
- 150: erstes Teilgetriebe
- 152: zweites Teilgetriebe
- 154: Distanz
- 156: Platte
- 158: Durchbruch in 156
- 160: Ausnehmung
- 162: Linie
- 164: Platte
- 166: Platte
- 168: erste Tiefe von 36, 38
- 170: zweite Tiefe von 36, 38

## Patentansprüche

1. Betätigungseinrichtung für ein Getriebe, insbesondere Kraftfahrzeuggetriebe, wobei das Getriebe aufweist:
- wenigstens zwei Wellen;
- mehrere Zahnradsätze zur Erzielung unterschiedlicher Gangstufen; und
- mehrere Schaltmechanismen (14, 16), die jeweils zum Erzeugen bzw. Lösen einer drehfesten Welle-Zahnrad-Verbindung betätigt werden können;
wobei die Betätigungseinrichtung aufweist
- ein Schaltelement (30), das mit einem Schaltfinger (28) und mit wenigstens einer Oberflächenprofilierung (58) versehen ist, wobei das Schaltelement (30) mit dem Schaltfinger (28) zum Schalten in Gangstellungen des Getriebes (10) um eine Schwenkachse (88) schwenkbar ist und zum Wählen in vorbestimmten Schwenkstellungen in Schwenkachsenrichutung (88) beweglich ist, und
- mehrere Auslegehebel (36, 38), die jeweils um eine zur Schwenkachse (88) des Schaltelements (30) beabstandete Schwenkachse (84) schwenkbar sind und jeweils mit einem Auslegefinger (66, 68) für den betätigenden Eingriff in jeweils einen Schaltmechanismus (14, 16) und mit einer Oberflächenprofilierung (82) versehen sind,
wobei wenigstens eine Oberflächenprofilierung (58) des Schaltelements (30), die in Richtung der Schwenkachse (88) des Schaltelements (30) bzw. Schaltfingers (28) versetzt zum Schaltfinger (28) angeordnet ist, während vorbestimmter Schwenkbewegungen des Schaltfingers (28) mit der Oberflächenprofilierung (82) wenigstens eines Auslegefingers (66, 68) zum Auslegen und/oder Sperren vorbestimmter Gänge des Getriebes (10) in Wirkverbindung treten kann bzw. tritt, **dadurch gekennzeichnet, dass** das Schaltelement (30) in dem Axialbereich, in dem der Schaltfinger (28) angeordnet ist, einen Freiraum (90) aufweist, in welchen ein Auslegehebel (36, 38) schwenken kann, und zwar insbesondere beim Einlegen eines Ganges mittels des Schaltfingers (28).

2. Betätigungseinrichtung nach Anspruch 1, **dadurch gekennzeichnet, dass** eine Hauptbetätigungseinrichtung (22) mit wenigstens einem Hauptbetätigungselement (26), das zum Einlegen von Gängen bewegbar ist, ein Schaltelement (30) aufweist oder ist, an welchem das Hauptbetätigungselement (26 bzw. 28) ausgebildet wird und an welchem wenigstens eine Oberflächenprofilierung (58) für das Zusammenwirken mit wenigstens einer Oberflächenprofilierung einer Nebenbetätigungseinrichtung mit wenigstens einem beweglich angeordneten Nebenbetätigungselement (32,34), das zum Auslegen von Gängen bewegbar ist, (24) ausgebildet ist

3. Betätigungseinrichtung nach einem der vorangehenden Ansprüche, **dadurch gekennzeichnet, dass** das Hauptbetätigungselement (26) ein Schaltfinger (28) ist, der vorzugsweise eine Evolventenform aufweist.

4. Betätigungseinrichtung nach einem der vorangehenden Ansprüche, **dadurch gekennzeichnet, dass** die wenigstens eine für das Zusammenwirken mit wenigstens einer Oberflächenprofilierung (82) der Nebenbetätigungseinrichtung (24) bestimmte Oberflächenprofilierung (58) der Hauptbetätigungseinrichtung (22) bzw. des Schaltelements (30) symmetrisch gestaltet ist und/oder die Oberflächenprofilierungen (82) der Nebenbetätigungseinrichtung (24) jeweils symmetrisch ausgebildet sind.

5. Betätigungseinrichtung nach einem der vorangehenden Ansprüche, **dadurch gekennzeichnet, dass** das Schaltelement (30) und/oder das Hauptbetätigungselement (26) bzw. der Schaltfinger (28) und die wenigstens eine, für das Zusammenwirken mit wenigstens einer Oberflächenprofilierung (82) der Nebenbetätigungseinrichtung (24) bzw. von Auslegehebein (36, 38) bestimmte Oberflächenprofilierung (58) der Hauptbetätigungseinrichtung (22) axialbeweglich und schwenkbar angeordnet ist.

6. Betätigungseinrichtung nach einem der vorangehenden Ansprüche, **dadurch gekennzeichnet, dass** die Nebenbetätigungseinrichtung (24) mehrere relativbeweglich zueinander angeordnete Auslegeelemente (36, 38), insbesondere Auslegehebel, aufweist, die vorzugsweise identisch geformt sind.

7. Betätigungseinrichtung nach einem der vorangehenden Ansprüche, **dadurch gekennzeichnet, dass** die Auslegeelemente (36, 38) jeweils eine Oberflächenprofilierung (82) für das Zusammenwirken mit einer Oberflächenprofilierung (58) der Hauptbetätigungseinrichtung (22) bzw. des Schaltelements (30) aufweisen und/oder jeweils einen Auslegefinger (66, 68) für den jeweiligen Eingriff in einen Schaltmechanismus (14, 16) eines Getriebes (10).

8. Betätigungseinrichtung nach einem der vorangehenden Ansprüche, **dadurch gekennzeichnet, dass** die Auslegeelemente (36, 38) jeweils schwenkbar, insbesondere relativverschwenkbar, angeordnet sind, und zwar insbesondere um parallele und/oder konzentrische Schwenkachsen (84).

9. Betätigungseinrichtung nach einem der vorangehenden Ansprüche, **dadurch gekennzeichnet, dass** die Auslegeelemente (36, 38) jeweils hinsichtlich ihrer Schwenkachse (84) im Wesentlichen axialfest angeordnet sind.

10. Betätigungseinrichtung nach einem der vorangehenden Ansprüche, **dadurch gekennzeichnet, dass** die Auslegefinger (66, 68) jeweils Radiuskontaktflächen (69) für den betätigenden Kontakt mit einem Maul bzw. Ausschnitt (94) eines Schaltmechanismus (14, 16) ausbilden.

11. Betätigungseinrichtung nach einem der vorangehenden Ansprüche, **dadurch gekennzeichnet, dass** die wenigstens eine Oberflächenprofilierung (58) des Schaltelements (30) axial versetzt zum Schaltfinger (28) angeordnet ist

12. Betätigungseinrichtung nach einem der vorangehenden Ansprüche, **dadurch gekennzeichnet, dass** die Oberflächenprofilierungen (58) des Schaltelements (30), die für das Zusammenwirken mit Oberflächenprofilierungen (82) der Auslegeelemente, insbesondere Auslegehebel (36, 38), vorgesehen sind, jeweils Auslegeflanken (48, 50, 52, 54) für das Betätigen der Auslegeelemente (36, 38) und/oder wenigstens einen Sperrbereich, insbesondere Sperrzylinder (56 bzw. 56a, 56b, 56c), aufweisen.

13. Betätigungseinrichtung nach einem der vorangehenden Ansprüche, **dadurch gekennzeichnet, dass** die Oberflächenprofilierungen (82) der Auslegeelemente, insbesondere Auslegehebel (36, 38), jeweils wenigstens eine Sperrflanke (78, 80), vorzugsweise zwei Sperrflanken (78, 80), für das Zusammenwirken mit wenigstens einem Sperrbereich, insbesondere Sperrzylinder (56 bzw. 56a, 56b, 56c), des Schaltelements (30) aufweisen, wobei insbesondere vorgesehen ist, dass mittels des wenigstens einen Sperrbereichs, insbesondere Sperrzylinder (56 bzw. 56a, 56b, 56c), des Schattelements (30) und mittels der Sperrflanken (78, 80) eines Auslegeelements (36, 38), dieses Auslegeelement (36, 38) in einer vorbestimmten Stellung feststellbar ist, und/oder die Oberflächenprofilierungen (82) der Auslegeelemente, insbesondere Auslegehebel (36, 38), Auslegeflanken (70, 72, 74, 76) aufweisen, welche von den Auslegeflanken (48, 50, 52, 54) des Schaltelements (30) zum Bewegen des jeweiligen Auslegeelements (36, 38) zum Auslegen von Gängen des Getriebes (10) belastet werden können.

14. Betätigungseinrichtung, nach einem der vorangehenden Ansprüche, zum Betätigen zweier Teilgetriebe (150, 152), wie Teilgetriebe eines Parallelschaltgetriebes oder Doppelkupplungsgetriebe, **dadurch gekennzeichnet, dass** das Schalten und Auslegen von Gängen von getrennten, jedoch zusammenwirkenden Bauteilen bewirkt wird.

15. Getriebeeinrichtung, insbesondere Kraftfahrzeuggetriebeeinrichtung, mit
- einem Getriebe (10), das wenigstens zwei Wellen aufweist sowie mehrere Zahnradsätze zur Erzielung unterschiedlicher Gangstufen sowie mehrere Schaltmechanismen (14, 16), mittels welchen drehfeste Welle-Zahnrad-Verbindungen erzeugt und gelöst werden können, um Gänge des Getriebes (10) ein- bzw. auszulegen, wozu die Schaltmechanismen (14, 16) jeweils betätigt werden können; und mit
- einer Betätigungseinrichtung (12) zum Betätigen der Schaltmechanismen (14, 16), um das Ein- und Auslegen von Gangstufen des Getriebes (10) zu bewirken,
**dadurch gekennzeichnet, dass**
die Betätigungseinrichtung (12) gemäß einem der vorangehenden Ansprüche gestaltet ist.

16. Getriebeeinrichtung, insbesondere Kraftfahrzeuggetriebeeinrichtung, nach Anspruch 15, mit
- einem Getriebe, das wenigstens zwei Wellen aufweist sowie mehrere Zahnradsätze zur Erzielung unterschiedlicher Gangstufen sowie mehrere Schaltmechanismen (14, 16), mittels welchen drehfeste Welle-Zahnrad-Verbindungen erzeugt und gelöst werden können, um Gänge des Getriebes (10) ein- bzw. auszulegen, wozu die Schaltmechanismen (14, 16) jeweils betätigt werden können; und mit
- einer Betätigungseinrichtung (12) zum Betätigen der Schaltmechanismen (14, 16), um das Ein- und Auslegen von Gangstufen des Getriebes zu bewirken,
wobei die Betätigungseinrichtung aufweist:
- eine Hauptbetätigungseinrichtung (22) mit wenigstens einem Hauptbetätigungselement (26), das in die Endbereiche von Schaltgassen, denen jeweils ein Schaltmechanismus (14, 16) zugeordnet ist, bewegt werden kann, wodurch jeweils auf den der betreffenden Schaltgasse zugeordneten Schaltmechanismus (14, 16) betätigend so eingewirkt wird, das ein dem jeweiligen Endbereich zugeordneter Gang im Getriebe eingelegt wird, wobei das Hauptbetätigungselement (26) nach dem Einlegen eines Gangs aus dem diesem Gang zugeordneten Endbereich in die Schaltgassenmitte der gleichen Schaltgasse bewegt werden kann, ohne dass dadurch der eingelegte Gang wieder ausgelegt wird, und
- wenigstens eine Nebenbetätigungseinrichtung (24) mit wenigstens einem Nebenbetätigungselement (32, 34),
wobei die Hauptbetätigungseinrichtung (22) und die Nebenbetätigungseinrichtung (24) so zusammenwirken, dass während einer Bewegung des Hauptbetätigungselements (26) in einen Endbereich einer Schaltgasse, dem ein Gang zugeordnet ist, wenigstens ein Nebenbetätigungselement (32, 34) auf wenigstens einen Schaltmechanismus (14, 16), der einer anderen Schaltgasse zugeordnet ist, derart einwirkt, dass sichergestellt wird, dass die diesem Schaltmechanismus (14, 16) zugeordneten Gänge ausgelegt sind, bevor mittels des Hauptbetätigungselements (26) ein Gang im Getriebe eingelegt wird, und
wobei das Schalten eines Ganges mittels des Hauptbetätigungselements (26) und das Sicherzustellen, dass Gänge, die wenigstens einem jeweils anderen Schaltmechanismus (14, 16) zugeordnet sind, ausgelegt sind, im Wesentlichen unabhängig von Toleranzen des Getriebes oder der Schaltmechanismen (14, 16) gewährleistet ist.

17. Getriebeeinrichtung, insbesondere Kraftfahrzeuggetriebeeinrichtung, nach einem der Ansprüche 15 und 16, mit
- einem Getriebe, das wenigstens zwei Wellen aufweist sowie mehrere Zahnradsätze zur Erzielung unterschiedlicher Gangstufen sowie mehrere Schaltmechanismen (14, 16), mittels welchen drehfeste Welle-Zahnrad-Verbindungen erzeugt und gelöst werden können, um Gänge des Getriebes ein- bzw. auszulegen, wozu die Schaltmechanismen (14, 16) jeweils betätigt werden können; und mit
- einer Betätigungseinrichtung zum Betätigen der Schaltmechanismen (14, 16), um das Ein- und Auslegen von Gangstufen des Getriebes zu bewirken,
wobei die Betätigungseinrichtung (12) aufweist:
- eine Hauptbetätigungseinrichtung (22) mit wenigstens einem Hauptbetätigungselement (26), das in die Endbereiche von Schaltgassen, denen jeweils ein Schaltmechanismus (14, 16) zugeordnet ist, bewegt werden kann, wodurch jeweils auf den der betreffenden Schaltgasse zugeordneten Schaltmechanismus (14, 16) betätigend so eingewirkt wird, das ein dem jeweiligen Endbereich zugeordneter Gang im Getriebe (10) eingelegt wird, wobei das Hauptbetätigungselement (26) nach dem Einlegen eines Gangs aus dem diesem Gang zugeordneten Endbereich in die Schaltgassenmitte der gleichen Schaltgasse bewegt werden kann, ohne dass dadurch der eingelegte Gang wieder ausgelegt wird, und
- wenigstens eine Nebenbetätigungseinrichtung (24) mit wenigstens einem Nebenbetätigungselement (32, 34),
wobei die Hauptbetätigungseinrichtung (22) und die Nebenbetätigungseinrichtung (24) so zusammenwirken, dass während einer Bewegung des Hauptbetätigungselements (26) in einen Endbereich einer Schaltgasse, dem ein Gang zugeordnet ist, wenigstens ein Nebenbetätigungselement (32, 34) auf wenigstens einen Schaltmechanismus (14, 16), der einer anderen Schaltgasse zugeordnet ist, derart einwirkt, dass sichergestellt wird, dass die diesem Schaltmechanismus (14, 16) zugeordneten Gänge ausgelegt sind bevor mittels des Hauptbetätigungselements (26) ein Gang im Getriebe (10) eingelegt wird,
wobei ferner jeder der Schaltmechanismen (14, 16) ein Bauteil, wie Schaltschiene (18, 20) oder Schaltgabel, aufweist, in welches die Betätigungseinrichtung (12) unmittelbar eingreifen kann, und
wobei das Hauptbetätigungselement (26) und das wenigstens eine Nebenbetätigungselement (32, 34) bezüglich Toleranzen unabhängig von den Bauteilen der Schaltmechanismen (14, 16) ist, in die die Betätigungseinrichtung (12) unmittelbar eingreifen kann bzw. eingreift.

18. Getriebeeinrichtung nach einem der Ansprüche 15 bis 17, **dadurch gekennzeichnet, dass** durch vorbestimmte Bewegungen des Hauptbetätigungselements (26) in Schaltrichtung auf einen jeweiligen Schaltmechanismus (14, 16) derart eingewirkt wird, dass ein vorbestimmter, diesem Schaltmechanismus (14, 16) zugeordneter Gang des Getriebes (10) eingelegt wird, und wobei die Hauptbetätigungseinrichtung (22) und die Nebenbetätigungseinrichtung (24) derart in Wirkverbindung stehen, dass während dieser Bewegung des Hauptbetätigungselements (26) in Schaltrichtung wenigstens ein Nebenbetätigungselement (32, 34) mit wenigstens einem anderen Schaltmechanismus (14, 16) in Wirkverbindung tritt, um Sicherzustellen, dass Gänge, die einem jeweils anderen Schaltmechanismus (14, 16) zugeordnet sind, ausgelegt sind und/oder ausgelegt werden, bevor mittels des Hauptbetätigungselements (26) der Gang eingelegt ist.

19. Getriebeeinrichtung nach einem der Ansprüche 15 bis 18, **dadurch gekennzeichnet, dass** Schaltschienen (18, 20) oder Schaltgabeln vorgesehen sind, die jeweils Bestandteil eines Schaltmechanismus (14,16) sind, und in diesen Schaltschienen (18, 20) jeweils wenigstens ein Ausschnitt oder Maul, wie Schaltmaul oder Auslegemaul, für das Zusammenwirken mit der Betätigungseinrichtung (12) ausgebildet wird.

20. Getriebeeinrichtung nach Anspruch 19, **dadurch gekennzeichnet, dass** jedes Auslegeelement bzw. jeder Auslegefinger (66, 68) der Betätigungseinrichtung (12) im permanenten Eingriff mit einem jeweiligen Ausschnitt (94) bzw. Maul, insbesondere Auslegemaul, steht.

21. Getriebeeinrichtung nach einem der Ansprüche 15 bis 20, **dadurch gekennzeichnet, dass** die Schaltmechanismen (14, 16), insbesondere die Schaltgabeln oder Schaltschienen, ein erstes Maul (94), insbesondere Schaltmaul, für den Eingriff eines Schaltfingers (28) und ein zweites Maul (94), insbesondere Auslegemaul, für den - insbesondere permanenten - Eingriff eines jeweiligen Auslegefingers (66, 68) der Betätigungseinrichtung (12) aufweisen.

22. Getriebeeinrichtung nach einem der Ansprüche 15 bis 21, **dadurch gekennzeichnet, dass** mittels eines Verschwenkens des Schaltelements (30) auf Schaltmechanismen (14, 16) derart eingewirkt werden kann, das ausgehend von einer Neutralstellung ein Gang im Getriebe (10) einlegbar ist, und mittels eines Verschwenkens des Schaltelements (30) der Gang wieder auslegbar ist, wobei im Getriebe (10) die Schaltwege beim Einlegen und beim Auslegen identisch sind und wobei der Schwenkwinkel des Schaltelements (30) beim Schwenken zum Einlegen des Ganges größer ist, als der Schwenkwinkel des Schaltelements (30) beim Schwenken zum Auslegen des Ganges.

23. Getriebeeinrichtung nach Anspruch 22, **dadurch gekennzeichnet, dass** beim Schwenken des Schalthebels (30) zum Einlegen eines Ganges das Auslegen eines anderen Ganges des Getriebes (10) mittels dieser Schwenkbewegung bewirkbar ist.

24. Kraftfahrzeug-Antriebsstrang mit einer Brennkraftmaschine und zumindest einer von der Brennkraftmaschine antreibbaren Antriebsachse zur Aufnahme von Antriebsrädern und mit einem zwischen der Brennkraftmaschine und der Antriebsachse angeordneten Getriebeeinrichtung (1), die gemäß einem der Ansprüche 15 bis 23 gestaltet ist.

## Claims

1. Actuating device for a transmission, in particular motor vehicle transmission, the transmission having:
- at least two shafts;
- a plurality of gearwheel sets for achieving different gear steps; and
- a plurality of shift mechanisms (14, 16) which can be actuated in each case for making or breaking a rotationally fixed shaft/gearwheel connection;
the actuating device having:
- a shift element (30) which is provided with a shift finger (28) and with at least one surface profiling (58), the shift element (30) being pivotable about a pivot axis (88) by means of the shift finger (28) for shifting into gear positions of the transmission (10) and being movable for selection in predetermined pivoting positions in the pivot-axis direction (88), and
- a plurality of deselection levers (36, 38) which are pivotable in each case about a pivot axis (84) spaced apart from the pivot axis (88) of the shift element (30) and are provided in each case with a deselection finger (66, 68) for actuating engagement in each case into a shift mechanism (14, 16) and with a surface profiling (82),
at least one surface profiling (58) of the shift element (30), which surface profiling is arranged so as to be offset to the shift finger (28) in the direction of the pivot axis (88) of the shift element (30) or shift finger (28), being operatively connectable or connected, during predetermined pivoting movements of the shift finger (28), to the surface profiling (82) of at least one deselection finger (66, 68) for deselecting and/or blocking predetermined gears of the transmission (10), **characterized in that** the shift element (30) has, in the axial region in which the shift finger (28) is arranged, a free space (90), into which a deselection lever (36, 38) can pivot, specifically, in particular, during the selection of a gear by means of the shift finger (28).

2. Actuating device according to Claim 1, **characterized in that** a main actuating device (22) with at least one main actuating element (26), which is movable for the selection of gears, has or is a shift element (30) on which the main actuating element (26 or 28) is formed and on which at least one surface profiling (58) for cooperation with at least one surface profiling of a secondary actuating device (24) with at least one movably arranged secondary actuating element (32, 34), which is movable for the deselection of gears, is formed.

3. Actuating device according to one of the preceding claims, **characterized in that** the main actuating element (26) is a shift finger (28) which preferably has an involute shape.

4. Actuating device according to one of the preceding claims, **characterized in that** the at least one surface profiling (58), intended for cooperation with at least one surface profiling (82) of the secondary actuating device (24), of the main actuating device (22) or of the shift element (30) is configured symmetrically and/or the surface profilings (82) of the secondary actuating device (24) are in each case formed symmetrically.

5. Actuating device according to one of the preceding claims, **characterized in that** the shift element (30) and/or the main actuating element (26) or the shift finger (28) and the at least one surface profiling (58), intended for cooperation with at least one surface profiling (82) of the secondary actuating device (24) or of deselection levers (36, 38), of the main actuating device (22) are arranged axially movably and pivotably.

6. Actuating device according to one of the preceding claims, **characterized in that** the secondary actuating device (24) has a plurality of deselection elements (36, 38), in particular deselection levers, which are arranged relatively movably with respect to one another and which are preferably shaped identically.

7. Actuating device according to one of the preceding claims, **characterized in that** the deselection elements (36, 38) have in each case a surface profiling (82) for cooperation with a surface profiling (58) of the main actuating device (22) or of the shift element (30) and/or in each case a deselection finger (66, 68) for respective engagement into a shift mechanism (14, 16) of a transmission (10).

8. Actuating device according to one of the preceding claims, **characterized in that** the deselection elements (36, 38) are in each case arranged pivotably, in particular relatively pivotably, specifically, in particular, about parallel and/or concentric pivot axes (84).

9. Actuating device according to one of the preceding claims, **characterized in that** the deselection elements (36, 38) are arranged in each case substantially fixedly axially with regard to their pivot axis (84).

10. Actuating device according to one of the preceding claims, **characterized in that** the deselection fingers (66, 68) form in each case radius contact faces (69) for actuating contact with a jaw or cutout (94) of a shift mechanism (14, 16).

11. Actuating device according to one of the preceding claims, **characterized in that** the at least one surface profiling (58) of the shift element (30) is arranged so as to be offset axially to the shift finger (28).

12. Actuating device according to one of the preceding claims, **characterized in that** the surface profilings (58) of the shift element (30), which are provided for cooperation with surface profilings (82) of the deselection elements, in particular deselection levers (36, 38), have in each case deselection flanks (48, 50, 52, 54) for actuating the deselection elements (36, 38) and/or at least one blocking region, in particular blocking cylinder (56 or 56a, 56b, 56c).

13. Actuating device according to one of the preceding claims, **characterized in that** the surface profilings (82) of the deselection elements, in particular deselection levers (36, 38), have in each case at least one blocking flank (78, 80), preferably two blocking flanks (78, 80), for the cooperation with at least one blocking region, in particular blocking cylinder (56 or 56a, 56b, 56c), of the shift element (30), there being provision, in particular, whereby, by means of the at least one blocking region, in particular blocking cylinder (56 or 56a, 56b, 56c), of the shift element (30) and by means of the blocking flanks (78, 80) of a deselection element (36, 38), this deselection element (36, 38) can be locked in a predetermined position, and/or the surface profilings (82) of the deselection elements, in particular deselection levers (36, 38), have deselection flanks (70, 72, 74, 76) which can be loaded by the deselection flanks (48, 50, 52, 54) of the shift element (30) for the purpose of moving the respective deselection element (36, 38) for the deselection of gears of the transmission (10).

14. Actuating device according to one of the preceding claims, for actuating two subtransmissions (150, 152), such as the subtransmissions of a parallel-shift transmission or dual-clutch transmission, **characterized in that** the shift and deselection of gears are brought about by separate, but cooperating components.

15. Transmission device, in particular a motor vehicle transmission device, with
- a transmission (10) which has at least two shafts and a plurality of gearwheel sets for achieving different gear steps and also a plurality of shift mechanisms (14, 16), by means of which rotationally fixed shaft/gearwheel connections can be made and broken, in order respectively to select and deselect gears of the transmission (10), for which purpose the shift mechanisms (14, 16) can be actuated in each case; and with
- an actuating device (12) for actuating the shift mechanisms (14, 16) in order to bring about the selection and deselection of gear steps of the transmission (10),
**characterized in that**
the actuating device (12) is configured according to one of the preceding claims.

16. Transmission device, in particular a motor vehicle transmission device, according to Claim 15, with
- a transmission which has at least two shafts and a plurality of gearwheel sets for achieving different gear steps and also a plurality of shift mechanisms (14, 16), by means of which rotationally fixed shaft/gearwheel connections can be made and broken, in order respectively to select and deselect gears of the transmission (10), for which purpose the shift mechanisms (14, 16) can be actuated in each case; and with
- an actuating device (12) for actuating the shift mechanisms (14, 16), in order to bring about the selection and deselection of gear steps of the transmission,
the actuating device having:
- a main actuating device (22) with at least one main actuating element (26) which can be moved into the end regions of shift gate slots to which a shift mechanism (14, 16) is assigned in each case, with the result that actuating action is taken in each case upon the shift mechanism (14, 16) assigned to the respective shift gate slot, such that a transmission gear assigned to the respective end region is selected, the main actuating element (26) being movable, after the selection of a gear, out of the end region assigned to this gear into the shift gate slot centre of the same shift gate slot, without the selected gear thereby being deselected again, and
- at least one secondary actuating device (24) with at least one secondary actuating element (32, 34),
the main actuating device (22) and the secondary actuating device (24) cooperating such that, during movement of the main actuating element (26) into an end region of a shift gate slot, to which end region a gear is assigned, at least one secondary actuating element (32, 34) acts upon at least one shift mechanism (14, 16) which is assigned to another shift gate slot, in such a way as to ensure that the gears assigned to this shift mechanism (14, 16) are deselected before a transmission gear is selected by means of the main actuating element (26), and
the shift of a gear by means of the main actuating element (26) and the ensuring that gears which are assigned in each case to at least one other shift mechanism (14, 16) are deselected being ensured essentially independently of tolerances of the transmission or of the shift mechanisms (14, 16).

17. Transmission device, in particular motor vehicle transmission device, according to one of Claims 15 and 16, with
- a transmission which has at least two shafts and a plurality of gearwheel sets for achieving different gear steps and also a plurality of shift mechanisms (14, 16), by means of which rotationally fixed shaft/gearwheel connections can be made and broken, in order respectively to select and deselect gears of the transmission, for which purpose the shift mechanisms (14, 16) can be actuated in each case; and with
- an actuating device for actuating the shift mechanisms (14, 16), in order to bring about the selection and deselection of gear steps of the transmission,
the actuating device (12) having:
- a main actuating device (22) with at least one main actuating element (26) which can be moved into the end regions of shift gate slots, to which a shift mechanism (14, 16) is assigned in each case, with the result that actuating action is taken in each case upon the shift mechanism (14, 16) assigned to the respective shift gate slot, such that a gear, assigned to the respective end region, in the transmission (10) is selected, the main actuating element (26) being movable, after the selection of a gear, out of the end region assigned to this gear into the shift gate slot centre of the same shift gate slot, without the selected gear thereby being deselected again, and
- at least one secondary actuating device (24) with at least one secondary actuating element (32, 34),
the main actuating device (22) and the secondary actuating device (24) cooperating such that, during movement of the main actuating element (26) into an end region of a shift gate slot, to which end region a gear is assigned, at least one secondary actuating element (32, 34) acts upon at least one shift mechanism (14, 16) which is assigned to another shift gate slot, in such a way as to ensure that the gears assigned to this shift mechanism (14, 16) are deselected before a gear in the transmission (10) is selected by means of the main actuating element (26),
furthermore each of the shift mechanisms (14, 16) having a component, such as a shift rail (18, 20) or shift fork, into which the actuating device (12) can engage directly, and
the main actuating element (26) and the at least one secondary actuating element (32, 34) being in respect of tolerances independent of the components of the shift mechanisms (14, 16) into which the actuating device (12) can engage or engages directly.

18. Transmission device according to one of Claims 15 to 17, **characterized in that**, as a result of predetermined movements of the main actuating element (26) in the shift direction, action is taken upon a respective shift mechanism (14, 16) in such a way that a predetermined gear, assigned to this shift mechanism (14, 16), of the transmission (10) is selected, the main actuating device (22) and the secondary actuating device (24) being operatively connected in such a way that, during this movement of the main actuating element (26) in the shift direction, at least one secondary actuating element (32, 34) is operatively connected to at least one other shift mechanism (14, 16), in order to ensure that gears which are assigned in each case to another shift mechanism (14, 16) are deselected and/or become deselected before the gear is selected by means of the main actuating element (26).

19. Transmission device according to one of Claims 15 to 18, **characterized in that** shift rails (18, 20) or shift forks are provided, which are in each case an integral part of a shift mechanism (14, 16), and at least one cutout or jaw, such as a shift jaw or deselection jaw, for cooperation with the actuating device (12) is formed in each case in these shift rails (18, 20).

20. Transmission device according to Claim 19, **characterized in that** each deselection element or each deselection finger (66, 68) of the actuating device (12) is in permanent engagement with a respective cutout (94) or jaw, in particular deselection jaw.

21. Transmission device according to one of Claims 15 to 20, **characterized in that** the shift mechanisms (14, 16), in particular the shift forks or shift rails, have a first jaw (94), in particular shift jaw, for the engagement of a shift finger (28) and a second jaw (94), in particular deselection jaw, for the, in particular, permanent engagement of a respective deselection finger (66, 68) of the actuating device (12).

22. Transmission device according to one of Claims 15 to 21, **characterized in that**, by means of a pivoting of the shift element (30), action can be taken upon shift mechanisms (14, 16) in such a way that, starting from a neutral position, a gear in the transmission (10) can be selected, and, by means of a pivoting of the shift element (30), the gear can be deselected again, in the transmission (10) the shift travels during selection and during deselection being identical, and the pivot angle of the shift element (30) during pivoting for selecting the gear being larger than the pivot angle of the shift element (30) during pivoting for deselecting the gear.

23. Transmission device according to Claim 22, **characterized in that**, during the pivoting of the shift lever (30) for selecting a gear, the deselection of another gear of the transmission (10) can be brought about by means of this pivoting movement.

24. Motor vehicle drive train with an internal combustion engine and at least one driving axle, drivable by the internal combustion engine, for reception of driving wheels, and with a transmission device (1) which is arranged between the internal combustion engine and the driving axle and which is configured according to one of Claims 15 to 23.

## Revendications

1. Dispositif d'actionnement pour une transmission, en particulier une boîte de vitesses de véhicule automobile, dans lequel la transmission comprend:
- au moins deux arbres;
- plusieurs jeux de roues dentées pour produire différents rapports; et
- plusieurs mécanismes de commutation (14, 16), qui peuvent être actionnés respectivement pour réaliser ou séparer une liaison de rotation arbre-roue dentée;
dans lequel le dispositif d'actionnement présente:
- un élément de commutation (30), qui est doté d'un doigt de commutation (28) et d'au moins un profilage de surface (58), dans lequel l'élément de commutation (30) avec le doigt de commutation (28) peut pivoter autour d'un axe de pivotement (88) pour commuter dans des positions de rapport de la transmission (10) et est mobile dans la direction de l'axe de pivotement (88) pour choisir parmi des positions de pivotement prédéterminées, et
- plusieurs leviers de désengagement (36, 38), qui peuvent pivoter respectivement autour d'un axe de pivotement (84) espacé de l'axe de pivotement (88) de l'élément de commutation (30) et qui sont dotés respectivement d'un doigt de désengagement (66, 68) pour l'engagement d'actionnement dans un mécanisme de commutation respectif (14, 16) ainsi que d'un profilage de surface (82),
dans lequel au moins un profilage de surface (58) de l'élément de commutation (30), qui est disposé en décalage vers le doigt de commutation (28) dans la direction de l'axe de pivotement (88) de l'élément de commutation (30) ou du doigt de commutation (28), peut venir ou vient en liaison active, pendant des mouvements de pivotement prédéterminés du doigt de commutation (28), avec le profilage de surface (82) d'au moins un doigt de désengagement (66, 68) pour libérer et/ou bloquer des rapports prédéterminés de la transmission (10), **caractérisé en ce que** l'élément de commutation (30) présente, dans la région axiale dans laquelle le doigt de commutation (28) est disposé, un espace libre (90), dans lequel un levier de désengagement (36, 38) peut pivoter, notamment en particulier lors de l'engagement d'un rapport au moyen du doigt de commutation (28).

2. Dispositif d'actionnement selon la revendication 1, **caractérisé en ce qu'**un dispositif d'actionnement principal (22) avec au moins un élément d'actionnement principal (26), qui est déplaçable pour l'engagement de rapports, présente ou est un élément de commutation (30), sur lequel l'élément d'actionnement principal (26 ou 28) est formé et sur lequel est formé au moins un profilage de surface (58) destiné à coopérer avec au moins un profilage de surface d'un dispositif d'actionnement secondaire (24) avec au moins un élément d'actionnement secondaire (32, 34) disposé de façon mobile, qui est déplaçable pour le désengagement de rapports.

3. Dispositif d'actionnement selon l'une quelconque des revendications précédentes, **caractérisé en ce que** l'élément d'actionnement principal (26) est un doigt de commutation (28), qui présente de préférence une forme en développante.

4. Dispositif d'actionnement selon l'une quelconque des revendications précédentes, **caractérisé en ce que** ledit au moins un profilage de surface (58) du dispositif d'actionnement principal (22) ou de l'élément de commutation (30), destiné à coopérer avec au moins un profilage de surface (82) du dispositif d'actionnement secondaire (24), est configuré de façon symétrique et/ou les profilages de surface (82) du dispositif d'actionnement secondaire (24) sont réalisés respectivement de façon symétrique.

5. Dispositif d'actionnement selon l'une quelconque des revendications précédentes, **caractérisé en ce que** l'élément de commutation (30) et/ou l'élément d'actionnement principal (26) ou le doigt de commutation (28) et ledit au moins un profilage de surface (58) du dispositif d'actionnement principal (22), destiné à coopérer avec au moins un profilage de surface (82) du dispositif d'actionnement secondaire (24) ou de leviers de désengagement (36, 38), est disposé de façon mobile axialement et pivotante.

6. Dispositif d'actionnement selon l'une quelconque des revendications précédentes, **caractérisé en ce que** le dispositif d'actionnement secondaire (24) présente plusieurs éléments de désengagement (36, 38) disposés de façon mobile l'un par rapport à l'autre, qui sont de préférence de forme identique.

7. Dispositif d'actionnement selon l'une quelconque des revendications précédentes, **caractérisé en ce que** les éléments de désengagement (36, 38) présentent respectivement un profilage de surface (82) destiné à coopérer avec un profilage de surface (58) du dispositif d'actionnement principal (22) ou de l'élément de commutation (30) et/ou respectivement un doigt de désengagement (66, 68) pour l'engagement respectif dans un mécanisme de commutation (14, 16) d'une transmission (10).

8. Dispositif d'actionnement selon l'une quelconque des revendications précédentes, **caractérisé en ce que** les éléments de désengagement (36, 38) sont chaque fois disposés de façon pivotante, en particulier de façon pivotante relativement l'un à l'autre, notamment en particulier autour d'axes de pivotement parallèles et/ou concentriques (84).

9. Dispositif d'actionnement selon l'une quelconque des revendications précédentes, **caractérisé en ce que** les éléments de désengagement (36, 38) sont chaque fois disposés de façon essentiellement fixe axialement par rapport à leur axe de pivotement (84).

10. Dispositif d'actionnement selon l'une quelconque des revendications précédentes, **caractérisé en ce que** les doigts de désengagement (66, 68) forment respectivement des faces de contact circulaires (69) pour le contact d'actionnement avec une ouverture ou une découpe (94) d'un mécanisme de commutation (14, 16).

11. Dispositif d'actionnement selon l'une quelconque des revendications précédentes, **caractérisé en ce que** ledit au moins un profilage de surface (58) de l'élément de commutation (30) est disposé en décalage axial vers le doigt de commutation (28).

12. Dispositif d'actionnement selon l'une quelconque des revendications précédentes, **caractérisé en ce que** les profilages de surface (58) de l'élément de commutation (30), qui sont destinés à coopérer avec des profilages de surface (82) des éléments de désengagement, en particulier de leviers de désengagement (36, 38), présentent respectivement des flancs de désengagement (48, 50, 52, 54) pour l'actionnement des éléments de désengagement (36, 38) et/ou au moins une zone de blocage, en particulier un cylindre de blocage (56, ou 56a, 56b, 56c).

13. Dispositif d'actionnement selon l'une quelconque des revendications précédentes, **caractérisé en ce que** les profilages de surface (82) des éléments de désengagement, en particulier de leviers de désengagement (36, 38), présentent respectivement au moins un flanc de blocage (78, 80), de préférence deux flancs de blocage (78, 80), destinés à coopérer avec au moins une zone de blocage, en particulier un cylindre de blocage (56, ou 56a, 56b, 56c) de l'élément de commutation (30), dans lequel il est en particulier prévu que, au moyen de ladite au moins une zone de blocage, en particulier des cylindres de blocage (56, ou 56a, 56b, 56c) de l'élément de commutation (30) et au moyen des flancs de blocage (78, 80) d'un élément de désengagement (36, 38), cet élément de désengagement (36, 38) puisse être fixé dans une position prédéterminée, et/ou les profilages de surface (82) des éléments de désengagement, en particulier des leviers de désengagement (36, 38), présentent des flancs de désengagement (70, 72, 74, 76), qui peuvent être sollicités par les flancs de désengagement (48, 50, 52, 54) de l'élément de commutation (30) pour déplacer l'élément de désengagement respectif (36, 38) afin de désengager des rapports de la transmission (10).

14. Dispositif d'actionnement selon l'une quelconque des revendications précédentes, destiné à actionner deux transmissions partielles (150, 152), comme des transmissions partielles d'une boîte de vitesses parallèle ou d'un mécanisme de double débrayage, **caractérisé en ce que** la commutation et le désengagement de rapport sont opérés par des pièces séparées, mais qui néanmoins coopèrent.

15. Dispositif de transmission, en particulier dispositif de boîte de vitesses de véhicule automobile, avec
- une transmission (10) qui comprend au moins deux arbres ainsi que plusieurs jeux de roues dentées pour produire différents rapports ainsi que plusieurs mécanismes de commutation (14, 16), au moyen desquels des liaisons de rotation arbre-roue dentée peuvent être réalisées et libérées, afin d'engager ou de désengager des rapports de la transmission (10), pour lesquelles les mécanismes de commutation (14, 16) doivent chaque fois être actionnés; et avec
- un dispositif d'actionnement (12) destiné à actionner les mécanismes de commutation (14, 16), afin d'opérer l'engagement et le désengagement de rapports de la transmission (10);
**caractérisé en ce que**
le dispositif d'actionnement (12) est réalisé selon l'une quelconque des revendications précédentes.

16. Dispositif de transmission, en particulier dispositif de boîte de vitesses de véhicule automobile, selon la revendication 15, avec
- une transmission qui comprend au moins deux arbres ainsi que plusieurs jeux de roues dentées pour produire différents rapports ainsi que plusieurs mécanismes de commutation (14, 16), au moyen desquels des liaisons de rotation arbre-roue dentée peuvent être réalisées et libérées, afin d'engager ou de désengager des rapports de la transmission (10), pour lesquelles les mécanismes de commutation (14, 16) doivent chaque fois être actionnés; et avec
- un dispositif d'actionnement (12) destiné à actionner les mécanismes de commutation (14, 16), afin d'opérer l'engagement et le désengagement de rapports de la transmission,
dans lequel le dispositif d'actionnement présente
- un dispositif d'actionnement principal (22) avec au moins un élément d'actionnement principal (26), qui peut être déplacé dans les régions d'extrémité de chemins de commutation, auxquels un mécanisme de commutation (14, 16) est respectivement associé, opérant ainsi un actionnement respectivement sur le mécanisme de commutation (14, 16) associé au chemin de commutation concerné, de telle manière qu'un rapport associé à la région d'extrémité respective soit engagé dans la transmission, dans lequel l'élément d'actionnement principal (26) peut être déplacé, après l'engagement d'un rapport, depuis la région d'extrémité associée à ce rapport jusqu'au milieu du chemin de commutation du même chemin de commutation, sans que le rapport engagé soit ainsi de nouveau désengagé, et
- au moins un dispositif d'actionnement secondaire (24) avec au moins un élément d'actionnement secondaire (32, 34),
dans lequel le dispositif d'actionnement principal (22) et le dispositif d'actionnement secondaire (24) coopèrent de telle manière que, pendant un déplacement de l'élément d'actionnement principal (26) dans une région d'extrémité d'un chemin de commutation, auquel un rapport est associé, au moins un élément d'actionnement secondaire (32, 34) agisse sur au moins un mécanisme de commutation (14, 16), qui est associé à un autre chemin de commutation, de telle manière que l'on assure que les rapports associés à ce mécanisme de commutation (14, 16) soient désengagés, avant qu'un rapport soit engagé dans la transmission au moyen de l'élément d'actionnement principal (26), dans lequel la commutation d'un rapport au moyen de l'élément d'actionnement principal (26) et l'assurance que des rapports, qui sont associés au moins à un autre mécanisme de commutation (14, 16), sont désengagés, est garantie essentiellement indépendamment de tolérances de la transmission ou des mécanismes de commutation (14, 16).

17. Dispositif de transmission, en particulier dispositif de boîte de vitesses de véhicule automobile, selon l'une des revendications 15 et 16, avec
- une transmission qui comprend au moins deux arbres ainsi que plusieurs jeux de roues dentées pour produire différents rapports ainsi que plusieurs mécanismes de commutation (14, 16), au moyen desquels des liaisons de rotation arbre-roue dentée peuvent être réalisées et libérées, afin d'engager ou de désengager des rapports de la transmission, pour lesquelles les mécanismes de commutation (14, 16) doivent chaque fois être actionnés; et avec
- un dispositif d'actionnement destiné à actionner les mécanismes de commutation (14, 16), afin d'opérer l'engagement et le désengagement de rapports de la transmission,
dans lequel le dispositif d'actionnement (12) présente
- un dispositif d'actionnement principal (22) avec au moins un élément d'actionnement principal (26), qui peut être déplacé dans les régions d'extrémité de chemins de commutation, auxquels un mécanisme de commutation (14, 16) est respectivement associé, opérant ainsi un actionnement respectivement sur le mécanisme de commutation (14, 16) associé au chemin de commutation concerné, de telle manière qu'un rapport associé à la région d'extrémité respective soit engagé dans la transmission (10), dans lequel l'élément d'actionnement principal (26) peut être déplacé, après l'engagement d'un rapport, depuis la région d'extrémité associée à ce rapport jusqu'au milieu du chemin de commutation du même chemin de commutation, sans que le rapport engagé soit ainsi de nouveau désengagé, et
- au moins un dispositif d'actionnement secondaire (24) avec au moins un élément d'actionnement secondaire (32, 34),
dans lequel le dispositif d'actionnement principal (22) et le dispositif d'actionnement secondaire (24) coopèrent de telle manière que, pendant un déplacement de l'élément d'actionnement principal (26) dans une région d'extrémité d'un chemin de commutation, auquel un rapport est associé, au moins un élément d'actionnement secondaire (32, 34) agisse sur au moins un mécanisme de commutation (14, 16), qui est associé à un autre chemin de commutation, de telle manière que l'on assure que les rapports associés à ce mécanisme de commutation (14, 16) soient désengagés, avant qu'un rapport soit engagé dans la transmission (10) au moyen de l'élément d'actionnement principal (26),
dans lequel en outre chacun des mécanismes de commutation (14, 16) présente un composant, tel qu'un rail de commutation (18, 20) ou une fourchette de commutation, dans lequel le dispositif d'actionnement (12) peut s'engager immédiatement, et
dans lequel l'élément d'actionnement principal (26) et ledit au moins un élément d'actionnement secondaire (32, 34) est indépendant, en ce qui concerne les tolérances, des composants des mécanismes de commutation (14, 16) dans lesquels le dispositif d'actionnement (12) peut s'engager ou s'engage immédiatement.

18. Dispositif de transmission selon l'une quelconque des revendications 15 à 17, **caractérisé en ce que**, par des déplacements prédéterminés de l'élément d'actionnement principal (26) dans la direction de commutation, on agit sur un mécanisme de commutation respectif (14, 16) de telle manière qu'un rapport prédéterminé de la transmission (10), associé à ce mécanisme de commutation (14, 16) soit engagé, et dans lequel le dispositif d'actionnement principal (22) et le dispositif d'actionnement secondaire (24) se trouvent en liaison active, de telle manière que, pendant ce déplacement du dispositif d'actionnement principal (26) dans la direction de commutation, au moins un élément d'actionnement secondaire (32, 34) vienne en liaison active avec au moins un autre mécanisme de commutation (14, 16), afin d'assurer que des rapports, qui sont associés respectivement à un autre mécanisme de commutation (14, 16), sont désengagés et/ou se désengagent, avant que le rapport soit engagé au moyen de l'élément d'actionnement principal (26).

19. Dispositif de transmission selon l'une quelconque des revendications 15 à 18, **caractérisé en ce qu'**il est prévu des rails de commutation (18, 20) ou des fourchettes de commutation, qui font respectivement partie d'un mécanisme de commutation (14, 16), et au moins une découpe ou une ouverture est respectivement formée, comme ouverture de commutation ou ouverture de désengagement, dans des rails de commutation (18, 20) en vue de la coopération avec le dispositif d'actionnement (12).

20. Dispositif de transmission selon la revendication 19, **caractérisé en ce que** chaque élément de désengagement ou chaque doigt de désengagement (66, 68) du dispositif d'actionnement (12) est en prise permanente avec une découpe (94) ou une ouverture respective, en particulier une ouverture de désengagement.

21. Dispositif de transmission selon l'une quelconque des revendications 15 à 20, **caractérisé en ce que** les mécanismes de commutation (14, 16), en particulier les fourchettes de commutation ou les rails de commutation, présentent une première ouverture (94), en particulier une ouverture de commutation, pour l'engagement d'un doigt de commutation (28), et une deuxième ouverture (94), en particulier une ouverture de désengagement, pour l'engagement - en particulier permanent - d'un doigt de désengagement respectif (66, 68) du dispositif d'actionnement (12).

22. Dispositif de transmission selon l'une quelconque des revendications 15 à 21, **caractérisé en ce que**, au moyen d'un pivotement de l'élément de commutation (30), il est possible d'agir sur des mécanismes de commutation (14, 16) de telle manière qu'un rapport puisse être engagé dans la transmission (10) en partant d'une position neutre, et que le rapport puisse de nouveau être désengagé au moyen d'un pivotement de l'élément de commutation (30), dans lequel les chemins de commutation sont identiques lors de l'engagement et du désengagement dans la transmission (10), et dans lequel l'angle de pivotement de l'élément de commutation (30) lors du pivotement pour l'engagement du rapport est plus grand que l'angle de pivotement de l'élément de commutation (30) lors du pivotement pour le désengagement du rapport.

23. Dispositif de transmission selon la revendication 22, **caractérisé en ce que**, lors du pivotement du levier de commutation (30) pour engager un rapport, on peut opérer le désengagement d'un autre rapport de la transmission (10) au moyen de ce mouvement de pivotement.

24. Ligne d'entraînement de véhicule automobile avec un moteur à combustion interne et au moins un essieu moteur pouvant être entraîné par le moteur à combustion interne et destiné à recevoir des roues motrices et avec un dispositif de transmission (1) disposé entre le moteur à combustion interne et l'essieu moteur, qui est réalisé selon l'une quelconque des revendications 15 à 23.
